# EUROPEAN PATENT APPLICATION

(11) **EP 2 063 571 A1**
(43) Date of publication of application: **27.05.2009**
(21) Application number: 07807169.3
(22) Date of filing: 12.09.2007
(51) Int. Cl.: H04L 12/28, H04B 7/26

(54) **COMMUNICATION DEVICE**

(30) Priority: 13.09.2006 JP 2006247714; 27.12.2006 JP 2006350904; 27.03.2007 JP 2007082749
(71) Applicant: Panasonic Corporation, Kadoma-shi Osaka 571-8501 (JP)
(72) Inventor: GOTOH, Yukie c/o Panasonic Corp. IPROC, 2-chome, Chuo-ku, Osaka-shi, Osaka 540-6207 (JP); YOKOTA, Hiroshi c/o Panasonic Corp., IPROC, 2-chome, Chuo-ku, Osaka-shi, Osaka 540-6207 (JP); TSUJI, Atsuhiro c/o Panasonic Corp., IPROC, 2chome, Chuo-ku, Osaka-shi, Osaka 540-6207 (JP); TAKAGAKI, Keiichi c/o Panasonic Corp., IPROC, 2-chome, Chuo-ku, Osaka-shi, Osaka 540-6207 (JP); MATSUSHITA, Yosuke c/o Panasonic Corp., IPROC, 2-chome, Chuo-ku, Osaka-shi, Osaka 540-6207 (JP); OSUKA, Kyosuke c/o Panasonic Corp., IPROC, 2-chome, Chuo-ku, Osaka-shi, Osaka 540-6207 (JP)
(74) Representative: Pautex Schneider, Nicole Véronique
(86) International application number: PCT/JP2007/067762
(87) International publication number: WO 2008/032750

(57) **Abstract**

To provide a communication apparatus for achieving further improvements in communication quality and power saving effect, without depending on network environments. A portable terminal (211) as a communication apparatus includes: a communication I/F unit (108) performing data transmission/reception with a transmitter apparatus (203) on a communication protocol having flow control such as TCP; a power control unit (106) switching power on and off to the communication I/F unit (108); and a suppression/resumption control unit (104) determining cycle interval Tc and cycle data size Dc according to communication quality required by a communication application program and, per cycle interval Tc, causing data of cycle data size Dc to be transmitted in a burst state, suppressing data transmission from the transmitter apparatus (203), and causing the power control unit (106) to power off the communication I/F unit (108) while the data transmission is suppressed (T2 to T3), using the flow control mechanism.

## Description

### Technical Field

The present invention relates to a communication apparatus, and especially relates to a communication apparatus and communication system for power saving and to a power saving method.

### Background Art

Internet Protocol (IP) networks centered on the Internet are rapidly expanding in recent years. That is, IP networks have not only achieved widespread use in personal computers (PCs), but also begun to be widely used in stationary household appliances such as televisions and digital versatile disk (DVD) players as well as in portable terminals such as mobile phones, personal digital assistants (PDAs), and digital cameras. Such an apparatus that can be connected to a network such as the Internet is referred to as a communication apparatus.

Services using IP networks include download/upload of music data or video data, transmission/reception of streaming data such as audio, and so on, which may require communication over a long period of time. This creates a situation where power consumption for using an IP network cannot be ignored. A network connection device for using an IP network especially requires a large amount of power, among devices constituting a communication apparatus.

Network connection devices include a device that uses an IP network wiredly and a device that uses an IP network wirelessly. Power saving techniques for reducing power consumption are being studied for various apparatuses, regardless of whether they are wireless or wired. Among these, portable terminals are particularly in need of power saving techniques, as portable terminals are expected to be used for long hours with only an internal battery. In view of this, an example of a power saving technique in a portable terminal is described below.

Increasing attention has been given to a wireless local area network (LAN) device for use as a network connection device of a portable terminal. Since a wireless LAN device consumes a relatively large amount of power, saving its power is an important issue, and many power saving methods have been proposed.

IEEE 802.11, which is a set of standards for wireless LANs, defines a mode of power management (power save mode) as a method of saving power of a wireless terminal. According to this method, in the case of operating in the power save mode, the wireless terminal performs a receiving operation at a timing when a beacon is transmitted from a wireless base station (access point), and enters a state of not performing a receiving operation (doze mode) while a beacon is not transmitted. In the doze mode, the wireless terminal stops power supplied to a wireless LAN device included in the wireless terminal. Thus, power consumption of the wireless terminal can be reduced.

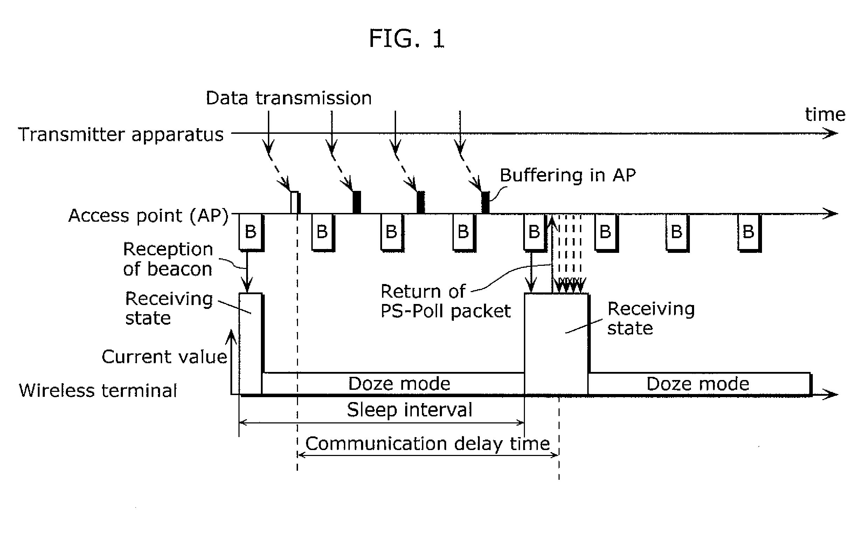

FIG. 1 is an explanatory view for explaining an operation of a wireless terminal in the power save mode.

The wireless terminal receives data transmitted from a transmitter apparatus, via an access point (AP). Here, each time one beacon (signal transmitted at a timing of "B" in FIG. 1) is transmitted from the access point or each time a plurality of beacons are transmitted from the access point, the wireless terminal enters a receiving state (state where the wireless terminal is powered on) and receives a beacon. A fixed time interval at which the wireless terminal receives a beacon is hereafter referred to as a "sleep interval". The sleep interval is set or changed by the wireless terminal depending on, for example, a connection sequence between the wireless terminal and the access point.

As shown in FIG. 1, packets transmitted to the wireless terminal during the doze mode are temporarily buffered in the access point. The next time the wireless terminal receives a beacon, the wireless terminal is notified that the packets to the wireless terminal have been arrived, and accordingly transmits a Power Save Poll (PS-Poll) packet to the access point. Upon receiving the PS-Poll packet, the access point transmits the packets to the wireless terminal all at once. In this way, the packets transmitted during the doze mode can be properly received by the wireless terminal.

However, this method has a problem of difficulty in attaining both a power saving effect and communication quality (delay time or bandwidth). For example, when the sleep interval is set longer than the data transmission interval of the transmitter apparatus as shown in FIG. 1, a large communication delay occurs. In this case, there is even a possibility that a communication delay as long as the sleep interval occurs at the maximum. On the other hand, when the sleep interval is set shorter than necessary, unnecessary polling arises, which causes a reduction in power saving effect. Basically, an appropriate sleep interval differs depending on a communication situation of a network and a requirement (e.g., delay time and bandwidth constraints) of a communication application program. Nevertheless, this method uses a fixed sleep interval, and so cannot attain an adequate power saving effect and communication quality according to circumstance.

To solve the above problem, a method of attaining both the communication quality and the power saving effect by setting and changing the sleep interval according to a communication data bandwidth used by a communication application program has conventionally been proposed (for example, see Patent Reference 1).

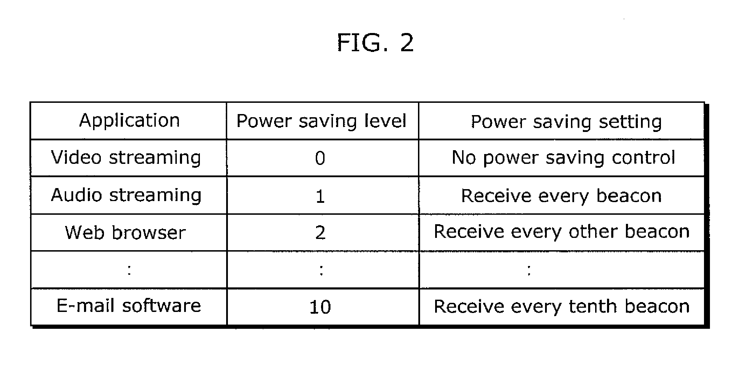

FIG. 2 is an explanatory view for explaining an operation of a wireless terminal in Patent Reference 1.

The wireless terminal in Patent Reference 1 stores a power saving setting list shown in FIG. 2. A sleep interval (power saving setting) is set in the power saving setting list.

In detail, the power saving setting list registers each communication application program executed by the wireless terminal, a power saving level from 0 to 10 corresponding to a data rate required by the communication application program, and a sleep interval (power saving setting) corresponding to the power saving level.

For instance, the power saving setting "receive every beacon" and the power saving level "1" are registered for a communication application program of audio streaming that requires a relatively high data rate. The power saving setting "receive every other beacon" and the power saving level "2" are registered for a communication application program of a web browser that requires a slightly lower data rate than the communication application program of audio streaming. Meanwhile, the power saving setting "receive every tenth beacon" and the power saving level "10" are registered for a communication application program of electronic mail (e-mail software) that does not require a high data rate. Furthermore, the power saving setting "no power saving control (no doze mode)" and the power saving level "0" are registered for a communication application program of video streaming that requires an extremely high data rate.

When starting or ending a communication application program, the wireless terminal searches the power saving setting list for a communication application program having a lowest power saving level among communication application programs that are currently running. The wireless terminal changes the power saving setting (sleep interval) according to the power saving level of the communication application program found as a result of the search, and transmits power saving setting change notification to an access point.

Thus, the wireless terminal (communication apparatus) in Patent Reference 1 can reduce power consumption while performing communication with an appropriate delay time and bandwidth, by changing the interval of receiving a beacon (sleep interval) depending on the communication application program property.
Patent Reference 1: Japanese Unexamined Patent Application Publication No. 2004-187002

### Disclosure of Invention

### Problems that Invention is to Solve

However, even the above communication apparatus of Patent Reference 1 has a problem of being unable to sufficiently attain both the communication quality and the power saving effect.

Which is to say, the conventional method described in Patent Reference 1 is intended for operations on a wireless LAN power saving method, and therefore encounters problems specific to wireless LANs. In more detail, there are a first problem of limitation of applicable networks, a second problem of being unable to achieve both power saving control and real-time communication, and a third problem of occurrence of a failure to acquire data at an access point.

The first problem is described first. The communication apparatus in Patent Reference 1 operates in conjunction with an access point that has a power saving function defined in IEEE 802.11. Depending on access points, however, the power saving function of IEEE 802.11 is not supported or, even when supported, is set to OFF by default. In such an environment, even when the portable terminal (communication apparatus) has the power saving function described in Patent Reference 1, the power saving of the portable terminal is impossible. For the same reason, in the case where the portable terminal (communication apparatus) performs communication using a network device other than IEEE 802.11 (for example, wired communication or wireless communication other than IEEE 802.11), the power saving method of Patent Reference 1 cannot be applied. Thus, the conventional method described in Patent Reference 1 has a limiting condition for applicable networks, and the power saving cannot be performed depending on the type of the network device and the implementation status of the other communication apparatus.

The second problem is described next. Though the communication apparatus in Patent Reference 1 changes the sleep interval, it merely changes the multiplying factor of the beacon transmission interval for the sleep interval, and cannot freely change the beacon transmission interval itself. Therefore, data reception by the communication apparatus in Patent Reference 1 is conducted at the timing of beacon transmission, as in the case of the power saving method of IEEE 802.11. Hence the communication apparatus in Patent Reference 1 cannot sufficiently meet requirements of a delay time and a bandwidth necessary for real-time communication.

The following describes the second problem by separating it between a problem of a long delay time and a problem of a low communication bandwidth.

The problem of a long delay time in the second problem is described first. In Patent Reference 1, the sleep interval cannot be set shorter than the beacon transmission interval. Accordingly, in the case of a communication application program that transmits/receives data at short time intervals such as Voice over Internet Protocol (VoIP), power saving control can cause a long delay time. Especially when the beacon transmission interval of the access point is long, an increase in delay time leads to a drop in audio quality.

Moreover, even when the beacon transmission interval is short, the delay time may increase in the case where a plurality of wireless terminals (communication apparatuses) are connected to one access point. In detail, when a communication application program that requires real-time performance is running on a plurality of wireless terminals (communication apparatuses), PS-Poll (packet for requesting data transmission to a wireless terminal) is simultaneously transmitted from the plurality of wireless terminals at every beacon transmission. In this case, on the basis of a backoff algorithm for transmission defined in IEEE 802.11 (algorithm of waiting a random amount of time after a wireless terminal enters a transmissible state until actual data transmission becomes possible, before transmitting data), one or more wireless terminals other than a specific wireless terminal may transmit data earlier than the specific wireless terminal. When this happens, the specific wireless terminal needs to wait for data transmission, until the wireless terminal which started data transmission earlier completes the transmission. This increases a possibility of a longer wait time. Such an increase in delay time is problematic in a communication application program having a delay time limitation such as VoIP. Furthermore, after receiving a beacon, the wireless terminal cannot return to the doze state until it completes actual data reception. This means the wireless terminal remains powered on needlessly during the wait time when no actual data transmission/reception is conducted, which causes a reduction in power saving effect.

The problem of a low communication bandwidth in the second problem is described next. Performing the power saving of Patent Reference 1 under a condition that the beacon transmission interval is long causes a low communication bandwidth in the Transmission Control Protocol (TCP). This is because a size of data that can be received at one time is limited to a size of a receive buffer of TCP on the receiver (wireless terminal) side, due to a mechanism of flow control of TCP which will be described later. To perform data reception with a high bandwidth, it is necessary to either prepare a large receive buffer so as to increase the size of data that can be received at one time, or shorten the interval of data reception (i.e., the sleep interval).

In the case where the beacon transmission interval is long, a huge receive buffer needs to be provided in order to perform high-bandwidth communication, because the sleep interval cannot be made shorter than the beacon transmission interval. For example, even if the wireless terminal includes a TCP receive buffer of 64 [Kbyte], a maximum throughput is limited to about 2.6 [Mbps] when the beacon transmission interval is 200 [msec].

As described above, in the power saving control and communication apparatus of Patent Reference 1, it is necessary to perform data reception at the timing of beacon transmission, which can cause the problems such as an increase in delay time and a drop in bandwidth. The only way to ensure the delay time and the bandwidth is to select the power saving setting of not entering the doze mode (not performing power saving control). Thus, it is impossible to sufficiently achieve both real-time communication and power saving control.

The third problem is described next.

In the method described in Patent Reference 1, the access point buffers packets to the wireless terminal (communication apparatus) in the doze mode, in the same way as in the power saving method of IEEE 802.11. However, data transmission/reception between the transmitter apparatus and the portable terminal (communication apparatus) is not always performed at a fixed rate, and the amount of data buffered in the access point varies due to a processing delay in the communication apparatus, jitter in the network, and the like. This being so, when a larger amount of data than expected arrives in a burst state, there is a possibility that the access point cannot buffer completely and fails to acquire some data.

The present invention has been conceived in view of the above problems, and has an object of providing a communication apparatus that can achieve further improvements in both communication quality and power saving effect.

### Means to Solve the Problems

To accomplish the stated object, a communication apparatus according to the present invention is a communication apparatus that communicates with an other-party communication apparatus, the communication apparatus including: a communication unit that performs transmission/reception of data with the other-party communication apparatus; a power switching unit that switches a state of power supplied to the communication unit, between a supply state where power necessary for the transmission/reception is supplied and a non-supply state where power necessary for the transmission/reception is not supplied; a suppression unit that suppresses data (e.g., ACK packet or TCP data packet) transmission from the other-party communication apparatus; and a switching control unit that causes the power switching unit to switch the state of power to the supply state when the data transmission is not suppressed by the suppression unit, and causes the power switching unit to switch the state of power to the non-supply state when the data transmission is suppressed by the suppression unit. For example, the communication apparatus further includes a communication control unit that repeatedly causes the communication unit to transmit transmission request data including a receive window so that data equal to or smaller than the receive window is transmitted from the other-party communication apparatus, and the communication unit to receive the data, the receive window representing a data size, wherein the suppression unit suppresses the data transmission from the other-party communication apparatus, by stopping the transmission of normal transmission request data from the communication unit, the normal transmission request data being the transmission request data that includes the receive window indicating a value larger than 0. Moreover, the suppression unit further resumes the data transmission from the other-party communication apparatus, by removing the stopping of the transmission of the normal transmission request data.

According to this, the data transmission from the other-party communication apparatus is suppressed at an arbitrary timing by the suppression unit, and the power supplied to the communication unit is reduced during this time. Thus, the communication apparatus can save power by actively suppressing the data transmission at an appropriate timing that does not affect the communication quality, irrespective of the other-party communication apparatus, that is, without any constraint of applicable network conditions. As a result, further improvements in both communication quality and power saving effect can be achieved.

In other words, the communication apparatus according to the present invention performs power saving control using a method that is not dependent on wireless LANs defined in IEEE 802.11, and therefore does not need coordination with an access point and does not depend on a wireless LAN network environment. Accordingly, the power saving control can also be performed in wired communication or in wireless communication other than IEEE 802.11.

In addition, when applied to a wireless LAN environment defined in IEEE 802.11, the present invention has the following two advantages in comparison with the conventional technique of Patent Reference 1.

First, in the present invention, data reception does not need to be performed at the timing of beacon transmission from an access point, and can be performed at an appropriate timing for a delay time and bandwidth required by a communication application program. Therefore, while performing real-time communication, that is, while satisfying requirements of a delay time and bandwidth necessary for real-time communication, at the same time the power saving control can be carried out.

Second, in the present invention, instead of buffering data received in the doze mode at an access point as in the conventional method, the state where there is no data transmission from a transmitter apparatus (other-party communication apparatus) is created in a period during which the communication apparatus is powered off. This being so, even when some kind of jitter occurs in processing of the transmitter apparatus or on a network, the problem of a data overflow at the access point does not arise.

Moreover, the communication control unit may, when the data is received by the communication unit, cause the communication unit to transmit an acknowledgment packet for notifying the receipt of the data, as the transmission request data, wherein the suppression unit: suppresses the data transmission from the other-party communication apparatus by stopping the communication unit from transmitting the acknowledgment packet that includes the receive window indicating a value larger than 0, the acknowledgment packet that includes the receive window indicating a value larger than 0 being to be transmitted as the normal transmission request data when the data is received by the communication unit; and resumes the data transmission from the other-party communication apparatus by causing the communication control unit to generate and transmit the acknowledgment packet that includes the receive window indicating a value larger than 0. For example, the communication control unit causes the communication unit to transmit the acknowledgment packet and receive data transmitted from the other-party communication apparatus in response to the acknowledgment packet, in accordance with the Transmission Control Protocol (TCP).

According to this, further improvements in both communication quality and power saving effect can be achieved in communication of TCP that uses a mechanism of flow control.

Moreover, the suppression unit may further cause the communication unit to transmit transmission request data that indicates 0 as the receive window, in a period during which the data transmission from the other-party communication apparatus is suppressed.

For instance, there is a possibility that, when unable to receive the transmission request data that indicates 0 as the receive window within a predetermined time period, the other-party communication apparatus judges that the previously transmitted data is not received by the communication apparatus, retransmits the data, and then decreases a size of data that is transmissible in response to transmission request data. In the present invention, however, the transmission request data that indicates 0 as the receive window is transmitted to the other-party communication apparatus, so that the decrease of the size of transmissible data in the other-party communication apparatus can be prevented while also suppressing data transmission from the other-party communication apparatus.

Moreover, the communication apparatus may further include a determination unit that determines a cycle time and a cycle data size, wherein the communication control unit causes the communication unit to transmit the transmission request data that indicates the cycle data size determined by the determination unit as the receive window, and sets a timing of transmitting the transmission request data as a cycle start point, and the suppression unit: sets a point at which the cycle time determined by the determination unit elapses from the transmission of the transmission request data from the communication unit, as a cycle end point; stops, during a period from when the data of the cycle data size is received by the communication unit to the cycle end point, the transmission of the normal transmission request data from the communication unit; and sets the cycle end point as the cycle start point of a next cycle, and repeats a process from the cycle start point to the cycle end point for each cycle of the cycle time. For example, the determination unit determines the cycle time and the cycle data size, according to required performance of communication between the communication apparatus and the other-party communication apparatus.

According to this, intermittent data transmission/reception can be carried out by performing, within the cycle time (cycle interval), one cycle that includes transmitting the transmission request data, receiving data of the cycle data size in response to the transmission request data, and stopping the transmission of the transmission request data, and further repeating this cycle. In addition, such intermittent data transmission/reception can be performed in a state of, for example, meeting conditions (performance) such as a communication bandwidth and delay time required by a communication application program executed in the communication apparatus. Consequently, it is possible to satisfy the above communication bandwidth and delay time requirements even when the transmission of the next transmission request data is stopped until the cycle end point.

Moreover, the switching control unit may: cause the power switching unit to switch the state of power from the supply state to the non-supply state, after the data of the cycle data size is transmitted from the other-party communication apparatus and received by the communication unit; and cause the power switching unit to switch the state of power from the non-supply state to the supply state, by the cycle end point.

According to this, the power consumption of the communication unit can be reliably reduced in one cycle of intermittent data transmission/reception.

Moreover, the other-party communication apparatus may, when detecting that the data transmitted from the other-party communication apparatus is lost and is not received by the communication unit, decrease a transmit window that represents a size of data transmissible in response to the transmission request data, wherein the suppression unit: judges whether or not a size of data transmitted from the other-party communication apparatus and received by the communication unit in response to the transmission request data transmitted from the communication unit is smaller than the cycle data size indicated by the transmission request data; and performs window control of making the receive window equal to or smaller than the transmit window, when judging that the size of data received by the communication unit is smaller than the cycle data size. For example, the suppression unit judges whether identification numbers of sets of data transmitted from the other-party communication apparatus and sequentially received by the communication unit in response to the transmission request data transmitted from the communication unit are consecutive or inconsecutive. When judging that the identification numbers are inconsecutive, the suppression unit judges that the size of data received by the communication unit is smaller than the cycle data size indicated by the transmission request data. As an alternative, the suppression unit judges whether or not a total size of sets of data transmitted from the other-party communication apparatus and sequentially received by the communication unit in response to the transmission request data transmitted from the communication unit reaches the cycle data size indicated by the transmission request data within a predetermined time period. When judging that the total size does not reach the cycle data size, the suppression unit judges that the size of data received by the communication unit is smaller than the cycle data size indicated by the transmission request data.

When the other-party communication apparatus detects that data is lost and is not received by the communication unit, namely, when the other-party communication apparatus detects a packet loss, the other-party communication apparatus decreases a transmit window (congestion window), which can cause the receive window (cycle data size) indicated by the received transmission request data to become larger than the transmit window. In this case, even when transmitting the transmission request data, the communication unit in the communication apparatus cannot receive data of the receive window (cycle data size) indicated by the transmission request data, and only receives data of the transmit window. If such a situation continues, the switching control unit in the communication apparatus cannot switch the state of power supplied to the communication unit to the non-supply state, and therefore cannot perform power saving.

In view of this, in the present invention, when the size of data received by the communication unit is smaller than the cycle data size, such window control that makes the receive window equal to or smaller than the transmit window is conducted by, for example, decreasing the receive window or recovering the transmit window to no smaller than the cycle data size. Accordingly, even when a packet loss occurs, the relation "(receive window) ≤ (transmit window)" can be maintained to perform intermittent data transmission/reception mentioned above, with it being possible to achieve power saving.

Moreover, the suppression unit may, when judging that the size of data received by the communication unit is smaller than the cycle data size, perform the window control of making the receive window indicated by the transmission request data subsequently transmitted from the communication unit, smaller than the cycle data size.

According to this, even when a packet loss occurs, the relation "(receive window) ≤ (transmit window)" can be reliably maintained to perform intermittent data transmission/reception, with it being possible to achieve power saving.

Moreover, the other-party communication apparatus may increase the decreased transmit window by repeatedly receiving the transmission request data from the communication unit and transmitting data to the communication unit in response to the transmission request data, wherein the suppression unit increases the receive window indicated by the transmission request data transmitted from the communication unit, with the increase of the transmit window.

According to this, even when the transmit window and the receive window are decreased due to a packet loss or the like, the transmit window and the receive window are each increased to the original value, thereby recovering a communication state prior to the occurrence of the packet loss.

Moreover, the suppression unit may, while the transmission request data indicating the receive window smaller than the cycle data size is repeatedly transmitted from the communication unit, shorten the cycle time determined by the determination unit, set a point at which the shortened cycle time elapses from the transmission of the transmission request data from the communication unit as a cycle end point, and stop the transmission of the normal transmission request data from the communication unit during a period from when data of the receive window is received by the communication unit to the cycle end point.

According to this, even when the receive window becomes smaller than the cycle data size, the cycle time is shortened, so that the amount of data transmitted from the other-party communication apparatus and received by the communication unit per unit time can be maintained constant, that is, a constant throughput can be maintained.

Moreover, the other-party communication apparatus may increase the decreased transmit window, by repeatedly receiving the transmission request data from the communication unit and transmitting data to the communication unit in response to the transmission request data, wherein the suppression unit performs the window control of removing the stopping of the transmission of the normal transmission request data, during a window recovery period from when the transmit window becomes smaller than the cycle data size to when the transmit window becomes equal to or larger than the cycle data size.

According to this, the transmit window which is decreased due to a packet loss or the like can be recovered to the original value.

Moreover, the communication control unit may, when data is received by the communication unit, cause the communication unit to transmit, as the transmission request data, an acknowledgment packet for notifying the other-party communication apparatus of the receipt of the data by the communication unit through notification of an identification number of data to be received next, wherein in the window recovery period the acknowledgment packet is divided into a plurality of acknowledgment packets having different identification numbers and transmitted from the communication unit.

According to this, the number of times of data transmission/reception in which the communication apparatus transmits an acknowledgment packet to the other-party communication apparatus and the other-party communication apparatus transmits data to the communication apparatus in response to the acknowledgment packet can be increased by the number of acknowledgment packets as a result of division. Consequently, the decreased transmit window in the other-party communication apparatus can be quickly recovered to the original value.

Moreover, the switching control unit may: cause the power switching unit to switch the state of power from the supply state to the non-supply state, after the transmission request data is transmitted from the communication unit; and cause the power switching unit to switch the state of power from the non-supply state to the supply state, before the data is received by the communication unit in response to the transmission request data. For example, the switching control unit causes the power switching unit to switch the state of power from the non-supply state to the supply state, after a predetermined time period elapses from the transmission of the transmission request data from the communication unit. Alternatively, the communication apparatus further includes an estimation unit that estimates a response time from when the transmission request data is transmitted from the communication unit to when data is transmitted from the other-party communication apparatus and received by the communication unit in response to the transmission request data, and the switching control unit causes the power switching unit to switch the state of power from the non-supply state to the supply state before the response time elapses from the transmission of the transmission request data from the communication apparatus.

According to this, the communication apparatus can reduce the power consumption of the communication unit during a period from the transmission of the transmission request data to the reception of the data, too. In this way, the power saving can be further improved without a loss of communication quality.

Moreover, the communication unit may relay communication between the other-party communication apparatus and a communication terminal.

According to this, for example in the case of relaying data communication performed between a conventional communication terminal and the other-party communication apparatus according to TCP, the power consumption of the communication unit can be reduced, and further improvements in both communication quality and power saving effect can be achieved.

Moreover, the communication apparatus may further include a communication control unit that repeatedly causes the communication unit to transmit transmission data so that an acknowledgment packet is transmitted from the other-party communication apparatus, and the communication unit to receive the acknowledgment packet, wherein the suppression unit suppresses the transmission of the acknowledgment packet from the other-party communication apparatus, by stopping the transmission of the transmission data from the communication unit. Here, the suppression unit further resumes the transmission of the acknowledgment packet from the other-party communication apparatus, by removing the stopping of the transmission of the transmission data.

According to this, in the case where the communication apparatus according to the present invention transmits the transmission data to the other-party communication apparatus, the transmission of the acknowledgment packet from the other-party communication apparatus is suppressed at an arbitrary timing by the suppression unit, and the power supplied to the communication unit is reduced during this time. Thus, the communication apparatus can save power by actively suppressing the data transmission at an appropriate timing that does not affect the communication quality, irrespective of the other-party communication apparatus, that is, without any constraint of applicable network conditions. As a result, further improvements in both communication quality and power saving effect can be achieved.

Moreover, the communication apparatus may further include a determination unit that determines a cycle time and a cycle data size, wherein the communication control unit causes the communication unit to transmit the transmission data of the cycle data size determined by the determination unit, and sets a timing of transmitting the transmission data as a cycle start point, and the suppression unit: sets a point at which the cycle time determined by the determination unit elapses from the transmission of the transmission data from the communication unit, as a cycle end point; stops, during a period from when the acknowledgment packet is received by the communication unit in response to the transmission data to the cycle end point, the transmission of the transmission data from the communication unit; and sets the cycle end point as the cycle start point of a next cycle, and repeats a process from the cycle start point to the cycle end point for each cycle of the cycle time.

According to this, intermittent data transmission/reception can be carried out by performing, within the cycle time (cycle interval), one cycle that includes transmitting the transmission data, receiving the acknowledgment packet in response to the transmission data, and stopping the transmission of the transmission data, and further repeating this cycle. In addition, such intermittent data transmission/reception can be performed in a state of, for example, meeting conditions (performance) such as a communication bandwidth and delay time required by a communication application program executed in the communication apparatus. Consequently, it is possible to satisfy the above communication bandwidth and delay time requirements even when the transmission of the next transmission data is stopped until the cycle end point.

Moreover, the communication unit may perform transmission/reception of data with each of the other-party communication apparatus and an other other-party communication apparatus in parallel, wherein the determination unit, when the communication unit repeatedly performs transmission/reception with the other other-party communication apparatus at a regular time interval, determines the cycle time according to the regular time interval so that the reception of the data from the other-party communication apparatus is synchronous with the transmission/reception with the other other-party communication apparatus. For example, the determination apparatus may, when the communication unit repeatedly receives data at a fixed rate from the other other-party communication apparatus at the regular time interval, determine the cycle time according to the regular time interval by using the regular time interval as a reference.

According to this, by setting the cycle time equal to the above regular time interval as an example, the period during which the suppression unit suppresses the data transmission from the other-party communication apparatus can be made synchronous with the period during which no data is received from the other other-party communication apparatus. In other words, the communication apparatus can synchronize the communication with the other-party communication apparatus and the communication with the other other-party communication apparatus. By turning off the power supplied to the communication unit during this period, the communication apparatus can improve the power saving effect while communicating with each of the other-party communication apparatus and the other other-party communication apparatus.

Moreover, the communication unit may perform transmission/reception of data with each of the other-party communication apparatus and an other other-party communication apparatus in parallel, wherein the suppression unit, when the communication unit repeatedly receives data at a fixed rate from the other other-party communication apparatus at a regular time interval, stops and removes the stopping of the transmission of the normal transmission request data from the communication unit so that a timing at which the data from the other-party communication apparatus is received by the communication unit matches a timing at which the data from the other other-party communication apparatus is received by the communication unit.

According to this, even when the cycle time is not equal to the regular time interval as mentioned above, the period during which the suppression unit suppresses the data transmission from the other-party communication apparatus can be made synchronous with the period during which no data is received from the other other-party communication apparatus, because the timing at which the communication unit receives data from the other-party communication apparatus matches the timing at which the communication unit receives data from the other other-party communication apparatus. As a result, by turning off the power supplied to the communication unit during this period, the communication apparatus can improve the power saving effect while communicating with each of the other-party communication apparatus and the other other-party communication apparatus.

Moreover, the suppression unit may include an intermittent reception notification unit that notifies the communication control unit that the above control of suppressing the data transmission is performed, wherein the communication control unit, upon receiving the notification from the intermittent reception notification unit, sets information indicating the notification in a packet transmitted from the communication unit.

Moreover, the communication control unit may cause the communication unit to transmit the transmission data and receive the acknowledgment packet transmitted from the other-party communication apparatus in response to the transmission data, according to the Transmission Control Protocol (TCP).

Moreover, the switching control unit may cause the power switching unit to switch the state of power from the supply state to the non-supply state after the acknowledgment packet is transmitted from the other-party communication apparatus and received by the communication unit, and cause the power switching unit to switch the state of power from the non-supply state to the supply state by the cycle end point.

Moreover, the switching control unit may cause the power switching unit to switch the state of power from the supply state to the non-supply state after the transmission data is transmitted from the communication unit, and cause the power switching unit to switch the state of power from the non-supply state to the supply state before at least one acknowledgment packet in response to the transmission data is received by the communication unit.

Moreover, the communication control unit may include a data holding unit that temporarily holds the transmission data, wherein when the acknowledgment packet is not received by the communication unit within a predetermined time period after the transmission of the transmission data, the communication control unit causes the communication unit to retransmit the transmitted transmission data held in the data holding unit as first transmission data in the next cycle.

Moreover, the communication control unit may, when the suppression unit judges that the acknowledgment packet does not arrive at the communication unit after the transmission data of the cycle data size is transmitted, cause the communication unit to retransmit the transmitted transmission data until the acknowledgment packet arrives.

Moreover, the suppression unit may request the communication control unit to divide the transmission data of the cycle data size by an integral multiple of the number of delayed response avoidance packets that is the number of packets of the transmission data necessary for receiving the acknowledgment packet, wherein the communication control unit divides the data of the cycle data size by the integral multiple of the number of delayed response avoidance packets according to the request, and causes the communication unit to transmit the divided data.

Moreover, the communication apparatus may further include an intermittent processing unit that repeatedly starts and stops a process at a regular time interval, wherein the intermittent processing unit synchronizes the time interval of starting and stopping the process by the intermittent processing unit, with the cycle time.

Moreover, the communication apparatus may further include an intermittent processing unit that repeatedly starts and stops a process at a regular time interval, wherein the intermittent processing unit synchronizes a start point of the process by the intermittent processing unit with the cycle start point.

Moreover, the suppression unit may, when judging that the size of data received by the communication unit is smaller than the expected size, remove the stopping of the transmission of the normal transmission request data.

Moreover, the suppression unit may, when judging that the size of data received by the communication unit is smaller than the expected size, make the receive window of the transmission request data subsequently transmitted from the communication unit smaller than the cycle data size, and make the receive window of the transmission request data more subsequently transmitted from the communication unit larger than the receive window of the subsequently transmitted transmission request data.

Moreover, the suppression unit may, when judging that the size of data received by the communication unit is smaller than the expected size, shorten the cycle time determined by the determination unit, set a point at which the shortened cycle time elapses from the transmission of the transmission request data from the communication unit as a cycle end point, and stop the transmission of the normal transmission request data from the communication unit during a period from when data of the receive window is received by the communication unit to the cycle end point.

It should be noted that the present invention can be realized not only as the above communication apparatus, but also as a communication system including the communication apparatus, a communication method for communication by the communication apparatus, a power saving method for reducing power consumption of the communication apparatus, a program for operating the communication apparatus, a recording medium on which the program is stored, and an integrated circuit.

### Effects of the Invention

The communication apparatus according to the present invention has an effect of achieving further improvements in both communication quality and power saving effect. Moreover, the communication apparatus according to the present invention has power saving control that utilizes a mechanism of flow control, and is effective in such a case where a reduction in power consumption of a portable communication apparatus (typically a wireless terminal) is desired (for example, when receiving data from another communication apparatus via a network over a long period of time) while performing real-time communication. Furthermore, the communication apparatus according to the present invention is not limited to wireless LANs but is also applicable to various network environments such as wired communication and communication using other wireless devices. In addition, the communication apparatus according to the present invention can prevent the problem of the conventional wireless LAN power saving method, namely, a loss of data caused by a buffer overflow at an access point.

### Brief Description of Drawings

FIG. 1 is an explanatory view for explaining an operation of a conventional communication apparatus.
FIG. 2 is an explanatory view for explaining an operation of another conventional communication apparatus.
FIG. 3 is a block diagram showing an example of a communication system including a communication apparatus in a first embodiment of the present invention.
FIG. 4 is a sequence diagram showing an example of a basic process of a portable terminal which is a receiver apparatus and a transmitter apparatus in the first embodiment of the present invention.
FIG. 5 is a block diagram showing a specific structure of the portable terminal in the first embodiment of the present invention.
FIG. 6A shows a performance parameter management table managed by an application requirement obtainment unit in the first embodiment of the present invention.
FIG. 6B shows another performance parameter management table managed by the application requirement obtainment unit in the first embodiment of the present invention.
FIG. 6C shows another performance parameter management table managed by the application requirement obtainment unit in the first embodiment of the present invention.
FIG. 7 shows intermittent reception parameter determination rules in the first embodiment of the present invention.
FIG. 8 shows an example of an intermittent reception parameter management table generated by a parameter determination unit in the first embodiment of the present invention.
FIG. 9 is a sequence diagram showing an operation of the portable terminal and the transmitter apparatus in a steady state in the first embodiment of the present invention.
FIG. 10 is a flowchart showing an operation of the portable terminal in the first embodiment of the present invention.
FIG. 11 is a sequence diagram showing an operation of transmitting an ACK packet of "receive window (RWIN) = 0" in the first embodiment of the present invention.
FIG. 12 is a block diagram showing a specific structure of a portable terminal in a second embodiment of the present invention.
FIG. 13 is a sequence diagram showing a power saving method of the portable terminal and a transmitter apparatus in the second embodiment of the present invention.
FIG. 14 is a block diagram showing a specific structure of a portable terminal in a third embodiment of the present invention.
FIG. 15 is a flowchart showing an operation of the portable terminal in the third embodiment of the present invention.
FIG. 16 is an explanatory view for explaining a packet loss detection process in the third embodiment of the present invention in detail.
FIG. 17 is an explanatory view for explaining a retransmission induction process in the third embodiment of the present invention in detail.
FIG. 18 is an explanatory view for explaining a CWIN estimation process in the third embodiment of the present invention in detail.
FIG. 19 is a flowchart showing a process in a CWIN decrease period in the third embodiment of the present invention in detail.
FIG. 20 shows one cycle of intermittent reception performed in the CWIN decrease period in the third embodiment of the present invention.
FIG. 21 is a block diagram showing an example of a communication system including a communication apparatus in a fourth embodiment of the present invention.
FIG. 22 is a block diagram showing a specific structure of a portable terminal in the fourth embodiment of the present invention.
FIG. 23 is a sequence diagram showing an operation of a receiver apparatus, the portable terminal, and a transmitter apparatus in a steady state in the fourth embodiment of the present invention.
FIG. 24 is a block diagram showing an example of a communication system including a communication apparatus in a fifth embodiment of the present invention.
FIG. 25 is a block diagram showing a specific structure of a portable terminal which is a transmitter apparatus in the fifth embodiment of the present invention.
FIG. 26 is a sequence diagram showing an operation of the portable terminal and a receiver apparatus in a steady state in the fifth embodiment of the present invention.
FIG. 27 is a flowchart showing an operation of the portable terminal in the fifth embodiment of the present invention.
FIG. 28 is a sequence diagram showing an operation of the portable terminal and the receiver apparatus in the steady state in the case of powering off during an RTT, in the fifth embodiment of the present invention.
FIG. 29 is a block diagram showing an example of a communication system including a communication apparatus in a sixth embodiment of the present invention.
FIG. 30 is a block diagram showing a specific structure of a portable terminal in the sixth embodiment of the present invention.
FIG. 31A shows a UDP-related performance parameter management table managed by an application requirement obtainment unit in the sixth embodiment of the present invention.
FIG. 31B shows another UDP-related performance parameter management table managed by the application requirement obtainment unit in the sixth embodiment of the present invention.
FIG. 32A shows a TCP-related performance parameter management table managed by the application requirement obtainment unit in the sixth embodiment of the present invention.
FIG. 32B shows another TCP-related performance parameter management table managed by the application requirement obtainment unit in the sixth embodiment of the present invention.
FIG. 33 is a sequence diagram showing an operation in a steady state in communication between the portable terminal, a transmitter apparatus that performs communication using UDP, and a transmitter apparatus that performs communication using TCP in the case where a transmission interval and a cycle interval are synchronous with each other, in the sixth embodiment of the present invention.
FIG. 34 is a flowchart showing an operation of synchronizing data transmission/reception by a suppression/resumption control unit in the case where the cycle interval and the transmission interval are different from each other.
FIG. 35 is a sequence diagram showing an operation in the steady state in communication between the portable terminal, the transmitter apparatus that performs communication using UDP, and the transmitter apparatus that performs communication using TCP in the case where the transmission interval and the cycle interval are not synchronous with each other, in the sixth embodiment of the present invention.
FIG. 36 is a sequence diagram showing an operation in the steady state in communication between the portable terminal, a receiver apparatus that performs communication using TCP, and the transmitter apparatus that performs communication using TCP, in the sixth embodiment of the present invention.
FIG. 37 is a block diagram showing an example of a communication system including a communication apparatus in a seventh embodiment of the present invention.
FIG. 38 is a block diagram showing a specific structure of a portable wireless apparatus in the seventh embodiment of the present invention.
FIG. 39 is a sequence diagram showing an operation of the portable wireless apparatus and a portable terminal in a steady state in the seventh embodiment of the present invention.

### Numerical References

- 101: Communication application unit
- 102: Application requirement obtainment unit
- 103: Parameter determination unit
- 104: Suppression/resumption control unit
- 106: Power control unit
- 107: Communication control unit
- 108: Communication I/F unit
- 202: Wireless base station
- 203: Transmitter apparatus
- 204: Internet (WAN)
- 211, 212: Portable terminal (communication apparatus)

### Best Mode for Carrying Out the Invention

### (First Embodiment)

The following describes a communication apparatus in a first embodiment of the present invention, with reference to drawings.

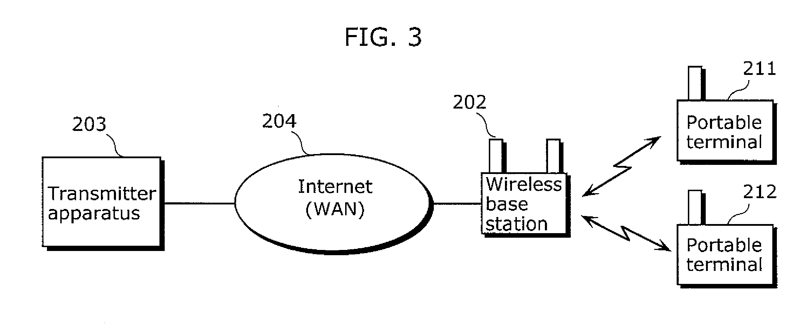

FIG. 3 is a block diagram showing an example of a communication system including the communication apparatus in this embodiment.

The communication system to which this embodiment relates includes portable terminals 211 and 212 which are communication apparatuses, a wireless base station 202, the Internet 204, and a transmitter apparatus 203.

Each of the portable terminals 211 and 212 is a communication apparatus for achieving further improvements in both communication quality and power saving effect, and is configured as a wireless terminal including a wireless communication device. The portable terminals 211 and 212 are connected to the Internet 204 via the wireless base station 202.

The transmitter apparatus 203 is a communication apparatus connected to the Internet 204. The transmitter apparatus 203 has a function of receiving a connection from another apparatus and transmitting content data and the like to that apparatus.

In such a communication system, the portable terminals 211 and 212 connect to the transmitter apparatus 203 via the Internet 204, and receive data from the transmitter apparatus 203. A protocol having flow control such as the Transmission Control Protocol (TCP) is used for data transmission/reception between the portable terminal 211 and the transmitter apparatus 203.

Note that the portable terminals 211 and 212 shown in FIG. 3 have a same structure and perform a same operation, and so the portable terminal 211 is described in detail below for the sake of simplicity. The following describes the portable terminal 211 as a receiver apparatus.

The portable terminal 211 in this embodiment utilizes flow control. Flow control is a type of control in which a receiver apparatus instructs a transmitter apparatus to stop and resume data transmission in order to avoid a situation where the data reception process of the receiver apparatus cannot keep up with the data transmission. This control is employed in various communication protocols as a process for preventing a data overflow in the receiver apparatus.

A mechanism of flow control in TCP is described below. In the TCP-level flow control, the receiver apparatus notifies the transmitter apparatus of a receive window (typically equivalent to a free space of a TCP receive buffer in the receiver apparatus) so that the transmitter apparatus does not transmit data exceeding the receive window. In detail, the receive window is stored in a "window size" field of a TCP header, and notified using an ACK packet (acknowledgment packet) from the receiver apparatus to the transmitter apparatus. The transmitter apparatus monitors the ACK packet, specifies an upper limit to a transmissible data size from a relation between a size of already transmitted data and the receive window notified using the ACK packet, and suppresses transmission exceeding the upper limit. The TCP header also includes fields for a sequence number (number indicating a position of transmitted data in an entire stream) and an ACK number (sequence number of data to be received next), and the receiver apparatus uses the ACK number of the ACK packet to notify the transmitter apparatus up to which data the receiver apparatus has received.

On the other hand, when the situation where the receiver apparatus does not update the receive window (i.e., the receiver apparatus cannot return an ACK packet) continues as in the case where the process of the receiver apparatus falls behind, the transmissible data size of the transmitter apparatus decreases. When the transmissible data size eventually becomes 0, no more data transmission from the transmitter apparatus is possible. Which is to say, in such a state the transmitter apparatus cannot perform transmission unless the transmitter apparatus receives an ACK packet indicating new data reception or is notified of a larger receive window. After this, once the receiver apparatus has entered a data receivable state, the receiver apparatus newly transmits an ACK packet to the transmitter apparatus to notify a new receive window, as a result of which the transmitter apparatus resumes data transmission.

In the present invention, this flow control mechanism is used not for the purpose of avoiding a data overflow (due to slow performance of the receiver apparatus or the like) but for the purpose of the receiver apparatus actively causing the transmitter apparatus to execute intermittent data transmission.

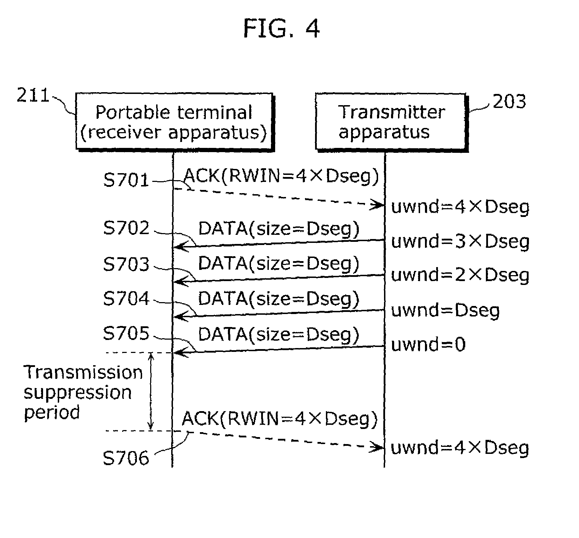

FIG. 4 is a sequence diagram showing an example of a basic process of the portable terminal 211 which is a receiver apparatus and the transmitter apparatus 203.

The portable terminal 211 (corresponding to the aforementioned receiver apparatus) and the transmitter apparatus 203 perform data transmission/reception using TCP.

First, the portable terminal 211 determines an upper limit to a size of data transmitted from the transmitter apparatus 203 in a burst state, and notifies the transmitter apparatus 203 of the upper limit as a receive window (Step S701). For example, when a size of data transmitted from the transmitter apparatus 203 in one packet is Dseg [byte], the portable terminal 211 determines the upper limit to the size of data transmitted from the transmitter apparatus 203 to be equivalent to 4 packets (= 4 x Dseg [byte]). The portable terminal 211 transmits an ACK packet which sets the receive window (hereafter referred to as "RWIN") to "4 x Dseg", to the transmitter apparatus 203.

The transmitter apparatus 203 recognizes that the transmissible data size (hereafter referred to as "uwnd") is 4 x Dseg [byte] as a result of receiving the ACK packet of "RWIN = 4 x Dseg [byte]", and is thereby allowed to resume data transmission. Note that, before the reception of the ACK packet, the transmitter apparatus 203 recognized the transmissible data size as uwnd = 0 and stopped data transmission.

Next, the transmitter apparatus 203 performs transmission of a packet of Dseg [byte] four times, and decreases uwnd by Dseg [byte] at each transmission (Steps S702 to S705).

The portable terminal 211 receives the data (packets) transmitted from the transmitter apparatus 203 in Steps S702 to S705. Here, the portable terminal 211 performs control of not returning an ACK packet. As a result, uwnd becomes 0 when the fourth packet is transmitted (Step S705), and accordingly the transmitter apparatus 203 stops data transmission. In this way, the portable terminal 211 can create a "period during which the transmitter apparatus cannot transmit data". This period during which the transmitter apparatus cannot transmit data is hereafter referred to as a "transmission suppression period". Subsequently, the portable terminal 211 instructs the transmitter apparatus 203 to resume data transmission, by transmitting an ACK packet of "RWIN = 4 × Dseg" at a desired timing (Step S706).

By repeating the above data transmission suppression and resumption instructions through the use of the flow control mechanism, the portable terminal 211 performs intermittent data reception (intermittent reception) at an interval desired by the portable terminal 211. The portable terminal 211 powers off a communication I/F unit included in the portable terminal 211 during the transmission suppression period between reception processes, and powers on the communication I/F unit only during a period when transmission/reception of data or an ACK packet is actually performed. In this way, the portable terminal 211 carries out power saving.

Note that this embodiment describes the case where the power saving control is performed by intermittently powering off and on the communication I/F unit, but it is not necessarily required to completely turn the power off. The power may be adjusted in a state of being supplied to the communication I/F unit. That is, the portable terminal 211 reduces the power supplied to the communication I/F unit below a level (hereafter referred to as "normal power") that is required for a normal operation of a transmission/reception function of the communication I/F unit during a period when data transmission/reception by the communication I/F unit is unnecessary, and returns the power supplied to the communication I/F unit to the normal power during a period when the data transmission/reception is necessary. In other words, the power saving control in the present invention can be any control that changes the power consumption of the communication I/F unit to a state lower than the normal power. For instance, in the case where a low power consumption mode is defined in the portable terminal 211, the portable terminal 211 shifts to the low power consumption mode instead of powering off the communication I/F unit. Alternatively, the portable terminal 211 stops power (current) supply to the communication I/F unit, or stops clock supply to the communication I/F unit. To return the power consumption to the normal power, the portable terminal 211 performs a corresponding reverse operation such as turning the power on, increasing the power supply, or starting the clock supply.

As described above, in the present invention, the portable terminal (receiver apparatus) 211 actively creates a period during which there is no data reception and turns the power off during that period for saving power, by using the flow control mechanism. Such power saving control is conducted in the receiver apparatus alone, and does not require coordination with an access point as in the case of the wireless LAN power saving method. Accordingly, the power saving control can be performed without depending on a network environment.

Moreover, in the present invention, the data reception timing need not be in conjunction with the beacon transmission timing at the access point and can be freely controlled in the receiver apparatus. Therefore, by adjusting a data reception interval and a data size so as to ensure a delay time and a bandwidth required by a communication application program, while continuing desired communication, power saving can be achieved at the same time.

Furthermore, in the present invention, the transmitter apparatus performs data transmission with a receivable data size and timing for the receiver apparatus, with there being no need to buffer data in the access point. Hence a data overflow in the access point can be avoided.

The following describes the portable terminal 211 in this embodiment in more detail.

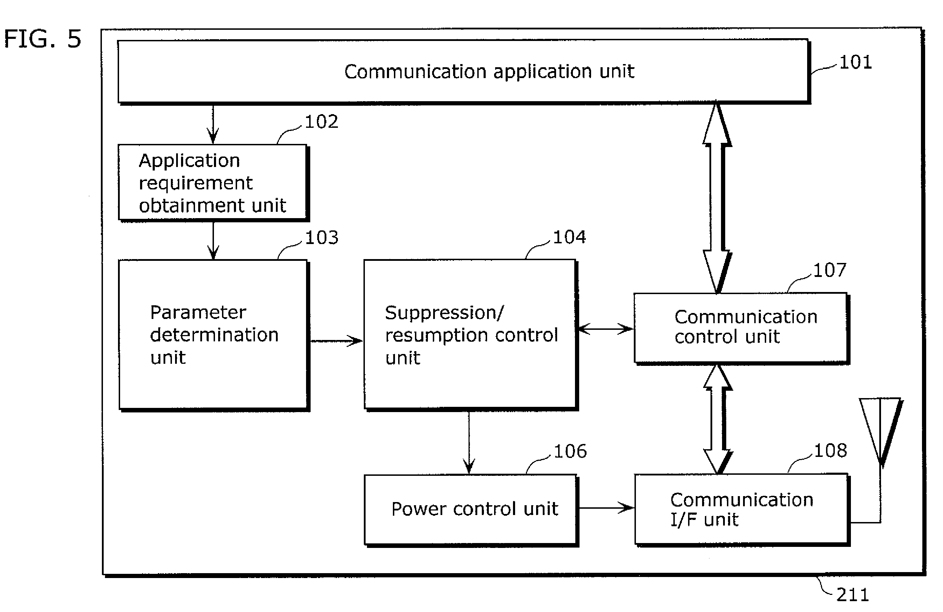

FIG. 5 is a block diagram showing a specific structure of the portable terminal 211.

The portable terminal 211 includes a communication application unit 101, an application requirement obtainment unit 102, a parameter determination unit 103, a suppression/resumption control unit 104, a power control unit 106, a communication control unit 107, and a communication I/F unit 108 mentioned earlier.

Note that, in this embodiment, the communication I/F unit 108 is configured as a communication unit, the power control unit 106 is configured as a power switching unit, and the suppression/resumption control unit 104 is configured as a suppression unit and a switching control unit.

The communication application unit 101 executes a communication application program. When starting the communication application program, the communication application unit 101 issues start notification to the application requirement obtainment unit 102, and performs data transmission/reception with the transmitter apparatus 203. When ending the communication application program, the communication application unit 101 issues end notification to the application requirement obtainment unit 102. Note that the number of communication application programs simultaneously running on the portable terminal 211 is limited to one in this embodiment for ease of explanation.

The application requirement obtainment unit 102 obtains a "performance parameter" of data communication between the communication application unit 101 and the transmitter apparatus 203. The "performance parameter" referred to here is a parameter that shows a condition (performance requirement) such as a bandwidth, a delay time, and a packet size to be transmitted at one time, which are uniquely determined by the communication application program. When receiving the start notification or the end notification from the communication application unit 101, the application requirement obtainment unit 102 simultaneously obtains the performance parameter from the communication application unit 101, and issues performance parameter registration notification or performance parameter deletion notification to the parameter determination unit 103.

The parameter determination unit 103 determines parameters for intermittent data reception. There are two parameters for intermittent data reception, namely, a time interval of one cycle of intermittent reception and a size of data to be received in one cycle. Hereafter the former parameter is referred to as a "cycle interval" and the latter parameter as a "cycle data size". These two parameters are also collectively referred to as "intermittent reception parameters". Upon receiving the performance parameter registration notification or the performance parameter deletion notification from the application requirement obtainment unit 102, the parameter determination unit 103 determines the intermittent reception parameters on the basis of the performance parameter notified from the application requirement obtainment unit 102, and issues intermittent reception parameter registration notification or intermittent reception parameter deletion notification to the suppression/resumption control unit 104.

The suppression/resumption control unit 104 controls the communication control unit 107 so that data transmission from the transmitter apparatus 203 is performed intermittently, by using the flow control mechanism of TCP. The suppression/resumption control unit 104 also instructs the power control unit 106 to power off the communication I/F unit 108 in a transmission suppression period (period during which there is no data transmission from the transmitter apparatus 203) that is created through this TCP flow control.

In more detail, the suppression/resumption control unit 104 determines a timing of suppressing or resuming data transmission from the transmitter apparatus 203, according to the intermittent reception parameters received in the intermittent reception parameter registration notification. The suppression/resumption control unit 104 issues three requests (described later) relating to an ACK packet to the communication control unit 107, to suppress or resume data transmission from the transmitter apparatus 203 at the determined timing. The suppression/resumption control unit 104 also issues a power on request or a power off request to the power control unit 106 in conjunction with the transmission suppression period. The suppression/resumption control unit 104 further monitors TCP packets transmitted/received by the communication control unit 107, and uses a monitoring result for the above timing determination.

The power control unit 106 powers on or off the communication I/F unit 108 according to the power on request or the power off request from the suppression/resumption control unit 104.

The communication control unit 107 performs control for transmitting data from the communication application unit 101 via the communication I/F unit 108, and also performs control for passing data received by the communication I/F unit 108 to the communication application unit 101. Such control includes a protocol process of the Transmission Control Protocol / Inter-next Protocol (TCP/IP) or the like, a process of negotiation with the wireless base station 202, and the like. TCP packets transmitted/received by the communication control unit 107 are monitored by the suppression/resumption control unit 104. In addition to normal TCP processing, the communication control unit 107 changes a transmission timing and packet contents of an ACK packet when requested by the suppression/resumption control unit 104. In detail, the communication control unit 107 receives an ACK normal transmission suppression request, an ACK normal transmission resumption request, and an ACK single transmission request from the suppression/resumption control unit 104, and responds to these requests.

The ACK normal transmission suppression request is a request to suppress normal ACK packet transmission. Upon receiving this request, the communication control unit 107 stops transmitting an ACK packet in conjunction with TCP data reception.

The ACK normal transmission resumption request is a request to cancel the ACK normal transmission suppression request. Upon receiving this request, the communication control unit 107 resumes normal TCP processing (transmission of an ACK packet in conjunction with TCP data reception).

The ACK single transmission request is a request to transmit an ACK packet whose contents are designated by the suppression/resumption control unit 104, at a timing designated by the suppression/resumption control unit 104. Upon receiving this request, the communication control unit 107 transmits an ACK packet of the designated contents at the designated timing, irrespective of the TCP data reception timing. Note that this request is valid (transmissible) even in a state where the ACK normal transmission suppression request is received.

The communication I/F unit 108 performs a process of wirelessly transmitting data received from the communication control unit 107. The communication I/F unit 108 also performs a process of passing data received from the wireless base station 202 to the communication control unit 107. The communication I/F unit 108 is powered on and off by the power control unit 106.

The following describes an operation of each component from when the portable terminal 211 starts communication from an initial state to when the portable terminal 211 ends the communication.

In the initial state, the communication I/F unit 108 in the portable terminal 211 is powered off, and the communication application unit 101 does not execute any communication application program.

The communication application unit 101 starts a communication application program, and issues start notification to the application requirement obtainment unit 102. By the issuance of the start notification, the communication application unit 101 passes a plurality of performance parameters of the communication application program to the application requirement obtainment unit 102. Upon receiving the plurality of performance parameters, the application requirement obtainment unit 102 retains the plurality of performance parameters together in a performance parameter management table.

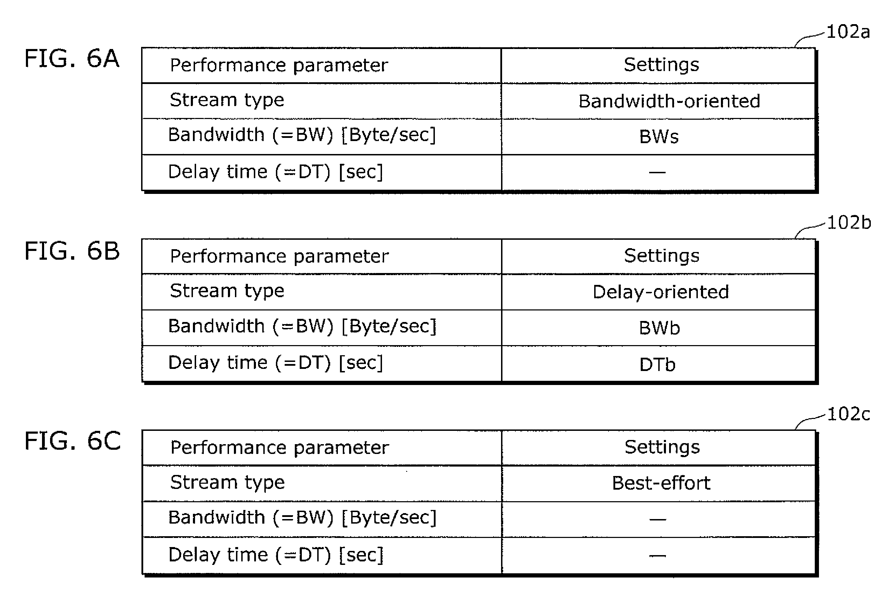

FIGS. 6A, 6B, and 6C each show a performance parameter management table managed by the application requirement obtainment unit 102.

For example, the application requirement obtainment unit 102 manages one of three performance parameter management tables 102a, 102b, and 102c shown in FIGS. 6A, 6B, and 6C.

Each of the performance parameter management tables 102a, 102b, and 102c includes a plurality of performance parameters corresponding to a started communication application program. The plurality of performance parameters are parameters for a stream type, a bandwidth, and a delay time. There are three stream types, namely, a bandwidth-oriented type, a delay-oriented type, and a best-effort type.

When executing a communication application program for downloading a large file at a fixed rate over a long period of time, the communication application unit 101 passes a plurality of performance parameters including the stream type "bandwidth-oriented" to the application requirement obtainment unit 102. As a result, the application requirement obtainment unit 102 holds and manages the performance parameter management table 102a of the stream type "bandwidth-oriented" shown in FIG. 6A.

For instance, this performance parameter management table 102a includes the stream type "bandwidth-oriented" and a bandwidth "BW = BWs [Byte/sec]", as shown in FIG. 6A.

When executing a communication application program having a strict requirement regarding a data delay time such as VoIP, the communication application unit 101 passes a plurality of performance parameters including the stream type "delay-oriented" to the application requirement obtainment unit 102. As a result, the application requirement obtainment unit 102 holds and manages the performance parameter management table 102b of the stream type "delay-oriented" shown in FIG. 6B.

For instance, this performance parameter management table 102b includes the stream type "delay-oriented", a bandwidth "BW = BWb [Byte/sec]", and a delay time "DT = DTb [sec]", as shown in FIG. 6B.

When executing a communication application program for downloading a large file as fast as possible with no specific requirements regarding a delay time and a bandwidth, the communication application unit 101 passes a plurality of performance parameters including the stream type "best-effort" to the application requirement obtainment unit 102. As a result, the application requirement obtainment unit 102 holds and manages the performance parameter management table 102c of the stream type "best-effort" shown in FIG. 6C.

For instance, this performance parameter management table 102c includes only the stream type "best-effort" as a performance parameter, as shown in FIG. 6C.

When receiving start notification from the communication application unit 101, the application requirement obtainment unit 102 generates one of the performance parameter management tables 102a, 102b, and 102c on the basis of performance parameter information included in the start notification. The application requirement obtainment unit 102 then issues performance parameter registration notification including the generated performance parameter management table, to the parameter determination unit 103. When receiving end notification from the communication application unit 101, the application requirement obtainment unit 102 deletes the generated performance parameter management table.

Upon receiving the performance parameter registration notification, the parameter determination unit 103 reads the performance parameter management table, and determines intermittent reception parameters on the basis of the performance parameter management table.

Basically, the parameter determination unit 103 determines cycle interval Tc and cycle data size Dc which are the intermittent reception parameters, so as to satisfy Dc/Tc = BW (performance parameter for bandwidth). An appropriate size for cycle data size Dc varies depending on, for example, TCP conditions in the portable terminal 211 (TCP receive buffer size and maximum segment size (MSS)) and conditions of the communication application program (unit of data transmission). Accordingly, the parameter determination unit 103 determines the intermittent reception parameters in consideration of these conditions, too. In this embodiment, an environment where these conditions remain unchanged is assumed so that the parameter determination unit 103 determines the intermittent reception parameters without being affected by these conditions, for ease of explanation.

In detail, the parameter determination unit 103 stores rules for determining the intermittent parameters, in advance.

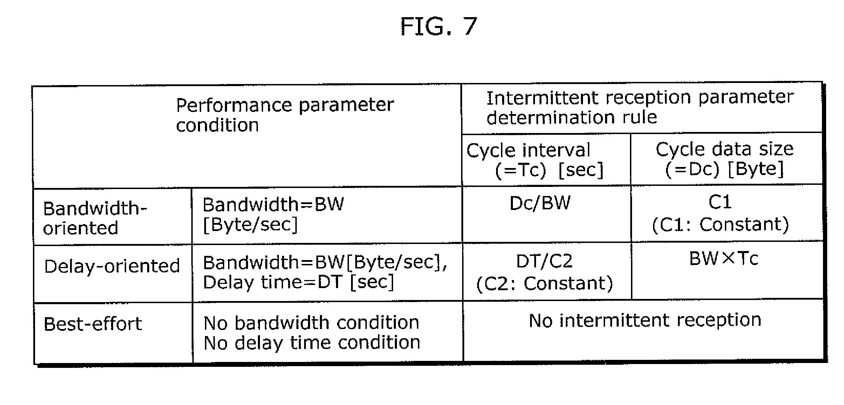

FIG. 7 shows intermittent reception parameter determination rules.

When reading the performance parameter management table of the stream type "bandwidth-oriented", the parameter determination unit 103 uses the bandwidth "BW = BWs [Byte/sec]" which is the performance parameter shown in the performance parameter management table, as a condition for determining the intermittent reception parameters. Which is to say, the parameter determination unit 103 determines C1 [Byte/sec] as cycle data size Dc, in accordance with an intermittent reception parameter determination rule of cycle data size Dc = C1 (C1 is a constant). The parameter determination unit 103 then determines C1/BWs [sec] as cycle interval Tc, in accordance with an intermittent reception parameter determination rule of cycle interval Tc = Dc/BW. The parameter determination unit 103 generates an intermittent reception parameter management table showing determined cycle interval Tc and cycle data size Dc.

In other words, when reading the performance parameter management table of the stream type "bandwidth-oriented", the parameter determination unit 103 first determines cycle data size Dc and then determines cycle interval Tc according to determined cycle data size Dc.

Meanwhile, when reading the performance parameter management table of the stream type "delay-oriented", the parameter determination unit 103 uses the bandwidth "BW = BWb [Byte/sec]" and the delay time "DT = DTb [sec]" which are the performance parameters shown in the performance parameter management table, as conditions for determining the intermittent reception parameters. Which is to say, the parameter determination unit 103 determines DTb/C2 [sec] as cycle interval Tc, in accordance with an intermittent reception parameter determination rule of cycle interval Tc = DT/C2 (C2 is a constant larger than 1). Note here that when C2 is smaller, cycle interval Tc is longer, which contributes to a higher power saving effect. The parameter determination unit 103 then determines BWb x DTb/C2 [Byte] as cycle data size Dc, in accordance with an intermittent reception parameter determination rule of cycle data size Dc = BW x Tc. The parameter determination unit 103 generates an intermittent reception parameter management table showing determined cycle interval Tc and cycle data size Dc.

In other words, when reading the performance parameter management table of the stream type "delay-oriented", the parameter determination unit 103 first determines cycle interval Tc and then determines cycle data size Dc according to determined cycle interval Tc as opposed to the stream type "bandwidth-oriented", because the delay time requirement is strict. Thus, in the case of the performance parameter management table based on a delay-oriented communication application program such as VoIP, the parameter determination unit 103 adds a condition "Tc < DT", that is, cycle interval Tc = DT/C2, as a rule for determining cycle interval Tc, by using delay time DT of the performance parameter.

When reading the performance parameter management table of the stream type "best-effort", the parameter determination unit 103 does not determine cycle interval Tc and cycle data size Dc in accordance with an intermittent reception parameter determination rule. Which is to say, because the best-effort type has no specific performance requirement like the bandwidth-oriented type and the delay-oriented type, basically the parameter determination unit 103 performs such control that quickly completes transferring of data while keeping the communication I/F unit 108 powered on, without complex intermittent reception control. Alternatively, intermittent reception may also be performed for the best-effort type.

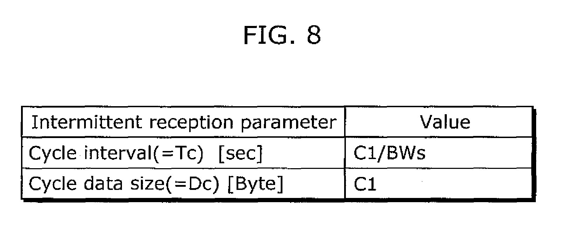

FIG. 8 shows an example of an intermittent reception parameter management table generated by the parameter determination unit 103.

As an example, when reading the performance parameter management table of the stream type "bandwidth-oriented", the parameter determination unit 103 generates an intermittent reception parameter management table that shows C1/BWs [sec] as cycle interval Tc which is an intermittent reception parameter and C1 [Byte] as the cycle data size which is an intermittent reception parameter.

Each time the parameter determination unit 103 receives performance parameter registration notification, the parameter determination unit 103 generates an intermittent reception parameter management table by the above procedure. After generating the intermittent reception parameter management table, the parameter determination unit 103 issues intermittent reception parameter registration notification to the suppression/resumption control unit 104.

Upon receiving the intermittent reception parameter registration notification, the suppression/resumption control unit 104 reads the intermittent reception parameter management table. On the basis of this intermittent reception parameter management table, the suppression/resumption control unit 104 issues a power on request to the power control unit 106, starts monitoring TCP packets transmitted/received by the communication control unit 107, and issues an ACK normal transmission resumption request to the communication control unit 107, and enters an intermittent reception preparatory state. In accordance with this process, the power control unit 106 instructs the communication I/F unit 108 to power on. As a result, the communication I/F unit 108 is powered on.

The following describes a process in the intermittent reception preparatory state in this embodiment.

After performing the process at the start of the communication application program, the communication application unit 101 establishes a connection with the transmitter apparatus 203, and starts data reception from the transmitter apparatus 203.

Upon receiving a connection request from the communication application unit 101, the communication control unit 107 performs processes such as a process of negotiating with the wireless base station 202 and a process of establishing a TCP connection with the transmitter apparatus 203. Once the TCP connection has been established, data is transmitted/received between the portable terminal 211 and the transmitter apparatus 203 via the wireless base station 202 and the communication I/F unit 108, and the communication control unit 107 performs a TCP packet transmission/reception process.

The suppression/resumption control unit 104 monitors TCP packets received by the communication control unit 107, and waits for a bandwidth (reception bandwidth) of received data to reach the bandwidth (set bandwidth BW = Dc/Tc) set in the intermittent reception parameter management table. For instance, the suppression/resumption control unit 104 calculates total data size TID by, each time cycle interval Tc elapses, adding up a data size of TCP packets received during cycle interval Tc. When the condition "TID/Tc ≥ BW" is continuously met at least a predetermined number of times, the suppression/resumption control unit 104 judges that the reception bandwidth reaches set bandwidth BW.

When the reception bandwidth reaches set bandwidth BW, the suppression/resumption control unit 104 issues an ACK normal transmission suppression request to the communication control unit 107, to suppress transmission from the transmitter apparatus 203. Note that this issuance corresponds to the first process of intermittent reception. At this time, the suppression/resumption control unit 104 holds information about a last ACK packet transmitted from the communication control unit 107, namely, an ACK number (LAST_ACKNO) and a receive window (LAST_RWIN). Upon receiving the ACK normal transmission suppression request from the suppression/resumption control unit 104, the communication control unit 107, though continuing TCP data reception, stops transmitting an ACK packet even when a TCP packet is received.

Meanwhile, even when no more ACK packet is transmitted from the portable terminal 211, the transmitter apparatus 203 continues data transmission until the transmissible data size (uwnd) managed in the transmitter apparatus 203 becomes 0. When uwnd becomes 0, the transmitter apparatus 203 stops data transmission. As a result, the transmitter apparatus 203 enters a transmission suppression period.

After the issuance of the ACK normal transmission suppression request, the suppression/resumption control unit 104 continues monitoring TCP packets, and waits for the transmissible data size (uwnd) in the transmitter apparatus 203 to become 0. In detail, the suppression/resumption control unit 104 references a sequence number and a data size of a received TCP packet, and waits for ((sequence number) + (data size)) to reach (LAST_ACKNO + LAST_RWIN).

When judging that uwnd becomes 0, the suppression/resumption control unit 104 issues a power off request to the power control unit 106. Upon receiving the power off request, the power control unit 106 powers off the communication I/F unit 108.

After issuing the power off request to the power control unit 106, the suppression/resumption control unit 104 waits for a predetermined time period. This predetermined time period may be equal to or different from cycle interval Tc. Since the transmitter apparatus 203 has already entered the transmission suppression period, no data transmission is performed while the communication I/F unit 108 is powered off.

When the predetermined time period elapses, the suppression/resumption control unit 104 issues a power on request to the power control unit 106. The suppression/resumption control unit 104 also judges that the intermittent reception preparatory state completes, and shifts to a steady state. Upon receiving the power on request, the power control unit 106 powers on the communication I/F unit 108.

The following describes a process in the steady state in this embodiment.

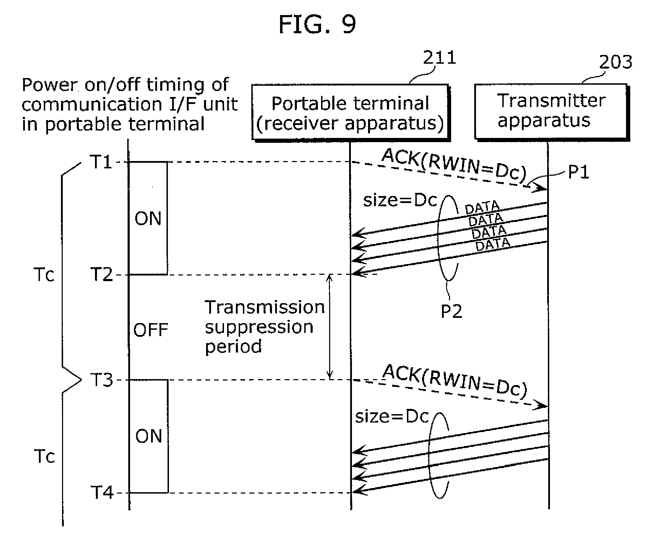

FIG. 9 is a sequence diagram showing an operation of the portable terminal 211 and the transmitter apparatus 203 in the steady state in this embodiment.

An operation for one cycle in the steady state can be divided into three steps that are a transmission resumption process, a transmission suppression period start process, and a transmission suppression period end process.

In the transmission resumption process (Step 1), the suppression/resumption control unit 104 issues an ACK single transmission request to the communication control unit 107, to resume data transmission from the transmitter apparatus 203. When doing so, the suppression/resumption control unit 104 designates cycle data size Dc stored in the intermittent reception parameter management table, as a receive window (RWIN) in an ACK packet. Upon receiving the ACK single transmission request at time T1, the communication control unit 107 transmits ACK packet P1 of RWIN = Dc via the communication I/F unit 108. The suppression/resumption control unit 104 holds an ACK number of transmitted ACK packet P1.

Having received ACK packet P1 (RWIN = Dc) from the portable terminal 211, the transmitter apparatus 203 enters a data transmissible state after the end of the intermittent reception preparatory state or the transmission suppression period. As a result, the transmitter apparatus 203 resumes transmission of TCP packets (data P2) to the portable terminal 211.

Since the suppression/resumption control unit 104 in the portable terminal 211 issued the ACK normal transmission suppression request in the intermittent reception preparatory state, normal ACK packet transmission, that is, transmission of an ACK packet in conjunction with data reception, has already been suppressed. This being so, even when the communication control unit 107 receives data P2 from the transmitter apparatus 203 and passes the data to the communication application unit 101, an ACK packet is not transmitted to the transmitter apparatus 203. Accordingly, a size of data P2 received from the transmitter apparatus 203 in one cycle (cycle interval Tc) of intermittent reception is limited to cycle data size Dc.

In the transmission suppression period start process (Step 2), the suppression/resumption control unit 104 monitors TCP packets received by the communication control unit 107 from time T1 onward, to continue checking whether or not a size of data received from time T1 reaches cycle data size Dc, that is, whether or not the transmissible data size (uwnd) in the transmitter apparatus 203 becomes 0. Here, the suppression/resumption control unit 104 performs this check using the ACK number and receive window (RWIN = Dc) of the last transmitted ACK packet, in the same way as the check performed in the intermittent reception preparatory state. When the size of data received from time T1 reaches cycle data size Dc, i.e., at time T2, the suppression/resumption control unit 104 judges that a transmission suppression period starts, and issues a power off request to the power control unit 106. Upon receiving the power off request, the power control unit 106 powers off the communication I/F unit 108.

In the transmission suppression period end process (Step 3), the portable terminal 211 in this embodiment of the present invention judges time T3 at which cycle interval Tc elapses from time T1 which is set as a start point, as an end point of the transmission suppression period. In detail, the suppression/resumption control unit 104 detects time T3 using a timer, and issues a power on request to the power control unit 106. In accordance with the power on request, the power control unit 106 powers on the communication I/F unit 108 at time T3.

In the steady state, the portable terminal 211 repeatedly executes the above three steps as one cycle.

When ending the communication application program, the communication application unit 101 requests the communication control unit 107 to disconnect from the transmitter apparatus 203, and issues end notification to the application requirement obtainment unit 102.

The communication control unit 107 terminates the TCP connection in accordance with the disconnection request from the communication application unit 101.

Upon receiving the end notification, the application requirement obtainment unit 102 clears the contents of the performance parameter management table, and issues performance parameter deletion notification to the parameter determination unit 103.

Upon receiving the performance parameter deletion notification, the parameter determination unit 103 clears the contents of the intermittent parameter management table, and issues intermittent reception parameter deletion notification to the suppression/resumption control unit 104.

Upon receiving the intermittent reception parameter deletion notification, the suppression/resumption control unit 104 stops monitoring TCP packets transmitted/received by the communication control unit 107, and issues a power off request to the power control unit 106.

The power control unit 106 powers off the communication I/F unit 108 in accordance with the process (the issuance of the power off request) by the suppression/resumption control unit 104.

As a result of the above process, the portable terminal 211 returns to the initial state.

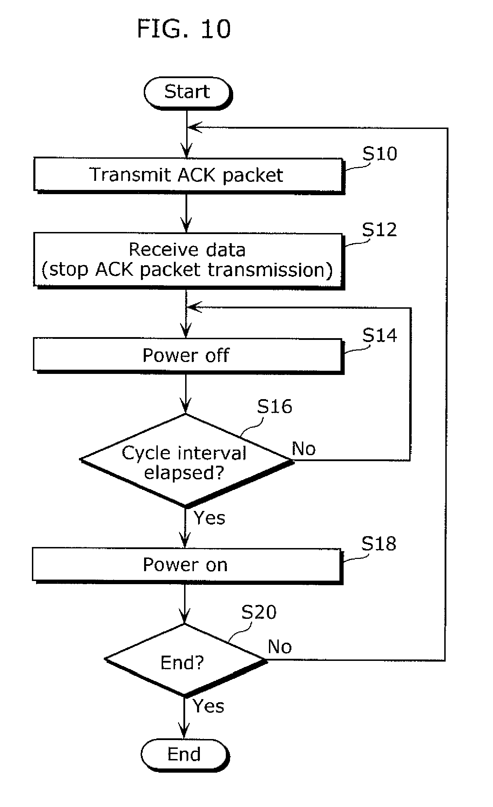

FIG. 10 is a flowchart showing an operation of the portable terminal 211 in this embodiment.

First, the portable terminal 211 in this embodiment transmits an ACK packet of RWIN = Dc, to the transmitter apparatus 203 (Step S10). At this time, the suppression/resumption control unit 104 in the portable terminal 211 starts counting time using a timer, to specify a timing of powering on the communication I/F unit 108.

The portable terminal 211 then receives data (TCP packets) of cycle data size Dc transmitted from the transmitter apparatus 203 in response to the ACK packet (Step S12). During this time, the portable terminal 211 in this embodiment stops ACK packet transmission that is normally performed in response to received data, in order to suppress data transmission from the transmitter apparatus 203.

Having received all data of cycle data size Dc in Step S12, the portable terminal 211 powers off the communication I/F unit 108 (Step S14).

After powering off the communication I/F unit 108, the portable terminal 211 judges whether or not cycle interval Tc elapses from the ACK packet transmission of Step S10, on the basis of the aforementioned timer (Step S16).

When judging that cycle interval Tc does not elapse yet (Step S16: No), the portable terminal 211 repeats the process from Step S14. When judging that cycle interval Tc elapses (Step S16: Yes), the portable terminal 211 powers on the communication I/F unit 108 (Step S18).

The portable terminal 211 then judges whether or not to end the communication with the transmitter apparatus 203 (Step S20). When judging to end the communication (Step S20: Yes), the portable terminal 211 ends the whole process. When judging not to end the communication (Step S20: No), the portable terminal 211 repeats the process from Step S10. As a result of the above process of Steps S10 to S20, one cycle of intermittent reception is executed.

As described above, the portable terminal 211 in this embodiment saves power while communicating with the transmitter apparatus 203 by using a protocol having a flow control mechanism such as TCP, without relying on the wireless LAN power saving method. Accordingly, in this embodiment, the power saving of the portable terminal 211 can be carried out regardless of a power saving function support status in an access point and a network device type.

Moreover, since there is no reliance on the wireless LAN power saving method in this embodiment, it is unnecessary to synchronize the data reception timing of the portable terminal 211 with the beacon transmission timing. This being so, while continuing such communication that ensures the delay time and the bandwidth, the power saving capacity can be improved at the same time.

Furthermore, in this embodiment, the power to the portable terminal 211 is turned off after actively creating a period during which no data arrives from the transmitter apparatus 203. Therefore, even when jitter occurs, an occurrence of a data overflow between the transmitter apparatus 203 and the portable terminal 211 can be prevented.

This embodiment describes the case where the portable terminal 211 operates according to the TCP protocol. However, protocols other than TCP are also applicable as long as they have a flow control mechanism, and so an existing protocol having flow control may be used. In other words, this embodiment can be realized simply by adding a processing unit corresponding to the power saving method of the present invention to the portable terminal, with there being no need to add a new protocol to both the transmitter apparatus and the portable terminal.

Although the present invention has been described by way of the first embodiment, the present invention can also be realized by modifying the first embodiment.

For instance, the first embodiment describes the case where "not transmitting an ACK packet from the portable terminal 211" is used as the method of suppressing data transmission from the transmitter apparatus 203, but the data transmission suppression method is not limited to this. As an example, the portable terminal 211 may explicitly suppress data transmission from the transmitter apparatus 203, by transmitting an ACK packet of a receive window (RWIN) = 0 to the transmitter apparatus 203.

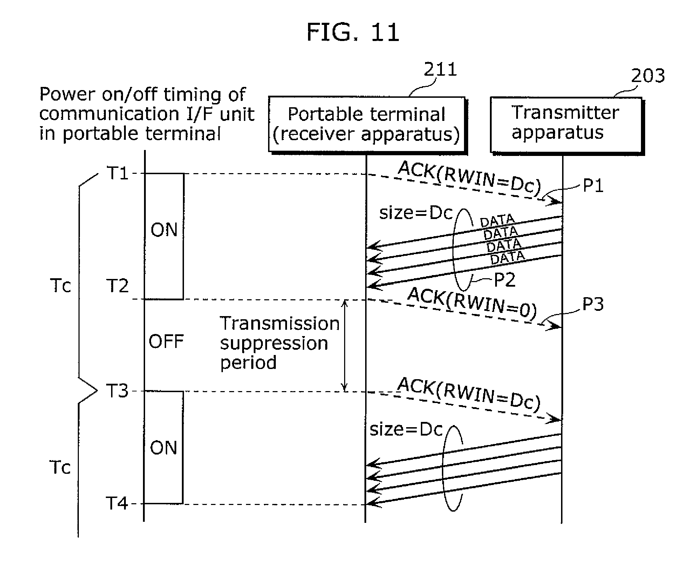

FIG. 11 is a sequence diagram showing an operation of transmitting an ACK packet of a receive window (RWIN) = 0.

For example, after receiving data P2 from the transmitter apparatus 203 and passing the data to the communication application unit 101, the communication control unit 107 in the portable terminal 211 transmits ACK packet P3 of the receive window (RWIN) = 0 to the transmitter apparatus 203 at time T2, as shown in FIG. 11. By transmitting such ACK packet P3, too, the size of data P2 received from the transmitter apparatus 203 can be limited to cycle data size Dc to thereby suppress data transmission from the transmitter apparatus 203.

With such a suppression method that transmits the ACK packet of the receive window (RWIN) = 0, it is possible to prevent a retransmission process by the transmitter apparatus 203 which operates according to the TCP control method. That is, in such a suppression method that does not transmit the ACK packet as shown in FIG. 9, no ACK packet arrives at the transmitter apparatus 203, so that the transmitter apparatus 203 might judge that a packet loss occurs by a timeout and retransmit the data, according to the TCP control method. This causes a problem of decreasing transmissible data (referred to as a "congestion window") in the transmitter apparatus 203 by one packet (MSS mentioned above). On the other hand, in the suppression method of transmitting the ACK packet of RWIN = 0 as shown in FIG. 11, the transmitter apparatus 203 receives the ACK packet and so a timeout can be prevented. Note here that the portable terminal 211 may transmit the ACK packet of RWIN = 0 at time T2 when uwnd = 0, or at an arbitrary timing after time T2 and before a timeout occurs in the transmitter apparatus 203. Moreover, the portable terminal 211 may transmit the ACK packet of RWIN = 0 not only in the steady state but also in the intermittent reception preparatory state.

The portable terminal 211 may transmit an ACK packet other than RWIN = 0, to suppress data transmission from the transmitter apparatus 203. That is, the portable terminal 211 may transmit any ACK packet, so long as the size of data transmitted from the transmitter apparatus 203 is limited to no larger than cycle data size Dc (size designated by RWIN of the ACK packet for instructing to resume transmission). Accordingly, the portable terminal 211 may transmit an ACK packet with RWIN being set to a value not exceeding "Dc - (size of data received from time T1)".

The wireless communication device included in the portable terminal 211 in the present invention may be a wireless LAN (IEEE 802.11a/b/g) device or any other wireless communication device.

The first embodiment describes a network structure in which the portable terminal 211 includes the wireless communication device as the communication I/F unit 108, but the type of communication I/F in the portable terminal according to the present invention is not limited to such. For example, a wireless I/F other than wireless LAN or a wired communication I/F may be used. In the case of using a wired communication I/F, the wireless base station 202 is unnecessary in the network structure, and instead an apparatus such as a wired router is necessary. In addition, the first embodiment assumes the wireless LAN network structure including an access point (wireless base station 202), but the present invention may also be implemented in an ad hoc environment with no access point. In such a case, the transmitter apparatus 203 and the portable terminal 211 are directly connected by a wireless LAN without the Internet 204 in between.

The first embodiment mainly describes TCP as a protocol having flow control, but the protocol used in the present invention is not limited to TCP. The protocol used in the present invention may be any other protocol that has a flow control function. For instance, the power saving control may be performed by realizing flow control in an application layer and controlling transmission suppression and resumption by using this flow control in the same manner as TCP. In addition. in the case where the portable terminal is directly connected to the transmitter apparatus, the power saving control may be performed by using flow control in a data link layer between the transmitter apparatus and the portable terminal. Moreover, flow control is not limited to between the portable terminal 211 and the transmitter apparatus 203. For instance, when there is a protocol that executes flow control between a relay apparatus and the portable terminal, this flow control can be equally used to perform the power saving control.

Any method of powering on or off the communication I/F unit 108 in the transmission suppression period may be used in the present invention. For example, the present invention may be performed in conjunction with the process of the wireless LAN power save mode so that the transition to the doze mode which is the power save mode is made at the power off timing in the present invention. In addition, the power off timing may be an arbitrary timing during the transmission suppression period.

The first embodiment describes the case where the number of communication application programs simultaneously running in the communication application unit 101 is limited to one for the sake of simplicity, but the power saving method of the present invention is not dependent on the number of communication application programs. Even in an environment where a plurality of communication application programs run simultaneously, the same power control based on flow control can be conducted by, for example, integrating intermittent reception timings of the plurality of communication application programs.

The performance parameter obtainment method in the application requirement obtainment unit 102 is not an essential feature of the present invention. Therefore, the application requirement obtainment unit 102 may obtain a performance parameter using any method that is not limited to the procedure described in the first embodiment. As an example, though the first embodiment describes the case where the application requirement obtainment unit 102 obtains the performance parameter directly from the communication application unit 101, the application requirement obtainment unit 102 may independently obtain the performance parameter. In this case, the application requirement obtainment unit 102 obtains the performance parameter by analyzing packets in data transmission/reception or monitoring the start and end timings of the communication application program on an operating system (OS).

For instance, when the power saving control is not performed, that is, when the communication I/F unit 108 is constantly powered on, at least one of a bandwidth and a delay time of data transmission/reception between the portable terminal 211 and the transmitter apparatus 203 matches the performance requirement of the communication application program. This being the case, in the state where the power saving control is not performed, the application requirement obtainment unit 102 monitors packets in data transmission/reception by the communication control unit 107 to estimate at least one of the bandwidth and the delay time, and uses the estimate as the performance parameter. In this way, the application requirement obtainment unit 102 independently obtains the performance parameter through packet analysis.

The first embodiment describes the case where the start and end timings of the communication application program are obtained and the performance parameter is always fixed while the communication application is running. Alternatively, the performance parameter may be dynamically changed.

The first embodiment describes the case where the intermittent reception parameters are determined on the basis of the determination rules shown in FIG. 7, but the intermittent reception parameters (cycle interval and cycle data size) may instead by determined on the basis of other rules. In addition, the intermittent reception parameters need not be fixed and may be dynamically changed. Which is to say, cycle interval Tc and cycle data size Dc may be changed periodically, or may be changed to different values each time. The same applies to performance parameters. The first embodiment describes the use of the performance parameters shown in FIGS. 6A, 6B, and 6C, but parameters other than these may be used. For instance, though the first embodiment describes the case where streams are classified into three types, streams may instead be classified into two types or four or more types, which are not limited to the stream types shown in the first embodiment. Furthermore, though the first embodiment describes the case where the different intermittent reception parameter determination rules are used for these stream types, the intermittent reception parameters may be determined on the basis of a fixed rule irrespective of stream type.

The first embodiment describes the case where the power is constantly on as the "intermittent reception preparatory state" during the period from the start of communication to when the measured bandwidth reaches set bandwidth BW. As an alternative, the power saving control by intermittent reception may be performed in this period, too. Note however that, since slow start control of TCP is executed in the transmitter apparatus 203 in this period, the window size increases each time a round trip time (RTT) elapses, in such a manner as 1 MSS, 2 MSS, 4 MSS, .... Here, RTT is a period of time from when an ACK packet is transmitted to when data in response to the ACK packet is received, and MSS is a maximum size of TCP data contained in one packet. Accordingly, the suppression/resumption control unit 104 needs to perform control in accordance with this. In detail, when the first data packet is received, the suppression/resumption control unit 104 causes the communication I/F unit 108 to be powered off. After a predetermined time period, the suppression/resumption control unit 104 causes the communication I/F unit 108 to be powered on again and transmit an ACK packet (RWIN = 2 × MSS). Upon receiving two data packets, the suppression/resumption control unit 104 causes the communication I/F unit 108 to be powered off. Further, after the predetermined time period, the suppression/resumption control unit 104 causes the communication I/F unit 108 to be powered on again and transmit an ACK packet (RWIN = 4 × MSS). Upon receiving four data packets, the suppression/resumption control unit 104 causes the communication I/F unit 108 to be powered off. Note that the data packets mentioned here are packets transmitted from the transmitter apparatus to the receiver apparatus according to TCP, and these data packets and ACK packets are collectively referred to as TCP packets.

Thus, the suppression/resumption control unit 104 doubles the notified receive window (RWIN) size at each intermittent reception cycle. However, the slow start control in the transmitter apparatus 203 ends at some timing, and subsequently the window size increase as a result of ACK packet reception becomes smaller. The suppression/resumption control unit 104 detects this by a timeout or the like and, upon detecting this, shifts to such control that increases the receive window notified by an ACK packet little by little. When the notified receive window reaches cycle data size Dc as a result of the above control, the suppression/resumption control unit 104 starts the process in the steady state described above.

### (Second Embodiment)

The following describes a communication apparatus in a second embodiment of the present invention. In the first embodiment, the communication I/F unit 108 is powered off only during the transmission suppression period when there is no data transmission from the transmitter apparatus 203. In this embodiment, the communication I/F unit 108 is powered off during another period too, thereby further improving the power saving effect. In detail, the communication I/F unit 108 is powered off during a period from when the portable terminal instructs to resume transmission to when data from the transmitter apparatus 203 actually arrives.

In this embodiment, the same apparatuses and structures as in the first embodiment have been given the same reference numerals and their explanation has been omitted. A network structure of a communication system to which this embodiment relates is the same as the network structure of the communication system in the first embodiment shown in FIG. 3, and so its explanation has been omitted.

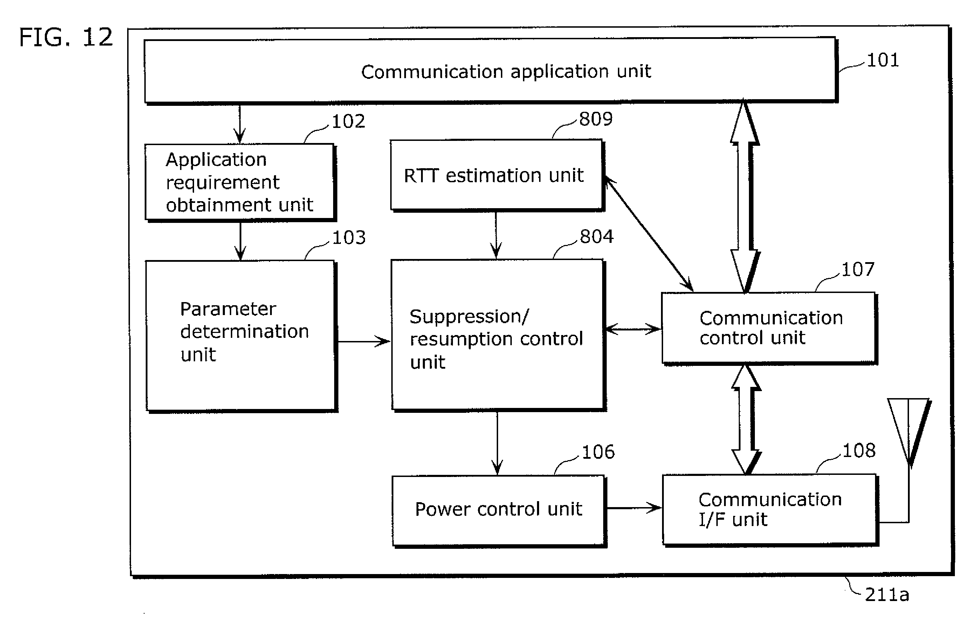

FIG. 12 is a block diagram showing a specific structure of a portable terminal in this embodiment.

A portable terminal 211a in this embodiment includes the communication application unit 101, the application requirement obtainment unit 102, the parameter determination unit 103, a suppression/resumption control unit 804, the power control unit 106, the communication control unit 107, the communication I/F unit 108, and an RTT estimation unit 809. In other words, the portable terminal 211a in this embodiment includes the suppression/resumption control unit 804 instead of the suppression/resumption control unit 104 of the portable terminal 211 in the first embodiment, and includes the RTT estimation unit 809 which is not included in the portable terminal 211 in the first embodiment.

The RTT estimation unit 809 estimates an RTT on a protocol having flow control. The RTT corresponds to a packet round-trip time between the portable terminal 211a and the transmitter apparatus 203. The RTT estimation unit 809 monitors packets transmitted/received by the communication control unit 107, estimates a shortest RTT, and sends the estimate to the suppression/resumption control unit 804. For example, by monitoring the communication control unit 107, the RTT estimation unit 809 measures a round-trip time of a pair of packets transmitted back and forth between the portable terminal 211a and the transmitter apparatus 203, a predetermined number of times. The RTT estimation unit 809 sets a shortest round-trip time in the measurement, as the shortest RTT.

Here, the pair of packets transmitted back and forth between the portable terminal 211a and the transmitter apparatus 203 may be any pair of packets as long as they are a packet transmitted from the portable terminal 211a and a packet transmitted from the transmitter apparatus 203 in response to the transmission from the portable terminal 211a. For instance, the pair of packets may be ACK packet P1 (receive window > 0) transmitted from the portable terminal 211a at time T1 and first data packet P2 transmitted from the transmitter apparatus 203 in response to ACK packet P1, as shown in FIG. 9. Since the method of estimating the shortest RTT is not an essential feature of the power saving method of the present invention, the method is not limited to the above and other methods are also applicable.

The suppression/resumption control unit 804 has the function of the suppression/resumption control unit 104 in the first embodiment, and further instructs to power off the communication I/F unit 108 during a period from when an ACK packet of RWIN > 0 is transmitted to when the RTT estimated by the RTT estimation unit 809 (hereafter referred to as an "RTT estimate") elapses. In more detail, the suppression/resumption control unit 804 obtains the RTT estimate from the RTT estimation unit 809. The suppression/resumption control unit 804 also issues a power off request to the power control unit 106 at a timing after the transmission of the ACK packet (RWIN > 0), and issues a power on request to the power control unit 106 at a timing when the RTT estimate elapses from immediately after the transmission of the ACK packet (RWIN > 0).

In addition, the suppression/resumption control unit 804 performs the same process as the suppression/resumption control unit 104, to power on/off the communication I/F unit 108 in the transmission suppression period as well.

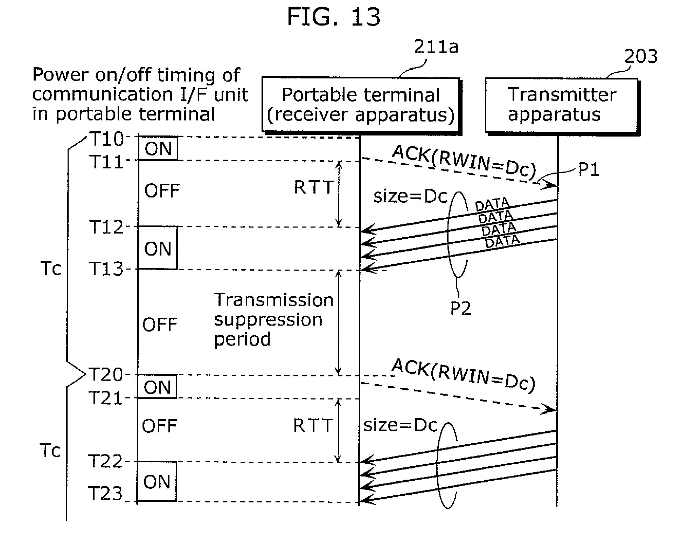

FIG. 13 is a sequence diagram showing a power saving method of the portable terminal 211a and the transmitter apparatus 203 in this embodiment.

In FIG. 13, a period from time T11 to time T12 corresponds to a period from when the portable terminal 211a instructs to resume transmission to when data from the transmitter apparatus 203 actually arrives. In this period, there is no data transmission from the transmitter apparatus 203 as with the transmission suppression period described in the first embodiment, so that no problem arises even when the communication I/F unit 108 is powered off.

In view of this, the portable terminal 211a to which the power saving method according to this embodiment is applied powers on the communication I/F unit 108 only during the transmission of ACK packet P1 (RWIN = Dc), that is, during a period from time T10 to time T11, and subsequently powers off the communication I/F unit 108 until time T2. The period from time T11 to time T12 is equal to the RTT estimate by the RTT estimation unit 809 mentioned above. The portable terminal 211a powers on the communication I/F unit 108 again during the reception of data from the transmitter apparatus 203, that is, during a period from time T12 to time 13, and powers off the communication I/F unit 108 during the subsequent transmission suppression period of time T13 to time T20 in the same way as in the first embodiment.

Note that, though the suppression/resumption control unit 804 issues the power off request to the power control unit 106 after the transmission of the ACK packet (RWIN > 0), the timing of issuance may be an arbitrary timing so long as it is after time T11 at which the ACK packet is transmitted. Moreover, though the suppression/resumption control unit 804 issues the power on request to the power control unit 106 at the timing when the RTT estimate elapses from immediately after the transmission of the ACK packet (RWIN > 0), the timing of issuance may be an arbitrary timing so long as it is before time T12. With regard to the timing of the power on request in particular, it is also effective to issue the power on request a predetermined time earlier or a time calculated on the basis of statistics such as an average, variance, or number of samples of measured RTT values earlier, in consideration of the case where the RTT estimate is shorter than an actual minimum RTT.

In this embodiment, even in the case of the best-effort type, power saving can be performed by turning the power off during the period from the transmission of the ACK packet (RWIN > 0) to the elapse of the RTT.

Here, intermittent reception is not performed in the best-effort type communication. This is because a communication application program of the best-effort type is based on the premise that data is transferred without interruption. That is, the transmitter apparatus 203 does not generate transmission data in real time and so can transmit data held therein continuously, and the receiver apparatus has a memory for storing all data and so can receive data continuously. Accordingly, there is no transmission suppression period in the best-effort type communication, so that data is transferred without interruption, which shortens a period for completing the reception of the whole data. In the first embodiment, however, when there is no transmission suppression period, the power cannot be turned off, and as a result the power consumption cannot be reduced. In this case, power consumption required for transferring data of a predetermined size is inevitably determined by the total amount of transferred data.

In this embodiment, on the other hand, the portable terminal 211a powers off the communication I/F unit 108 during the period from when the portable terminal 211a instructs to resume transmission to when data from the transmitter apparatus 203 actually arrives. Therefore, even in the best-effort type communication, the power can be saved without a decrease in data transfer rate. In this case, it is desirable to set cycle data size Dc which is an intermittent reception parameter, to a largest possible value that does not cause a packet loss. In addition, instead of specifying cycle interval Tc which is an intermittent reception parameter, the portable terminal 211a may immediately transmit an ACK packet (RWIN = Dc) in a next cycle upon receiving packets of cycle data size Dc from the transmitter apparatus 203.

Thus, in this embodiment, another period during which the communication I/F unit 108 is powered off is added to the power saving method in the first embodiment. This contributes to a further improvement in power saving effect.

### (Third Embodiment)

The following describes a communication apparatus in a third embodiment of the present invention. The communication apparatus in this embodiment can improve both the communication quality and the power saving effect, even when a packet loss occurs.

In the first embodiment, the suppression/resumption control unit 104 references a sequence number and a data size of a received TCP packet, detects the entry of the transmitter apparatus 203 into the transmission suppression period when ((sequence number) + (data size)) reaches (LAST_ACKNO + LAST_RWIN), and powers off the communication I/F unit 108.

However, such control can be properly performed only under a circumstance where the following two conditions are met.

The first condition is that the receiver apparatus can receive packets until ((sequence number) + (data size)) reaches (LAST_ACKNO + LAST_RWIN).

The second condition is that the transmitter apparatus 203 can transmit the size of data corresponding to the receive window (RWIN) notified from the receiver apparatus.

In reality, the first condition cannot be guaranteed in the case where a packet loss occurs. A packet loss occurs due to various factors. For example, a packet loss occurs in a wireless section of poor signal quality. A packet loss also occurs due to a buffer overflow in a relay apparatus such as a relay router or a wireless access point, which is caused by a conflict with another flow. Further, a packet loss occurs due to a buffer overflow in the receiver apparatus when the receiver apparatus receives traffic exceeding a processible rate.

Likewise, the second condition may not be able to be guaranteed in the case where a packet loss occurs. When a packet loss occurs, the transmitter apparatus 203 which operates according to TCP interprets the packet loss as information indicating network congestion, and decreases a congestion window (hereafter referred to as "CWIN") that is managed for the purpose of congestion control. The amount of data actually transmitted from the transmitter apparatus 203 is limited by a smaller one of CWIN and notified RWIN as an upper limit. Accordingly, when a situation where CWIN is smaller than RWIN notified from the receiver apparatus takes place due to a packet loss, the transmitter apparatus 203 is unable to transmit packets of RWIN in size.

Note that the transmitter apparatus 203 which operates according to TCP typically detects a packet loss by the following two methods.

In the first loss detection method, the transmitter apparatus 203 detects a packet loss when an ACK packet in response to a transmitted packet is not received even after a predetermined time period (referred to as a "retransmission timeout"). In this case, the transmitter apparatus 203 decreases CWIN to 1, and then transmits the lost packet as a retransmission packet.

In the second loss detection method, the transmitter apparatus 203 detects a packet loss when a plurality of (typically four) ACK packets having a same ACK number are received. In this case, the transmitter apparatus 203 immediately transmits the retransmission packet and, after receiving an ACK packet in response to the retransmission packet, decreases CWIN to half of a CWIN value prior to the packet loss detection.

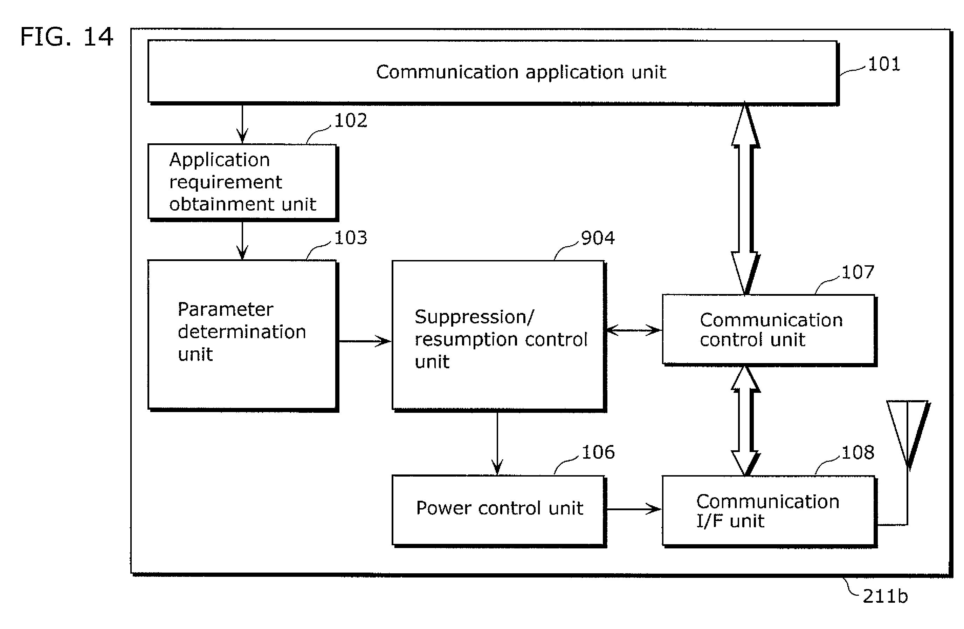

FIG. 14 is a block diagram showing a specific structure of a portable terminal in this embodiment.

A portable terminal 211b in this embodiment includes the communication application unit 101, the application requirement obtainment unit 102, the parameter determination unit 103, a suppression/resumption control unit 904, the power control unit 106, the communication control unit 107, and the communication I/F unit 108. In other words, the portable terminal 211b in this embodiment includes the suppression/resumption control unit 904 instead of the suppression/resumption control unit 104 of the portable terminal 211 in the first embodiment. In this embodiment, the same apparatuses and structures as in the first embodiment have been given the same reference numerals and their explanation has been omitted.

The suppression/resumption control unit 904 has the same function as the suppression/resumption control unit 104 in the first embodiment, and further detects a packet loss and controls the communication control unit 107 so that the lost packet is retransmitted as a retransmission packet. The suppression/resumption control unit 904 also estimates CWIN of the transmitter apparatus 203 after the occurrence of the packet loss, and controls the communication control unit 107 so that the same intermittent reception and power saving control as in the first embodiment can be carried out even with estimated CWIN.

An operation when a packet loss occurs in this embodiment is described in detail below. Note that an operation when no packet loss occurs is the same as in the first embodiment, and so its explanation has been omitted here.

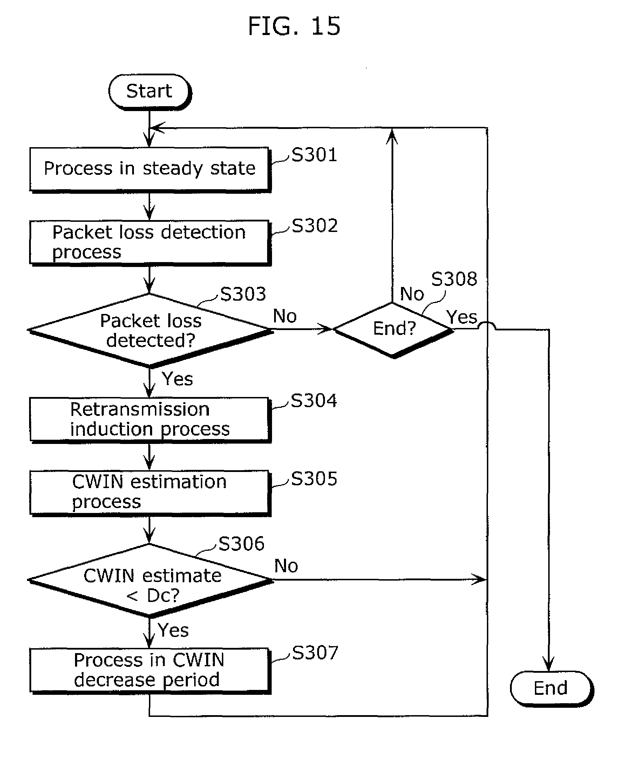

FIG. 15 is a flowchart showing an operation of the portable terminal 211b in this embodiment.

First, the portable terminal 211b performs the same process in the steady state as the processing operation in the first embodiment shown in FIG. 9, that is, performs power on/off control (power saving control) while data of cycle data size Dc is transferred per cycle (Step S301). The portable terminal 211b further performs a packet loss detection process (Step S302). The portable terminal 211b judges whether or not a packet loss occurs, on the basis of a result of the detection process (Step S303).

When judging that no packet loss occurs (Step S303: No), for example the portable terminal 211b further judges whether or not to end the steady-state process (Step S308). When judging to end the steady-state process (Step S308: Yes), the portable terminal 211b ends the steady-state process. When judging not to end the steady-state process (Step S308: No), the portable terminal 211b repeats the process from Step S301.

On the other hand, when judging that a packet loss occurs (Step S303: Yes), the portable terminal 211b first executes a retransmission induction process for causing the transmitter apparatus 203 to retransmit the lost packet (Step S304).

The portable terminal 211b receives the packet retransmitted as a result of the retransmission induction process, and notifies the transmitter apparatus 203 of the receipt of the packet using an ACK packet. Upon receiving the notification by the ACK packet, the transmitter apparatus 203 decreases CWIN according to congestion control of TCP. This incurs a possibility that an intermittent reception cycle in the steady-state process of Step S301, which is predicated on the above second condition CWIN ≥ RWIN, cannot be executed.

This being so, first the portable terminal 211b estimates CWIN which is the parameter of the transmitter apparatus 203 (Step S305). The portable terminal 211b then judges whether or not estimate Dc' in Step S305 is smaller than cycle data size Dc which is set as RWIN (Step S306). When judging that estimate Dc' is smaller (Dc' < Dc) (Step S306: Yes), the portable terminal 211b executes a process (process in a CWIN decrease period) for increasing CWIN to cycle data size Dc (Step S307). When judging that estimate Dc' is equal to or larger than cycle data size Dc (Dc' ≥ Dc) (Step S306: No), the portable terminal 211b repeats the process from Step S301.

The packet loss detection process of Step S302, the retransmission induction process of Step S304, the CWIN estimation process of Step S305, and the process in the CWIN decrease period of Step S307 are described in detail below.

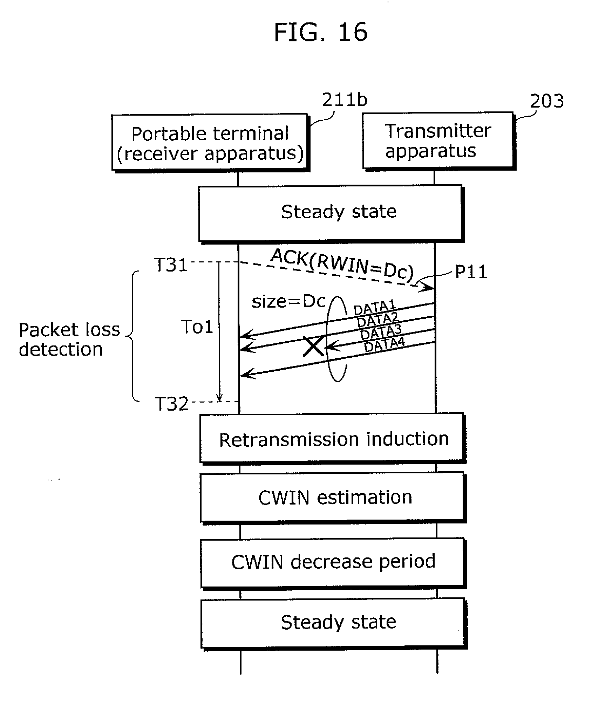

FIG. 16 is an explanatory view for explaining the packet loss detection process of Step S302 in FIG. 15 in detail.

Suppose DATA3 is lost among four sets of data (DATA1 to DATA4) of cycle data size Dc which are transmitted from the transmitter apparatus 203 in response to an ACK packet (RWIN = Dc) transmitted at time T31.

The suppression/resumption control unit 904 detects a packet loss by a timeout. In detail, when unable to receive all data of notified cycle data size Dc by time T32 at which predetermined time period To1 elapses from time T31 at which ACK packet P11 for urging the transmitter apparatus 203 to resume transmission is transmitted, the suppression/resumption control unit 904 detects a timeout, and judges that a packet loss occurs. When DATA3 is lost as mentioned above, it is impossible to receive all data of cycle data size Dc within predetermined time period To1, so that the suppression/resumption control unit 904 detects the packet loss. Note here that predetermined time period To1 is referred to as a timeout.

For instance, the suppression/resumption control unit 904 measures, in each preceding cycle, a time period from when an ACK packet for urging the transmitter apparatus 203 to resume transmission is transmitted to when all data of notified cycle data size Dc is received. The suppression/resumption control unit 904 uses a maximum time period of the measured time periods, as above timeout To1.

Alternatively, the suppression/resumption control unit 904 may determine timeout To1 on the basis of information, obtained beforehand, about RTT which is an interval from the transmission of an ACK packet for urging transmission resumption to the reception of first data in response to the ACK packet, reception interval Rt of continuous data, and the like. That is, the suppression/resumption control unit 904 may employ such calculation as "(maximum RTT) + (Dc/MSS - 1) × (maximum Rt) = To1". The suppression/resumption control unit 904 may also set more appropriate timeout To1 by using not the maximums but various statistics such as averages or variances.

Moreover, the point at which the measurement of the timeout starts may be the time at which the first packet of data of notified cycle data size Dc arrives, instead of time T31 at which the ACK packet for urging transmission resumption is transmitted.

Furthermore, instead of using the timeout, the suppression/resumption control unit 904 may monitor sequence numbers of received data and, when the sequence numbers are inconsecutive, detect that a packet loss occurs. That is, the suppression/resumption control unit 904 detects a packet loss as a result of receiving DATA4 without having received DATA3 first, as shown in FIG. 16. There may be the case where, even when no packet loss occurs, sequence numbers become inconsecutive due to rearrangement of the order of packets on the network. This being so, the above packet loss detection based on inconsecutive sequence numbers has a possibility of wrongly judging that a packet loss occurs even when there is no packet loss. Therefore, the suppression/resumption control unit 904 may detect that a packet loss occurs, when unable to receive missing data by the time a plurality of packets containing data with an inconsecutive sequence number are received or by the time a predetermined time period elapses from the reception of data with an inconsecutive sequence number.

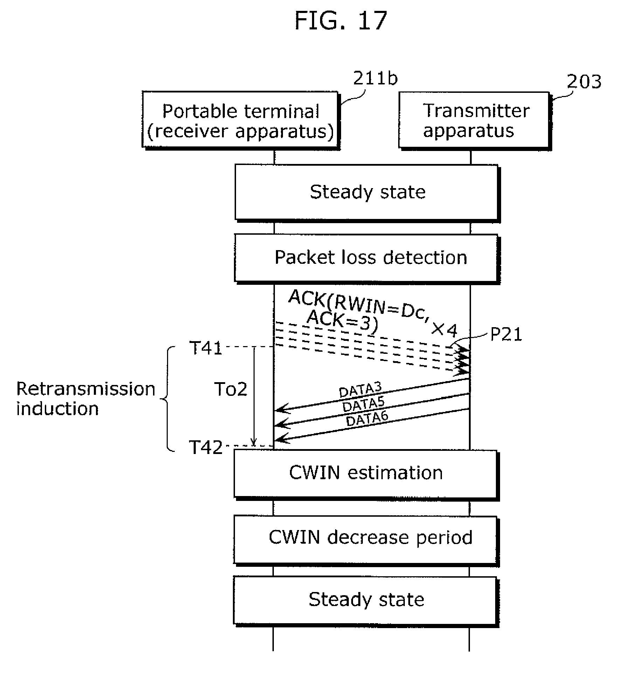

FIG. 17 is an explanatory view for explaining the retransmission induction process of Step S304 in FIG. 15 in detail.

When there is no transmission from the receiver apparatus (portable terminal) upon an occurrence of a packet loss, the transmitter apparatus 203 causes a timeout to occur, decreases CWIN to 1, and performs retransmission according to the first loss detection method mentioned above. This hinders efficient transfer, and raises a possibility of being unable to satisfy the performance requirement of the communication application program.

In view of this, the receiver apparatus (portable terminal) 211b in this embodiment causes the transmitter apparatus 203 to perform fast retransmission according to the second loss detection method, thereby limiting the decrease of CWIN to half. This allows the transmitter apparatus 203 to perform data transfer as efficiently as possible.

In more detail, in the retransmission induction process, the suppression/resumption control unit 904 in the portable terminal 211b instructs the communication control unit 107 to transmit a same ACK packet four consecutive times, in order to cause the transmitter apparatus 203 to execute the second loss detection method. As a result, the portable terminal 211b transmits four ACK packets P21 to the transmitter apparatus 203. Note that these ACK packets P21 all include cycle data size Dc as a receive window (RWIN) and a value (e.g., 3) for requesting transmission of lost packet DATA3 as an ACK number.

Upon receiving four ACK packets P21, the transmitter apparatus 203 retransmits DATA3 which is the lost packet. Here, the transmitter apparatus 203 may also transmit a packet following DATA4, depending on the position of the lost packet in the data of cycle data size Dc transmitted in the cycle at the packet loss detection process, and a version and implementation of TCP in the transmitter apparatus 203. For example, the transmitter apparatus 203 transmits DATA5 and DATA6 in addition to retransmitting DATA3. To receive all of these data, the suppression/resumption control unit 904 in the portable terminal 211b waits for arrival of data until time T42 at which predetermined time period To2 elapses from transmission time T41 of fourth ACK packet P21. Note here that the transmitter apparatus 203 does not transmit DATA4 when retransmitting DATA3, because DATA4 has already been transmitted. However, in consideration of a possibility that DATA4 is lost too, the transmitter apparatus 203 may retransmit DATA4.

Moreover, the suppression/resumption control unit 904 may determine predetermined time period To2 on the basis of, for example, statistical information of RTT and continuous data reception interval Rt, in the same way as the method of determining timeout To1. Which is to say, the suppression/resumption control unit 904 determines predetermined time period To2 such as "(maximum RTT) + (Dc/MSS -1) × (maximum Rt) = To2". Alternatively, the suppression/resumption control unit 904 may set more appropriate predetermined time period To2 by using not the maximums but various statistics such as averages and variances.

In addition, the point at which the measurement of predetermined time period To2 starts may be the time at which the retransmission packet arrives, instead of time T41 at which ACK packet P21 for urging retransmission is transmitted.

Moreover, though the suppression/resumption control unit 904 transmits four same ACK packets P21 for urging retransmission, the suppression/resumption control unit 904 may further transmit the same ACK packet additionally, in consideration of a possibility that ACK packet P21 is lost.

Note that, in the case where only one packet is lost in the cycle at the packet loss detection process, the lost packet is retransmitted according to the above retransmission induction process. In the case where two or more packets are lost, however, it is desirable to also retransmit any lost packet following the first lost packet. To do so, upon receipt of a retransmission packet corresponding to the first lost packet, the suppression/resumption control unit 904 in the portable terminal 211b instructs the communication control unit 107 to transmit four same ACK packets for urging retransmission of the second lost packet. However, whether or not the transmitter apparatus 203 retransmits the second lost packet in response to the transmission of these four same ACK packets depends on the version or implementation of TCP in the transmitter apparatus 203. This being so, in some instances there is a possibility that the loss detection according to the first loss detection method is performed in the transmitter apparatus 203 and as a result CWIN becomes 1. In the case where the TCP implementation of the transmitter apparatus 203 is such that the second lost packet is retransmitted, the suppression/resumption control unit 904 in the portable terminal 211b completes the retransmission induction process by repeating the same process as the one performed for the first lost packet, for each of the other lost packets.

Note that the state of the transmitter apparatus 203, namely, whether CWIN is 1 as a result of the first loss detection method or larger than 1 as a result of repeatedly applying the second loss detection method, can be judged on the basis of whether or not the portable terminal 211b have received retransmission packets for all lost packets at the completion of this retransmission induction process.

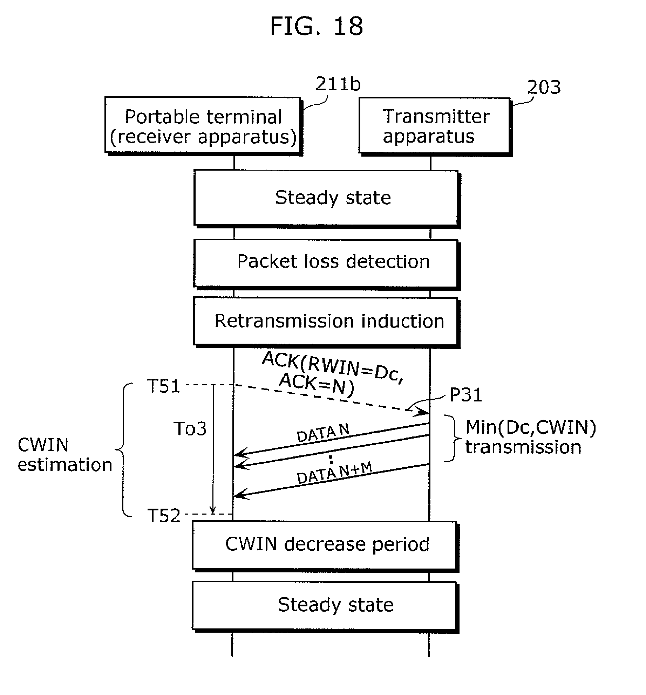

FIG. 18 is an explanatory view for explaining the CWIN estimation process of Step S305 in FIG. 15 in detail.

In the case where a packet loss occurs, the congestion window (CWIN) in the transmitter apparatus 203 is decreased by the time the retransmission induction process shown in FIG. 17 completes. However, to perform the power saving control in the steady state, the above second condition CWIN ≥ RWIN (Dc) needs to be met.

Since it is necessary to check if CWIN is not below cycle data size Dc (expected value), the suppression/resumption control unit 904 estimates CWIN in the transmitter apparatus 203 in the CWIN estimation process.

First, the suppression/resumption control unit 904 instructs to transmit an ACK packet for urging data transmission from the transmitter apparatus 203. As a result, the portable terminal 211b transmits ACK packet P31 to the transmitter apparatus 203. ACK packet P31 notifies cycle data size Dc as the receive window (RWIN). Moreover, an ACK number set in ACK packet P31 is "(maximum sequence number of data successfully received without loss until the retransmission induction process of Step S304) + 1" (e.g., N), according to normal TCP.

Upon receiving ACK packet P31, the transmitter apparatus 203 transmits packets of Min(Dc, CWIN) in size, that is, packets of a size corresponding to a smaller one of cycle data size Dc and CWIN.

Subsequently, when able to receive data of cycle data size Dc, the suppression/resumption control unit 904 detects that CWIN is equal to or larger than cycle data size Dc, that is, the above second condition is met. When unable to receive data of cycle data size Dc, the suppression/resumption control unit 904 sets the amount of data (the number of packets) received from time T51 at which ACK packet P31 is transmitted until time T52 at which predetermined time period To3 elapses, as CWIN estimate Dc'.

Here, the suppression/resumption control unit 904 utilizes packet loss detection or a timeout, for the judgment as to whether or not data of cycle data size Dc is able to be received. In detail, the suppression/resumption control unit 904 judges whether or not sequence numbers of data sequentially transmitted from the transmitter apparatus 203 and received by the communication I/F unit 108 in response to the ACK packet transmitted from the communication I/F unit 108 are consecutive. When judging that the sequence numbers are inconsecutive, that is, when judging that a packet loss occurs, the suppression/resumption control unit 904 judges that data of cycle data size Dc is not able to be received. As an alternative, the suppression/resumption control unit 904 judges whether or not a total size of data sequentially transmitted from the transmitter apparatus 203 and received by the communication I/F unit 108 in response to the ACK packet transmitted from the communication I/F unit 108 reaches cycle data size Dc designated by the ACK packet within a predetermined time period. When judging that cycle data size Dc is not reached, that is, when judging that a timeout occurs, the suppression/resumption control unit 904 judges that data of cycle data size Dc is not able to be received.

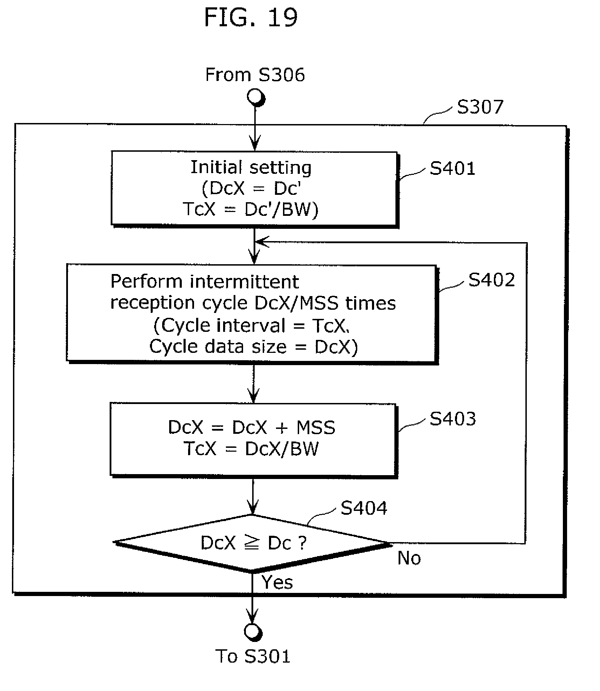

FIG. 19 is a flowchart showing the process in the CWIN decrease period of Step S307 in detail.

In the CWIN decrease period, CWIN < Dc. Accordingly, even when the portable terminal notifies the transmitter apparatus 203 of cycle data size Dc as the receive window, the transmitter apparatus 203 only transmits data of CWIN in size. As a result, the portable terminal can never power off the communication I/F unit 108, and thus cannot perform the power saving control.

In view of this, the suppression/resumption control unit 904 in the portable terminal 211b instructs the communication control unit 107 to notify CWIN estimate Dc' as the receive window, at the beginning of the CWIN decrease period. As a result, the portable terminal (receiver apparatus) 211b can receive data of the notified receive window in size, namely, data of estimate Dc' in size, and power off the communication I/F unit 108. In addition, the transmitter apparatus 203 performs control of "increasing CWIN by MSS upon receipt of CWIN/MSS ACK packets", in accordance with a congestion control procedure of TCP. This being so, the suppression/resumption control unit 904 in the portable terminal 211b increases the notified receive window size with the increase of CWIN. Thus, the suppression/resumption control unit 904 can eventually notify original cycle data size Dc as the receive window, with it being possible to continue the power saving control in the steady state.

In actual processing, the suppression/resumption control unit 904 first sets an initial value of cycle data size DcX in the CWIN decrease period to estimate Dc', and also sets an initial value of cycle interval TcX in the CWIN decrease period to Dc'/BW (Step S401). Note that, by setting TcX = DcX/BW, the rate of BW [Byte/sec] can be ensured even during the CWIN decrease period. This is equivalent to shortening cycle interval Tc in proportion to the decrease of the cycle data size from Dc to Dc'.

Next, the suppression/resumption control unit 904 performs an intermittent reception cycle based on above cycle data size DcX and cycle interval TcX, DcX/MSS times (Step S402). In detail, the portable terminal 211b performs DcX/MSS cycles of intermittent reception in which the portable terminal 211b transmits an ACK packet of RWIN = DcX, receives data of cycle data size DcX, and stops transmission of a next ACK packet until cycle interval TcX elapses from the transmission of the ACK packet. By repeating such intermittent reception, the portable terminal 211b can power off the communication I/F unit 108 during a period from the reception of data of cycle data size DcX to the transmission of the next ACK packet, which allows for the power saving control. Moreover, such repetition of intermittent reception causes the transmitter apparatus 203 to receive DcX/MSS ACK packets, as a result of which CWIN is increased by MSS.

Therefore, performing DcX/MSS intermittent reception cycles enables the power saving control from a subsequent cycle to be performed with cycle data size DcX that is increased by MSS.

This being so, the suppression/resumption control unit 904 increases cycle data size DcX by MSS, and updates cycle interval TcX in accordance with the increase of cycle data size DcX (Step S403). The suppression/resumption control unit 904 judges whether or not cycle data size DcX becomes equal to or larger than original cycle data size Dc prior to the occurrence of the packet loss, as a result of the increase (Step S404).

When judging that cycle data size DcX is equal to or larger than original cycle data size Dc (Step S404: Yes), the suppression/resumption control unit 904 completes the process in the CWIN decrease period, and executes the steady-state process of Step S301 shown in FIG. 15. When judging that cycle data size DcX is still smaller than original cycle data size Dc (Step S404: No), the suppression/resumption control unit 904 performs the process from Step S402, that is, the process of performing intermittent reception DcX/MSS times, using updated cycle data size DcX and cycle interval TcX.

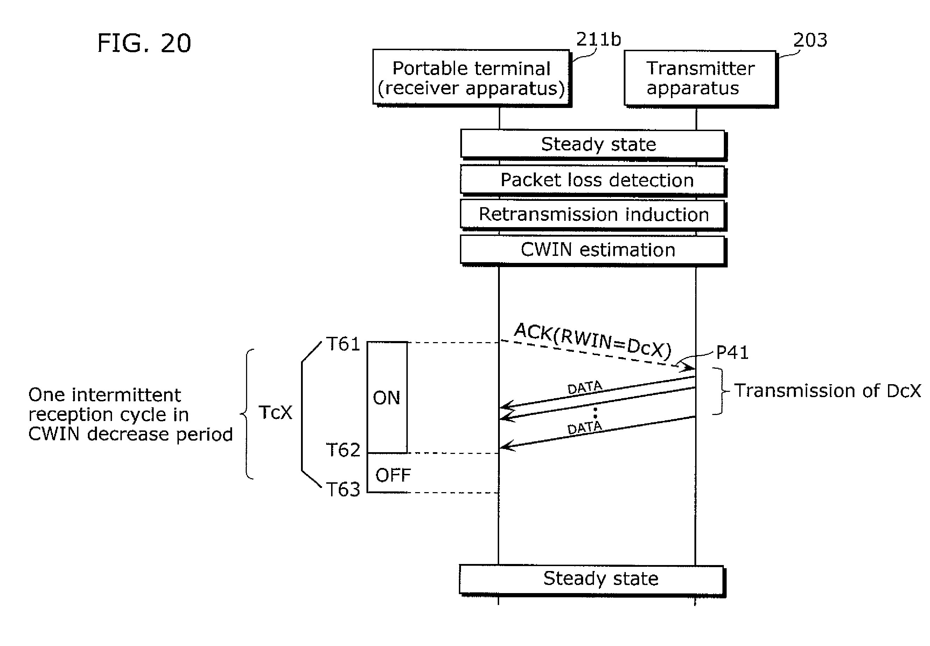

FIG. 20 shows one cycle of intermittent reception performed in the CWIN decrease period in Step S307.

In the CWIN decrease period, the portable terminal 211b transmits ACK packet P41 of RWIN = DcX at time T61, for example. As a result, the portable terminal 211b receives data of cycle data size DcX in the CWIN decrease period, from the transmitter apparatus 203 at time T62. The portable terminal 211b stops transmission of a next ACK packet until cycle interval TcX in the CWIN decrease period elapses from the transmission of ACK packet P41, that is, until time T63. Further, the portable terminal 211b performs such power saving control that powers on the communication I/F unit 108 from time T61 to time T62 and powers off the communication I/F unit 108 from time T62 to time T63. The portable terminal 211b executes this process of time T61 to time T63, as one cycle of intermittent reception.

Note that the suppression/resumption control unit 904 can also perform the process of Steps S301 to S308 shown in FIG. 15, in the case of detecting a packet loss during the process in the CWIN decrease period of Step S307.

Moreover, though the suppression/resumption control unit 904 transmits only one ACK packet in one cycle as shown in FIG. 20, the suppression/resumption control unit 904 may instead transmit a plurality of ACK packets. That is, when the number of transmitted ACK packets is 1, DcX/MSS intermittent reception cycles need to be performed to increase CWIN. However, when a plurality of (e.g., N) ACK packets with different ACK numbers are transmitted in one cycle, the number of intermittent reception cycles can be reduced to DcX/(MSS × N). Furthermore, when N = DcX/MSS, the number of intermittent reception cycles can be reduced to 1.

There is the case where bandwidth BW required by the communication application program cannot be sufficiently ensured merely by performing the above process. In more detail, bandwidth BW is ensured during the process in the CWIN decrease period of Step S307 and the steady-state process of Step S301, but is not ensured during the packet loss detection process of Step S302, the retransmission induction process of Step S304, and the CWIN estimation process of Step S305 because the portable terminal 211b waits for a timeout.

The requirement of bandwidth BW by the communication application program means that data equivalent to continuous communication at bandwidth BW from the start of the TCP connection need be received. The above process does not fulfill this need. This problem can be avoided by executing, for example, the following three control methods until the condition "(total amount of data received from TCP connection start) = (elapsed time from communication start) × BW" is met. In the first control method, a bandwidth equal to or larger than bandwidth BW is temporarily ensured by, in the process in the CWIN decrease period of Step S307, setting cycle interval TcX shorter than the above process. In the second control method, a bandwidth equal to or larger than bandwidth BW is temporarily ensured by, in the steady-state process of Step S301 after the CWIN decrease period ends, shortening cycle interval Tc or increasing cycle data size Dc. Once the above condition has been met, cycle interval Tc and cycle data size Dc can be returned to the original values prior to the packet loss occurrence. In the third control method, the transmission suppression control (intermittent reception) is temporarily suspended. For instance, the suppression/resumption control unit 904 removes the suppression (stopping) of normal ACK packet transmission during a window recovery period from when CWIN becomes smaller than cycle data size Dc to when CWIN becomes equal to or larger than cycle data size Dc, to cause the communication I/F unit 108 to transmit an ACK packet each time it receives data. Here, CWIN can be quickly recovered to equal to or larger than cycle data size Dc by transmitting, instead of one ACK packet, a plurality of (e.g., N) packets with different ACK numbers, in the same way as above.

The above process is based on the premise that an intermittent reception cycle is successful in the steady state. However, because the transmitter apparatus 203 transmits data of cycle data size Dc in a burst state in the above process, for example when a size of a buffer provided in a relay apparatus for storing transferred packets is smaller than cycle data size Dc, there is a possibility that a packet loss inevitably occurs and makes the steady-state process impossible. This being so, in a circumstance where the process in the steady state is unsuccessful, it is necessary to perform such a steady-state process in which the cycle data size is D" smaller than Dc and the cycle interval is D"/BW smaller than Tc. Note that, since a network status and the like change dynamically, more suitable parameters (that achieve as high power saving effect as possible while fulfilling the requirement of the communication application program) may be searched by dynamically changing the cycle interval and the cycle data size in accordance with a packet loss occurrence. A widely-used search algorithm may be employed as an algorithm for searching optimum parameter values while dynamically changing the parameters. Since this algorithm is not an essential feature of the present invention, its detailed explanation has been omitted here.

The above describes the case where the CWIN estimation process of Step S305 is performed for judging whether or not to perform the process in the CWIN decrease period of Step S307 and for determining initial value Dc' of the cycle data size in the CWIN decrease period, as shown in FIG. 15. However, the CWIN estimation process is intended for higher efficiency, that is, for keeping a transfer rate from dropping more than necessary, and is not necessarily an essential process of the present invention. For example, in such a case where a packet loss occurs only once, CWIN is at least 1/2 of the value prior to the packet loss occurrence. Therefore, the process in the CWIN decrease period may be performed without exception, with the initial value of the cycle data size being set to 1/2 of cycle data size Dc.

By performing the above process, the power saving control by intermittent reception can be continued while maintaining the communication bandwidth, even when a packet loss occurs.

### (Fourth Embodiment)

The following describes a communication apparatus in a fourth embodiment of the present invention. While the communication apparatuses in the first to third embodiments are at the receiving end of flow control, the communication apparatus in this embodiment relays communication that is subject to flow control. That is, the communication apparatus in this embodiment is configured as a relay communication apparatus, where the control which is executed for TCP communication of the portable terminal 211 itself in the first embodiment is executed for relayed TCP communication in this embodiment. Since the principle of intermittent reception and power saving control in this embodiment is the same as that of the first embodiment, the following mainly describes the difference of this embodiment from the first embodiment.

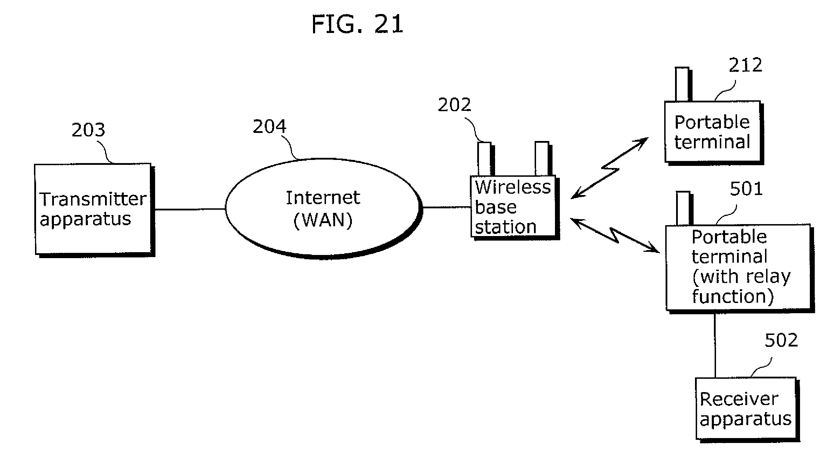

FIG. 21 is a block diagram showing an example of a communication system including the communication apparatus in this embodiment. Note that components in this embodiment which have the same functions and structures as those in the first embodiment have been given the same reference numerals as in the first embodiment and their detailed explanation has been omitted.

The communication system to which this embodiment relates includes the portable terminal 212, a portable terminal 501, a receiver apparatus 502, the wireless base station 202, the Internet 204, and the transmitter apparatus 203.

The portable terminal 501 and the receiver apparatus 502 in this embodiment perform, in a combined state, the same processing operation as the portable terminal 211 in the first embodiment, to the transmitter apparatus 203 via the Internet 204 and the wireless base station 202.

Moreover, the portable terminal 501 relays communication between the transmitter apparatus 203 and the receiver apparatus 502.

That is, the difference between the communication system in this embodiment and the communication system in the first embodiment shown in FIG. 3 lies in the following. In the first embodiment, the portable terminal 212 which is the communication apparatus of the present invention operates as a receiver apparatus. In this embodiment, on the other hand, the portable terminal 501 which is the communication apparatus of the present invention operates as a relay apparatus, and another receiver apparatus 502 is connected to this portable terminal 501.

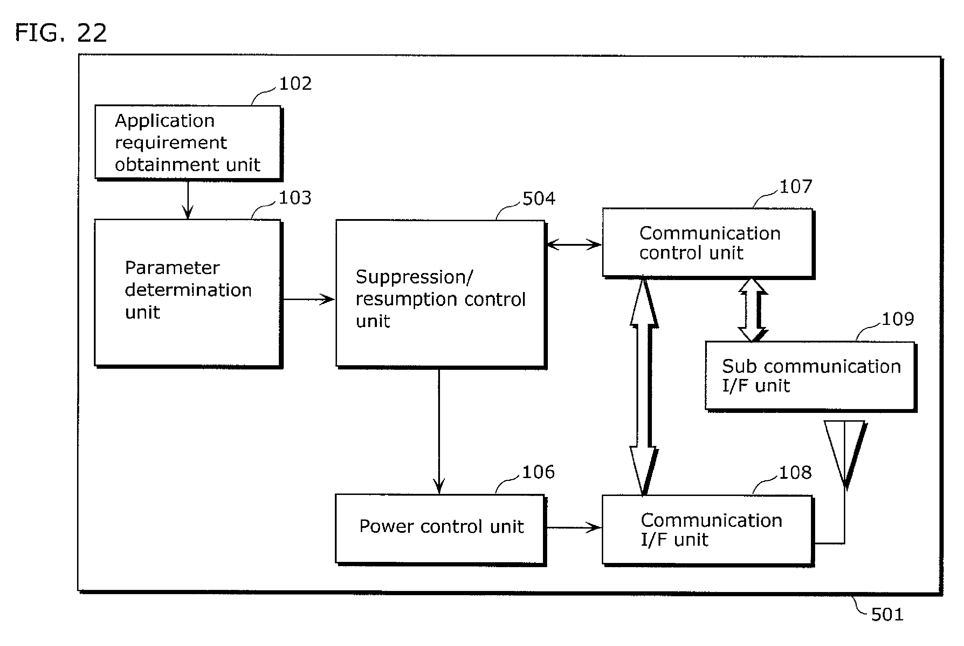

FIG. 22 is a block diagram showing a specific structure of the portable terminal 501 in this embodiment.

The portable terminal 501 includes the application requirement obtainment unit 102, the parameter determination unit 103, a suppression/resumption control unit 504, the power control unit 106, the communication control unit 107, the communication I/F unit 108, and a sub communication I/F unit 109.

In other words, the portable terminal 501 in this embodiment includes the sub communication I/F unit 109 which is not included in the portable terminal 211 in the first embodiment, and also does not include the communication application unit 101 included in the portable terminal 211. In addition, the portable terminal 501 in this embodiment includes the suppression/resumption control unit 504 instead of the suppression/resumption control unit 104 in the portable terminal 211 in the first embodiment.

The sub communication I/F unit 109 communicates with the receiver apparatus 502 through a wired LAN such as Ethernet (registered trademark), a wireless LAN, Universal Serial Bus (USB), and the like. The sub communication I/F unit 109 may also use an arbitrary communication method other than these.

The suppression/resumption control unit 504 determines a timing of suppressing or resuming data transmission from the transmitter apparatus 203 according to intermittent reception parameters received in intermittent reception parameter registration notification, as with the suppression/resumption control unit 104 in the first embodiment. The suppression/resumption control unit 504 issues three requests (described later) relating to ACK packet transfer to the communication control unit 107, to suppress or resume data transmission from the transmitter apparatus 203 at the determined timing.

In the first embodiment, because the communication control unit 107 performs TCP processing, the suppression/resumption control unit 104 issues, to the communication control unit 107, a request to or not to transmit an ACK packet, a request to cause an ACK packet to have predetermined contents, and a request regarding a transmission timing of an ACK packet. In this embodiment, because the communication control unit 107 transfers packets transmitted from the transmitter apparatus 203 and the receiver apparatus 502, the suppression/resumption control unit 504 issues, to the communication control unit 107, a request to or not to transfer an ACK packet transmitted from the receiver apparatus 502, a request to cause an ACK packet to have predetermined contents so that a source address is an IP address of the receiver apparatus 502, and a request regarding a transfer timing of an ACK packet.

In detail, the communication control unit 107 receives an ACK normal transfer suppression request, an ACK normal transfer resumption request, and an ACK single transmission request from the suppression/resumption control unit 504, and responds to these requests.

The ACK normal transfer suppression request is a request to suppress normal ACK packet transfer. Upon receiving this request, the communication control unit 107 stops transferring an ACK packet transmitted from the receiver apparatus 502.

The ACK normal transfer resumption request is a request to cancel the ACK normal transfer suppression request. Upon receiving this request, the communication control unit 107 resumes normal processing (transfer of an ACK packet transmitted from the receiver apparatus 502).

The ACK single transmission request is a request to transmit an ACK packet whose contents are designated by the suppression/resumption control unit 504, at a timing designated by the suppression/resumption control unit 504. Upon receiving this request, the communication control unit 107 transmits an ACK packet of the designated contents at the designated timing, irrespective of a timing at which the receiver apparatus 502 transmits an ACK packet. Note that this request is valid (transmissible) even in a state where the ACK normal transfer suppression request is received. Moreover, the suppression/resumption control unit 504 instructs the communication control unit 107 to use the IP address of the receiver apparatus 502 as a source IP address of this ACK packet.

The following describes a process up to the entry into an intermittent reception preparatory state in this embodiment. The only difference between the process in this embodiment and the process in the first embodiment lies in a process relating to intermittent reception parameters. Therefore, the process relating to intermittent reception parameters is described below.

In the first embodiment, the application requirement obtainment unit 102 receives the performance-related requirement (performance parameter) from the communication application program, and manages the requirement in the performance parameter management table. In this embodiment, however, since the communication application program for performing communication resides in the receiver apparatus 502, the information (performance parameter) about the required performance is held in the receiver apparatus 502. This being so, the application requirement obtainment unit 102 in this embodiment obtains the performance parameter according to the following process.

For example, the application requirement obtainment unit 102 obtains the information (performance parameter) about the communication application program from the receiver apparatus 502 via the sub communication I/F unit 109. When doing so, the application requirement obtainment unit 102 also obtains information for identifying TCP communication that is to be launched subsequently. As an example, the application requirement obtainment unit 102 obtains IP address information of the transmitter apparatus 203, information of a port number used by the communication application program, or ID information for identifying TCP communication. In the case of obtaining the ID information, the ID information is contained in, for example, an IP header option field or a TCP header option field in subsequently launched TCP communication so as to enable the portable terminal 501 to recognize a TCP connection.

In the case of being unable to obtain the performance parameter from the receiver apparatus 502, the application requirement obtainment unit 102 uses a preset parameter as the performance parameter. Since there is a possibility that, with the preset parameter, the performance requirement of the communication application program is not met or the communication I/F unit 108 consumes power more than necessary, the preset parameter may be changed from a user interface (UI) of the portable terminal 501 or the like.

The following describes a process in the intermittent reception preparatory state in this embodiment. First, a TCP connection is established between the receiver apparatus 502 and the transmitter apparatus 203. The communication control unit 107 in the portable terminal 501 detects that the TCP connection which is subject to control starts, when transferring a TCP packet (e.g., SYN packet) which occurs upon connection start. Once the TCP connection has been established, TCP packets are transmitted/received between the receiver apparatus 502 and the transmitter apparatus 203 via the communication I/F unit 108, the communication control unit 107, and the sub communication I/F unit 109 in the portable terminal 501.

The suppression/resumption control unit 504 subsequently monitors TCP packets transferred by the communication control unit 107, and waits for a bandwidth (transfer bandwidth) of transferred data to reach the bandwidth (set bandwidth BW = Dc/Tc) set in the intermittent reception parameter management table. For instance, the suppression/resumption control unit 504 calculates total data size TID by, each time cycle interval Tc elapses, adding up a data size of TCP packets received during cycle interval Tc, in the same way as the suppression/resumption control unit 104 in the first embodiment. When the condition "TID/Tc ≥ BW" is continuously met at least a predetermined number of times, the suppression/resumption control unit 504 judges that the transfer bandwidth reaches set bandwidth BW.

When the transfer bandwidth reaches set bandwidth BW, the suppression/resumption control unit 504 issues an ACK normal transfer suppression request to the communication control unit 107, to suppress data transmission from the transmitter apparatus 203. Note that this issuance corresponds to the first process of intermittent reception. When doing so, the suppression/resumption control unit 504 holds information about a last ACK packet transmitted from the communication control unit 107, namely, an ACK number (LAST_ACKNO) and a receive window (LAST_RWIN). Upon receiving the ACK normal transfer suppression request from the suppression/resumption control unit 504, the communication control unit 107 stops transferring an ACK packet transmitted from the receiver apparatus 502.

Meanwhile, even when no more ACK packet is transmitted from the receiver apparatus 502, the transmitter apparatus 203 continues data transmission until the transmissible data size (uwnd) managed in the transmitter apparatus 203 becomes 0. When uwnd becomes 0, the transmitter apparatus 203 stops data transmission. As a result, the transmitter apparatus 203 enters a transmission suppression period.

After the issuance of the ACK normal transfer suppression request, the suppression/resumption control unit 504 continues monitoring TCP packets, and waits for the transmissible data size (uwnd) in the transmitter apparatus 203 to become 0. In detail, the suppression/resumption control unit 504 references a sequence number and a data size of a received TCP packet, and waits for ((sequence number) + (data size)) to reach (LAST_ACKNO + LAST_RWIN).

When judging that uwnd becomes 0, the suppression/resumption control unit 504 issues a power off request to the power control unit 106. Upon receiving the power off request, the power control unit 106 powers off the communication I/F unit 108.

After issuing the power off request to the power control unit 106, the suppression/resumption control unit 504 waits for a predetermined time period. This predetermined time period may be equal to or different from cycle interval Tc. Since the transmitter apparatus 203 has already entered the transmission suppression period, no data transmission is performed while the communication I/F unit 108 is powered off.

When the predetermined time period elapses, the suppression/resumption control unit 504 issues a power on request to the power control unit 106. The suppression/resumption control unit 504 also judges that the intermittent reception preparatory state has completed, and shifts to a steady state. Upon receiving the power on request, the power control unit 106 powers on the communication I/F unit 108.

The following describes a process in the steady state in this embodiment.

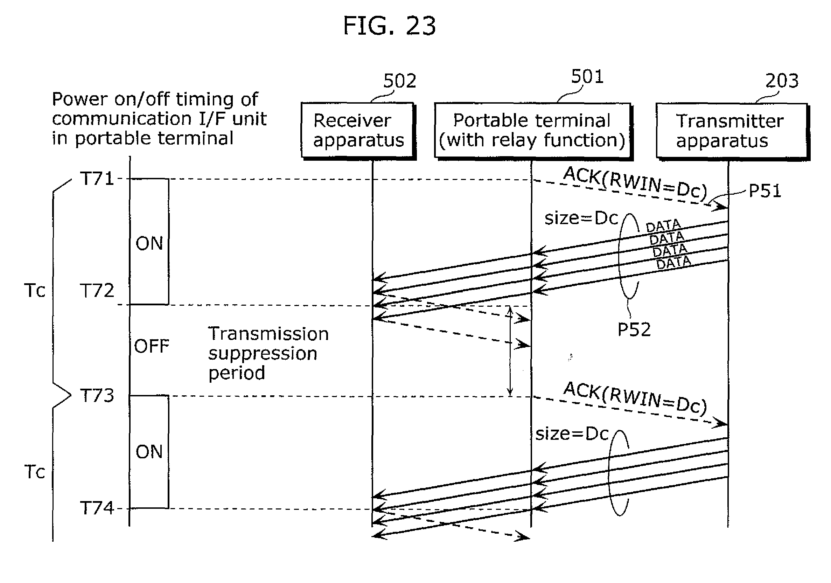

FIG. 23 is a sequence diagram showing an operation of the receiver apparatus 502, the portable terminal 501, and the transmitter apparatus 203 in the steady state in this embodiment.

An operation for one cycle in the steady state can be divided into three steps that are a transmission resumption process, a transmission suppression period start process, and a transmission suppression period end process.

In the transmission resumption process (Step 1), the suppression/resumption control unit 504 issues an ACK single transmission request to the communication control unit 107, to resume data transmission from the transmitter apparatus 203. When doing so, the suppression/resumption control unit 504 designates cycle data size Dc included in the intermittent reception parameter management table, as a receive window (RWIN) in an ACK packet. Upon receiving the ACK single transmission request at time T71, the communication control unit 107 transmits ACK packet P51 of RWIN = Dc via the communication I/F unit 108. Here, since the suppression/resumption control unit 504 holds a maximum one of ACK numbers of ACK packets received from the receiver apparatus 502 but not transferred yet, the suppression/resumption control unit 504 sets this stored ACK number as an ACK number of ACK packet P51. Note that, to enable the transmitter apparatus 203 to receive ACK packet P51 as a valid packet, the IP address of the receiver apparatus 502 is set as a source IP address and the port number of the TCP connection is set as a port number in ACK packet 51.

Having received the ACK packet (RWIN = Dc) from the portable terminal 501, the transmitter apparatus 203 enters a data transmissible state after the end of the intermittent reception preparatory state or the transmission suppression period. As a result, the transmitter apparatus 203 resumes transmission of TCP packets (data P52) to the receiver apparatus 502.

Because the suppression/resumption control unit 504 in the portable terminal 501 issued the ACK normal transfer suppression request in the intermittent reception preparatory state, transfer of an ACK packet transmitted from the receiver apparatus 502 has already been suppressed. Therefore, even when the sub communication I/F unit 109 receives an ACK packet from the receiver apparatus 502 and passes the ACK packet to the communication control unit 107, the communication control unit 107 does not transmit the ACK packet to the transmitter apparatus 203 via the communication I/F unit 108. Accordingly, the size of data P52 which the transmitter apparatus 203 can transmit at one time is limited to cycle data size Dc.

In the transmission suppression period start process (Step 2), the suppression/resumption control unit 504 monitors TCP packets transferred by the communication control unit 107 from time T71 onward, to continue checking whether or not a size of data transferred from time T71 reaches cycle data size Dc, that is, whether or not the transmissible data size (uwnd) in the transmitter apparatus 203 becomes 0. Here, the suppression/resumption control unit 504 performs this check using the ACK number and receive window (RWIN = Dc) of the last transmitted ACK packet, in the same way as the check performed in the intermittent reception preparatory state. When the size of data transferred from time T71 reaches cycle data size Dc, i.e., at time T72, the suppression/resumption control unit 504 judges that a transmission suppression period starts, and issues a power off request to the power control unit 106. Upon receiving the power off request, the power control unit 106 powers off the communication I/F unit 108.

In the transmission suppression period end process (Step 3), the portable terminal 501 in this embodiment of the present invention judges time T73 at which cycle interval Tc elapses from time T71 which is set as a start point, as an end point of the transmission suppression period. In detail, the suppression/resumption control unit 504 detects time T73 using a timer, and issues a power on request to the power control unit 106. In response to the power on request, the power control unit 106 powers on the communication I/F unit 108 at time T73.

In the steady state, the portable terminal 501 repeatedly executes the above three steps as one cycle.

As described above, in this embodiment, the same intermittent reception control as the power saving method in the first embodiment can be applied to a communication apparatus that relays TCP communication, and the same power saving effect as in the first embodiment can be attained. Likewise, the improvement of the power saving effect in the second embodiment and the operation at the time of a packet loss in the third embodiment can be applied to a communication apparatus that relays TCP communication, though their explanation has been omitted here.

### (Fifth Embodiment)

The following describes a communication apparatus in a fifth embodiment of the present invention with reference to drawings. In the first to fourth embodiments, the communication apparatus according to the present invention is applied to a receiver apparatus. In this embodiment, the communication apparatus according to the present invention is applied to a transmitter apparatus, to improve the power saving effect of the transmitter apparatus. Moreover, the transmitter apparatus in this embodiment notifies the receiver apparatus that the transmitter apparatus performs an intermittent transmission process, thereby enhancing the power saving effect more reliably.

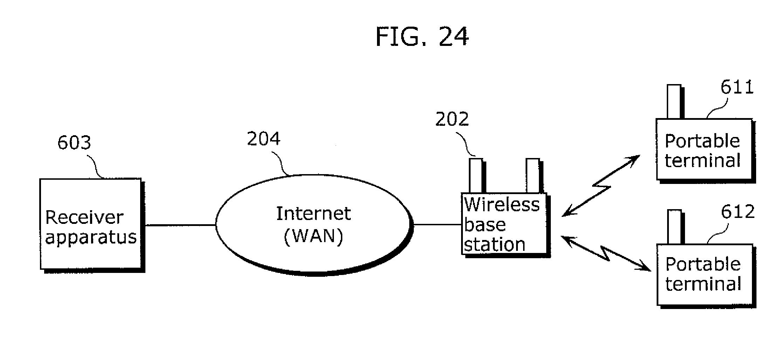

FIG. 24 is a block diagram showing an example of a communication system including the communication apparatus in this embodiment.

The communication system to which this embodiment relates includes portable terminals 611 and 612 which are communication apparatuses, the wireless base station 202, the Internet 204, and a receiver apparatus 603.

Each of the portable terminals 611 and 612 is a transmitter apparatus for achieving further improvements in both communication quality and power saving effect, and transmits data to the receiver apparatus 603 via the wireless base station 202 and the Internet 204. The receiver apparatus 603 receives data transmitted from each of the portable terminals 611 and 612 via the Internet 204 and the wireless base station 202.

The following describes the portable terminal 611 in this embodiment in more detail.

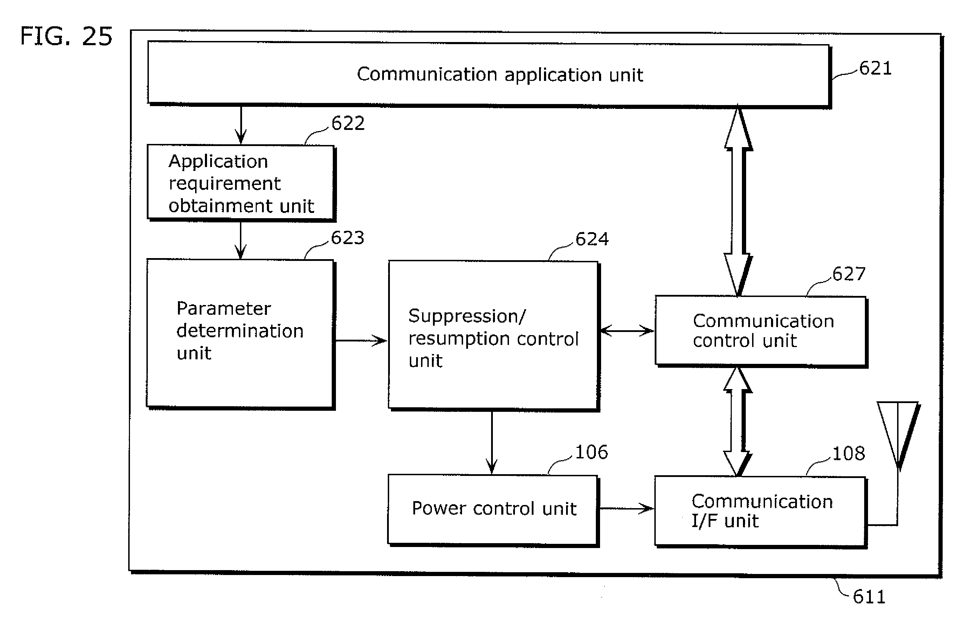

FIG. 25 is a block diagram showing an example of the portable terminal 611 in this embodiment.

The portable terminal 611 includes a communication application unit 621, an application requirement obtainment unit 622, a parameter determination unit 623, a suppression/resumption control unit 624, the power control unit 106, a communication control unit 627, and the communication I/F unit 108. Even when receiving an ACK packet from the receiver apparatus 603, this portable terminal 611 stops data packet transmission for a predetermined time period (the above transmission suppression period) without immediately transmitting data packets (transmission data) in response to the ACK packet, and transmits data packets after the elapse of the predetermined time period. In other words, the portable terminal 611 performs intermittent data transmission (intermittent transmission) at an interval desired by the portable terminal 611, by repeating suppression and resumption of data transmission through the use of a mechanism of flow control. By doing so, the portable terminal 611 can save power supplied to the communication I/F unit 108 during the predetermined time period, with it being possible to improve the power saving effect.

The above components included in the portable terminal 611 in this embodiment basically have functions for data transmission corresponding to the functions for data reception of the components included in the portable terminal 211 in the first embodiment. Therefore, among the functions of the components included in the portable terminal 611 in this embodiment, those corresponding to the functions of the components included in the portable terminal 211 in the first embodiment are briefly explained below, and a detailed explanation is given only for those not simply corresponding to the functions of the components in the first embodiment.

Note that in this embodiment the suppression/resumption control unit 624 is configured as a suppression unit and a switching control unit.

The communication application unit 621 executes a communication application program. When starting the communication application program, the communication application unit 621 issues start notification to the application requirement obtainment unit 622, and performs data transmission/reception with the receiver apparatus 603. When ending the communication application program, the communication application unit 621 issues end notification to the application requirement obtainment unit 622. Note that the number of communication application programs simultaneously running on the portable terminal 611 is limited to one in this embodiment for ease of explanation.

The application requirement obtainment unit 622 obtains a "performance parameter" of data communication between the communication application unit 621 and the receiver apparatus 603. When receiving the start notification or the end notification from the communication application unit 621, the application requirement obtainment unit 622 simultaneously obtains the performance parameter from the communication application unit 621, and issues performance parameter registration notification or performance parameter deletion notification to the parameter determination unit 623.

Note here that the application requirement obtainment unit 622 may determine performance parameters such as bandwidth BW and delay time DT, on the basis of a type of transmitted data (application type), a file size, a buffer size, and the like. As an example, when the application type is MPEG, the application requirement obtainment unit 622 determines such a bandwidth that is necessary for preventing distorted images, as a performance parameter.

The parameter determination unit 623 determines parameters for intermittent data transmission. The parameters for intermittent data transmission are a cycle interval and a cycle data size of intermittent transmission, as with the intermittent reception in the first embodiment. These two parameters are also collectively referred to as "intermittent transmission parameters". Upon receiving the performance parameter registration notification or the performance parameter deletion notification from the application requirement obtainment unit 622, the parameter determination unit 623 determines the intermittent transmission parameters on the basis of the performance parameter from the application requirement obtainment unit 622, and issues intermittent transmission parameter registration notification or intermittent transmission parameter deletion notification to the suppression/resumption control unit 624.

The suppression/resumption control unit 624 controls the communication control unit 627 so that data transmission to the receiver apparatus 603 is performed intermittently. After receiving an ACK packet in response to transmitted data, the suppression/resumption control unit 624 creates a time period during which no data transmission to the receiver apparatus 603 is performed. This time period is referred to as a transmission suppression period. The suppression/resumption control unit 624 also instructs the power control unit 106 to power off the communication I/F unit 108 during the transmission suppression period created as a result of this control.

In more detail, the suppression/resumption control unit 624 determines a timing of suppressing or resuming data transmission to the receiver apparatus 603, according to the intermittent transmission parameters received in the intermittent transmission parameter registration notification. The suppression/resumption control unit 624 also issues a power on request or a power off request to the power control unit 106 in conjunction with the transmission suppression period. The suppression/resumption control unit 624 further monitors TCP packets transmitted/received by the communication control unit 627, and uses a monitoring result for the above timing determination.

The power control unit 106 powers on or off the communication I/F unit 108 according to the power on request or the power off request from the suppression/resumption control unit 624.

The communication control unit 627, in addition to performing normal TCP processing, changes a data packet transmission timing and packet contents when requested by the suppression/resumption control unit 624. In detail, the communication control unit 627 receives a data packet normal transmission suppression request, a data packet normal transmission resumption request, and a designated size data transmission request from the suppression/resumption control unit 624, and responds to these requests.

The data packet normal transmission suppression request is a request to suppress normal data packet transmission. Upon receiving this request, the communication control unit 627 stops data packet transmission unless it receives the designated size data transmission request or the data packet normal transmission resumption request.

The data packet normal transmission resumption request is a request to remove the suppression of data packet transmission which has been stopped by the data packet normal transmission suppression request, and transmit data packets according to normal TCP.

The designated size data transmission request is a request to transmit data of a designated size according to TCP, and is valid in a state where the data packet normal transmission suppression request is received. The communication control unit 627 transmits data packets of the designated size via the communication I/F unit 108, and stops data packet transmission upon judging that an ACK packet corresponding to the transmitted data packets is received.

The following describes an operation of the portable terminal 611 from when the portable terminal 611 starts communication from an initial state to when the portable terminal 611 ends the communication.

In the initial state, the portable terminal 611 registers an intermittent transmission parameter management table on the basis of performance parameters in the same manner as the intermittent reception parameter registration in the first embodiment, and starts processing according to normal TCP.

Next, the portable terminal 611 performs a process in an intermittent transmission preparatory state. In this preparatory state, the portable terminal 611 first notifies the receiver apparatus 603 that the portable terminal 611 performs intermittent transmission. In detail, upon starting TCP communication, to notify the receiver apparatus 603 that the portable terminal 611 performs the intermittent transmission process, the portable terminal 611 sets an intermittent transmission/reception valid flag in an option field of a TCP header to valid, and performs three-way handshaking. This allows the intermittent reception process in the receiver apparatus 603 to be suppressed, with it being possible to enhance the power saving effect more reliably. That is, in the case where the receiver apparatus 603 is a communication apparatus capable of performing intermittent reception like the portable terminal 211 in the first embodiment, when the intermittent reception by the receiver apparatus 603 and the intermittent transmission by the portable terminal 611 are performed at the same time, the communication (intermittent transmission and intermittent reception) between the portable terminal 611 and the receiver apparatus 603 may not be able to be carried out properly. In this embodiment, however, the portable terminal 611 notifies the receiver apparatus 603 that the portable terminal 611 performs intermittent transmission to thereby suppress intermittent reception by the receiver apparatus 603 as mentioned above, so that the intermittent transmission to the receiver apparatus 603 by the portable terminal 611 can be carried out properly. In addition to such notification of intermittent transmission, the portable terminal 611 repeatedly performs data packet transmission so that a bandwidth (transmission bandwidth) of data packets (transmitted data) reaches bandwidth BW set in the intermittent transmission parameter management table and data packet transmission at this bandwidth continues at least a predetermined number of times, as in the first embodiment. After this, the suppression/resumption control unit 624 in the portable terminal 611 issues a data packet normal transmission suppression request to the communication control unit 627. Upon receiving the data packet normal transmission suppression request from the suppression/resumption control unit 624, the communication control unit 627, though continuing ACK packet reception, stops transmitting a data packet even when an ACK packet is received.

The following describes a process in a steady state in this embodiment.

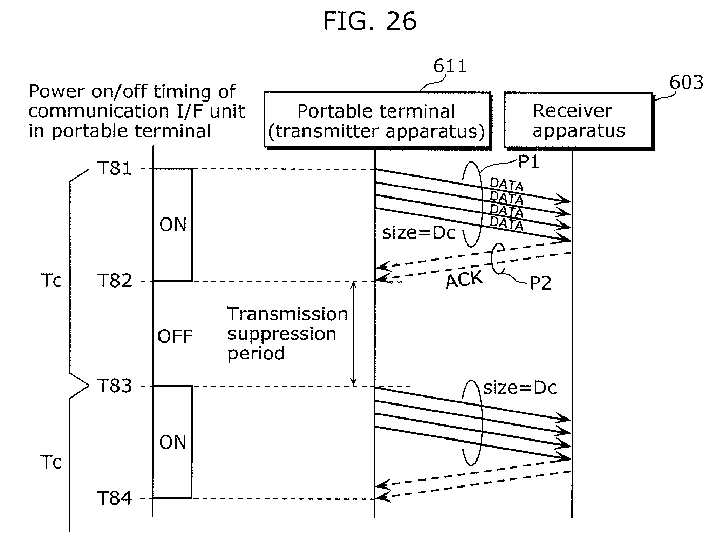

FIG. 26 is a sequence diagram showing an operation of the portable terminal 611 and the receiver apparatus 603 in the steady state in this embodiment.

An operation for one cycle in the steady state can be divided into three steps that are a transmission resumption process, a transmission suppression period start process, and a transmission suppression period end process.

In the transmission resumption process (Step 1), the suppression/resumption control unit 624 issues a designated size data transmission request to the communication control unit 627, to transmit data of a designated size to the receiver apparatus 603. When doing so, the suppression/resumption control unit 624 designates cycle data size Dc included in the intermittent transmission parameter management table as a size of data to be transmitted during cycle interval Tc (designated size), and requests the communication control unit 627 to transmit data of cycle data size Dc. Upon receiving the designated size data transmission request at time T81, the communication control unit 627 transmits data packets P1 of cycle data size Dc via the communication I/F unit 108.

In the transmission suppression period start process (Step 2), the suppression/resumption control unit 624 monitors TCP packets received by the communication control unit 627 from time T81 onward, and holds information of a last data packet transmitted from the communication control unit 627, namely, a sequence number (LAST_SEQ) and a transmitted data size (LAST_SIZE).

The suppression/resumption control unit 624 keeps checking whether or not a size of data transmitted from time T81 reaches cycle data size Dc and an ACK packet in response to the last data packet is received. In detail, each time ACK packet P2 is received, the suppression/resumption control unit 624 references an ACK number of received ACK packet P2, and checks whether or not the ACK number is (LAST_SEQ + LAST_SIZE).

Here, there is the case where not all ACK packets in response to transmitted data packets arrive at the portable terminal 611. This takes place due to the following factors.

(1) In the case where the receiver apparatus 603 implements the delayed ACK algorithm, the receiver apparatus 603 does not transmit one ACK packet in response to one data packet, but transmits one ACK packet in response to a plurality of data packets.

(2) A packet loss occurs on a transmission path, on the receiver apparatus 603. or on the portable terminal 611.

In view of this, the portable terminal 611 may be provided with an RTT estimation unit that estimates an RTT and, in the case of not receiving all ACK packets in response to transmitted data packets, wait for an ACK packet to arrive during the RTT after transmission of a last data packet. When not receiving all ACK packets within this RTT, the portable terminal 611 ends the ACK packet wait, and retransmits a data packet corresponding to the unreceived ACK packet at the beginning of data transmission in a next cycle.

When waiting for an ACK packet during the RTT but not receiving all ACK packets, there is also a possibility that a packet loss occurs, so that the portable terminal 611 may retransmit a data packet corresponding to the unreceived ACK packet or a last transmitted data packet and once again wait for the ACK packet.

Moreover, when the number of packets for cancelling a delayed ACK timer in the receiver apparatus 603 is known, the portable terminal 611 may perform data packet division so that the number of data packets is an integral multiple of the number of packets for cancelling the delayed ACK timer. When the number of packets for cancelling the delayed ACK timer is unknown, on the other hand, the portable terminal 611 may estimate the number of packets for cancelling the delayed ACK timer on the basis of an ACK packet reception timing during communication, in advance.

At time T82 when all ACK packets corresponding to the data packets transmitted from time T81 arrive or when judging that no more ACK packets arrive, the suppression/resumption control unit 624 judges that a transmission suppression period starts, and issues a power off request to the power control unit 106. Upon receiving the power off request, the power control unit 106 powers off the communication I/F unit 108.

In the transmission suppression period end process (Step 3), the portable terminal 611 in this embodiment of the present invention judges time T83 at which cycle interval Tc elapses from time T81 which is set as a start point, as an end point of the transmission suppression period. In detail, the suppression/resumption control unit 624 detects time T83 using a timer, and issues a power on request to the power control unit 106. In response to the power on request, the power control unit 106 powers on the communication I/F unit 108 at time T83.

In the steady state, the portable terminal 611 repeatedly executes the above three steps as one cycle.

When ending the communication application program, the portable terminal 611 terminates the TCP connection with the receiver apparatus 603, as in the first embodiment. In addition, the application requirement obtainment unit 622 and the parameter determination unit 623 in the portable terminal 611 respectively clear the contents of the performance parameter management table and the contents of the intermittent transmission parameter management table. Further, the suppression/resumption control unit 624 stops monitoring TCP packets transmitted/received by the communication control unit 627, and instructs the power control unit 106 to power off the communication I/F unit 108.

As a result of the above process, the portable terminal 611 returns to the initial state.

The following describes processing performed in the portable terminal 611 for the above intermittent transmission process, using a flowchart.

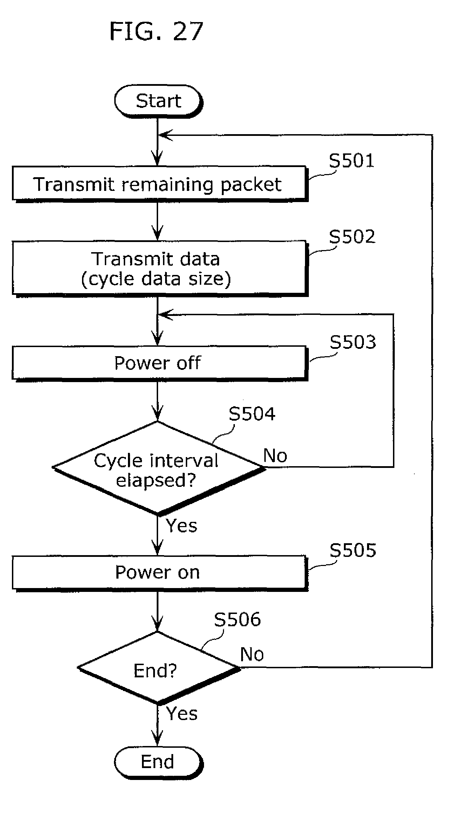

FIG. 27 is a flowchart showing an operation of the portable terminal 611 in the steady state in this embodiment.

First, when a data packet corresponding to an unreceived ACK packet is held in the communication control unit 627 in a previous cycle, the portable terminal 611 in this embodiment transmits the held data packet according to an existing TCP protocol, before transmission of data packets of cycle data size Dc (Step S501). At this time, the suppression/resumption control unit 624 in the portable terminal 611 starts counting time using a timer, to specify a timing of powering on the communication I/F unit 108.

Next, the portable terminal 611 transmits data packets of cycle data size Dc that are to be transmitted in a current cycle (Step S502). Here, the portable terminal 611 waits for all ACK packets corresponding to the transmitted data packets during the RTT after transmitting a last data packet, as explained with regard to the above transmission suppression period start process (Step 2). When not receiving all ACK packets within the RTT, the portable terminal 611 completes data packet transmission without receiving all ACK packets. Note that, since the portable terminal 611 operates according to TCP, the last data packet is held in the communication control unit 107 and transmitted at the beginning (Step S501) of a next cycle.

After completing the transmission of the data packets of cycle data size Dc, the portable terminal 611 powers off the communication I/F unit 108 (Step S503). Having powered off the communication I/F unit 108, the portable terminal 611 judges whether or not cycle interval Tc elapses from the start of the data packet transmission of Step S502, according to the aforementioned timer (Step S504). When judging that cycle interval Tc does not elapse yet (Step S504: No), the portable terminal 611 repeats the process from Step S503. When judging that cycle interval Tc elapses (Step S504: Yes), the portable terminal 611 powers on the communication I/F unit 108 (Step S505).

Note that, though the elapse of cycle interval Tc is periodically checked in Steps S503 and S504 in this embodiment, instead of such periodical check, an interrupt may be generated when cycle interval Tc elapses so as to enable the detection of the elapse of cycle interval Tc.

Lastly, the portable terminal 611 judges whether or not the transmission of application data (data packets) to be transmitted is completed and the communication with the receiver apparatus 603 is to end (Step S506). When judging to end the communication (Step S506: Yes), the portable terminal 611 ends the whole process. When judging not to end the communication as there is still data to be transmitted (Step S506: No), the portable terminal 611 repeats the process from Step S501. With the above process of Steps S501 to S506, communication is executed while performing intermittent transmission.

As described above, the portable terminal 611 in this embodiment saves power while communicating with the receiver apparatus 603 by using a protocol having a flow control mechanism such as TCP, without relying on the wireless LAN power saving method. Accordingly, in this embodiment, the power saving of the portable terminal 611 can be carried out regardless of a power saving function support status in an access point and a network device type. Moreover, since the portable terminal 611 (transmitter apparatus) notifies the receiver apparatus 603 that the portable terminal 611 performs intermittent transmission, the intermittent reception process in the receiver apparatus 603 can be suppressed, with it being possible to save power more reliably.

This embodiment describes the case where the communication I/F unit 108 is powered off only during the transmission suppression period, but the communication I/F unit 108 may be further powered off during a period from after data packet transmission until ACK packet reception within one cycle, to further improve the power saving effect.

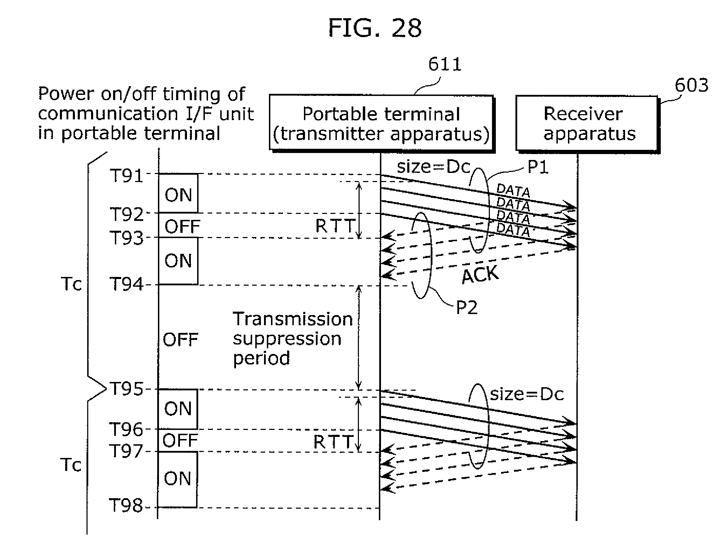

FIG. 28 is a sequence diagram showing another power saving method of the portable terminal 611 and the receiver apparatus 603 in this embodiment.

As with the portable terminal 211a in the second embodiment, the portable terminal 611 powers off the communication I/F unit 108 in one part of the RTT after transmission of a first data packet in a cycle until reception of an ACK packet in response to that data packet.

In more detail, since data packets of the cycle data size need to be transmitted within cycle interval Tc, the portable terminal 611 powers off the communication I/F unit 108 during a period from immediately after all data packets in one cycle are transmitted (time T92 in FIG. 28) to immediately before a first ACK packet arrives (time T93 in FIG. 28). In the case where RWIN received from the receiver apparatus 603 is smaller than cycle data size Dc, however, the portable terminal 611 turns the power off after transmitting data packets of a data size corresponding to received RWIN.

This embodiment describes the case where cycle data size Dc and cycle interval Tc are fixed, but cycle data size Dc and cycle interval Tc may be changed dynamically in accordance with a transmitted data size. Moreover, this embodiment describes the case where each cycle is continuous with there being no gap, but a gap may be provided between cycles. For instance, in such a case where the transmission of data of cycle data size Dc is not yet ready at the beginning of a cycle, the portable terminal 611 may turn the power off without starting a next cycle, until data of cycle data size Dc to be transmitted is prepared. Thus, by transmitting data all at once, the number of round trips of TCP can be reduced and as a result a higher power saving effect can be attained.

This embodiment describes the case where the portable terminal 611 (transmitter apparatus) notifies intermittent transmission, but this notification is not necessarily required. Instead of the portable terminal 611 (transmitter apparatus) notifying intermittent transmission, the receiver apparatus 603 may notify the portable terminal 611 of intermittent reception. Alternatively, the portable terminal 611 (transmitter apparatus) and the receiver apparatus 603 may negotiate with each other to determine whether intermittent reception or intermittent transmission is executed. In this case, power saving effect information may be included in an intermittent transmission/reception valid flag of each apparatus so that one of intermittent reception and intermittent transmission that has a higher power saving effect is executed. This embodiment describes the case where the notification that intermittent transmission is performed is made at the timing of three-way handshaking, but the notification may be made at any timing such as in the intermittent transmission preparatory state, so long as it is prior to intermittent transmission.

### (Sixth Embodiment)

The following describes a communication apparatus in a sixth embodiment of the present invention. In the first to fifth embodiments, the number of communication application programs running on the portable terminal is only 1. In this embodiment, a plurality of communication application programs run simultaneously. Even when a plurality of communication application programs run simultaneously, a transmission suppression period can be created to attain a power saving effect by synchronizing transmission/reception processes of the plurality of communication application programs. The case where two communication application programs run simultaneously is described in this embodiment for simplicity's sake.

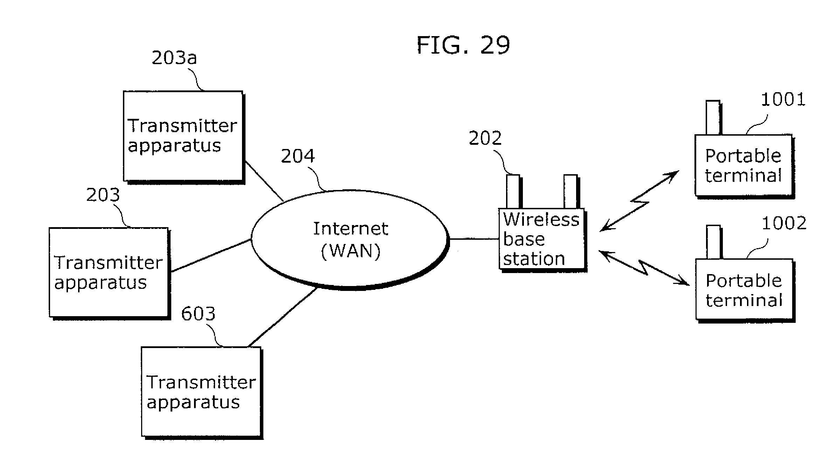

FIG. 29 is a block diagram showing an example of a communication system including the communication apparatus in this embodiment.

The communication system to which this embodiment relates includes portable terminals 1001 and 1002 which are communication apparatuses, a transmitter apparatus 203a which performs communication without flow control such as User Datagram Protocol (UDP), the transmitter apparatus 203 having a function of performing communication with flow control, and the receiver apparatus 603.

In this embodiment, the same apparatuses and structures as in the first to fifth embodiments have been given the same reference numerals and their explanation has been omitted.

The portable terminal 1001 in this embodiment has both the function of the portable terminal 211a in the second embodiment as a receiver apparatus and the function of the portable terminal 611 in the fifth embodiment as a transmitter apparatus, and executes two communication application programs simultaneously. That is, the portable terminal 1001 in this embodiment simultaneously receives data packets transmitted from the transmitter apparatuses 203 and 203a, or simultaneously receives data packets transmitted from the transmitter apparatus 203 and transmits data packets to the receiver apparatus 603.

The portable terminal 1001 in this embodiment performs communication according to TCP as in the first to fifth embodiments, and also performs communication according to UDP. In other words, when communicating with the transmitter apparatus 203 or the receiver apparatus 603, the portable terminal 1001 performs data reception or transmission according to TCP. When communicating with the transmitter apparatus 203a, the portable terminal 1001 receives data transmitted from the transmitter apparatus 203a at a regular interval, according to UDP.

Note that, in this embodiment, intermittent reception and intermittent transmission executed by the portable terminal 1001 are collectively referred to as intermittent transmission/reception, and intermittent reception parameters and intermittent transmission parameters used by the portable terminal 1001 are collectively referred to as intermittent transmission/reception parameters. Moreover, since the portable terminals 1001 and 1002 have a same function and structure, the following description focuses on the portable terminal 1001.

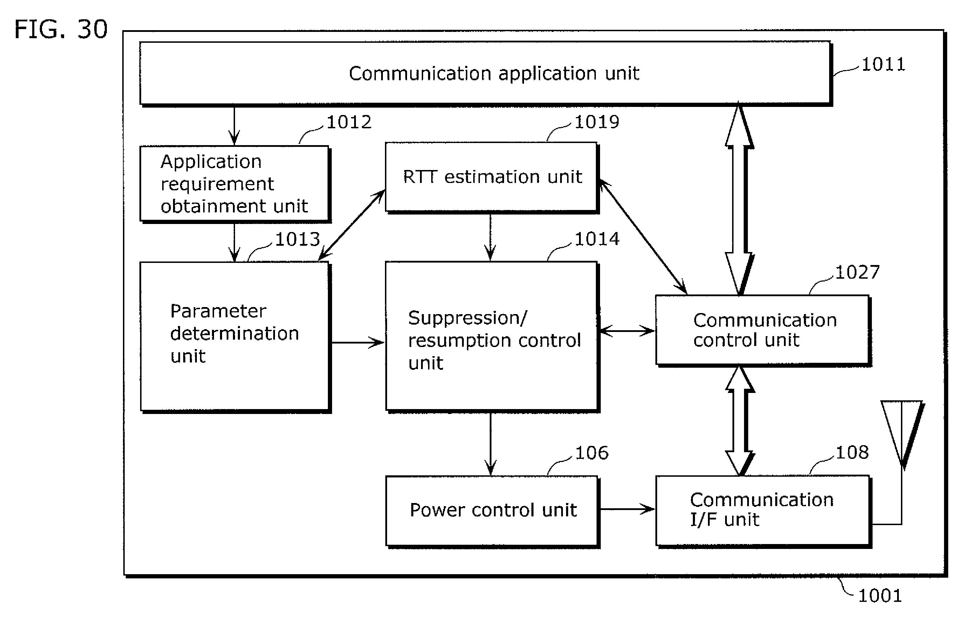

FIG. 30 is a block diagram showing a specific structure of the portable terminal 1001 in this embodiment.

The portable terminal 1001 in this embodiment includes a communication application unit 1011, an application requirement obtainment unit 1012, a parameter determination unit 1013, a suppression/resumption control unit 1014, the power control unit 106, a communication control unit 1027, the communication I/F unit 108, and an RTT estimation unit 1019.

The communication application unit 1011 has both the function of the communication application unit 101 in the second embodiment and the function of the communication application unit 621 in the fifth embodiment, and simultaneously executes a communication application program for transmitting data and a communication application program for receiving data, or simultaneously executes two communication application programs for transmitting or receiving data. Which is to say, the communication application unit 1011 issues start notification to the application requirement obtainment unit 1012, and performs data transmission/reception with any two apparatuses out of the transmitter apparatus 203a, the transmitter apparatus 203, and the receiver apparatus 603a.

The application requirement obtainment unit 1012 has both the function of the application requirement obtainment unit 102 in the second embodiment and the function of the application requirement obtainment unit 622 in the fifth embodiment, and obtains a performance parameter from the communication application unit 1011 and issues performance parameter registration notification or performance parameter deletion notification to the parameter determination unit 1013. Performance parameters obtained by the application requirement obtainment unit 1012 show "protocol" and "power saving priority" described later.

The suppression/resumption control unit 1014 has both the function of the suppression/resumption control unit 804 in the second embodiment and the function of the suppression/resumption control unit 624 in the fifth embodiment. The suppression/resumption control unit 1014 further synchronizes intermittent transmission/reception of a plurality of communication application programs, in accordance with intermittent transmission/reception parameters of the plurality of communication application programs. In detail, the suppression/resumption control unit 1014 performs suppression and resumption of communication by each communication application program synchronously, and causes the power control unit 106 to power off the communication I/F unit 108 during the suppression. Timings of suppressing and resuming communication will be described later. Furthermore, in the case of performing data reception using UDP, the portable terminal 1001 in this embodiment specifies a UDP packet reception interval, and estimates an expected time of UDP packet reception on the basis of the reception interval.

The RTT estimation unit 1019 estimates an RTT of each communication application program, and notifies the parameter determination unit 1013, the suppression/resumption control unit 1014, and the communication control unit 1027 of the estimated RTT, in the same way as the RTT estimation unit 809 in the second embodiment.

The parameter determination unit 1013 has both the function of the parameter determination unit 103 in the second embodiment and the function of the parameter determination unit 623 in the fifth embodiment, and determines the above intermittent transmission/reception parameters and issues intermittent transmission/reception parameter registration notification (intermittent reception parameter registration notification or intermittent transmission parameter registration notification) or intermittent transmission/reception parameter deletion notification (intermittent reception parameter deletion notification or intermittent transmission parameter deletion notification) to the suppression/resumption control unit 1014.

The communication control unit 1027 has both the function of the communication control unit 107 in the second embodiment and the function of the communication control unit 627 in the fifth embodiment, and also receives data packets from the transmitter apparatus 203a via the communication I/F unit 108 according to UDP.

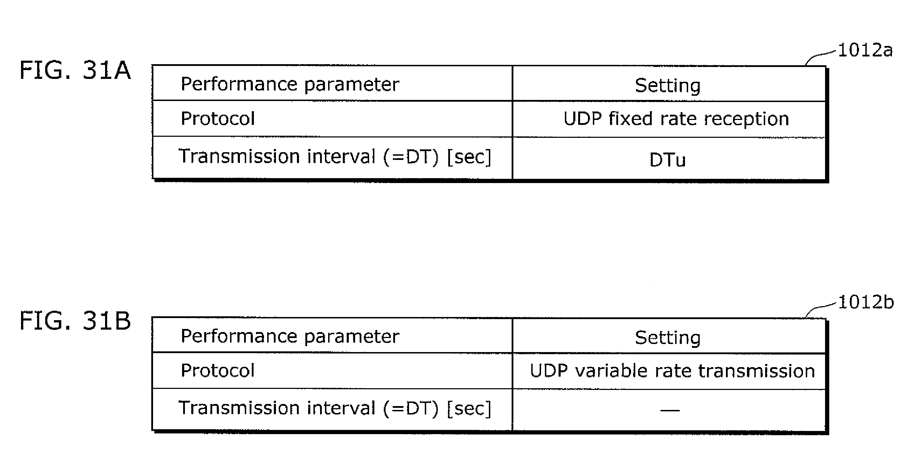

FIGS. 31A and 31B each show a UDP-related performance parameter management table managed by the application requirement obtainment unit 1012.

Each of performance parameter management tables 1012a and 1012b has performance parameters for a started communication application program that performs communication by UDP. The performance parameters include a protocol and a transmission interval.

The protocol is a parameter defined by a combination of a UDP fixed rate or a UDP variable rate and transmission or reception, such as "UDP fixed rate reception" or "UDP variable rate transmission". Transmission interval DT is a parameter showing a time interval of data packets that are intermissively transmitted according to UDP. When the protocol shows the UDP fixed rate, transmission interval DT is set in the performance parameter management table. When the protocol shows the UDP variable rate, transmission interval DT is not set in the performance parameter management table.

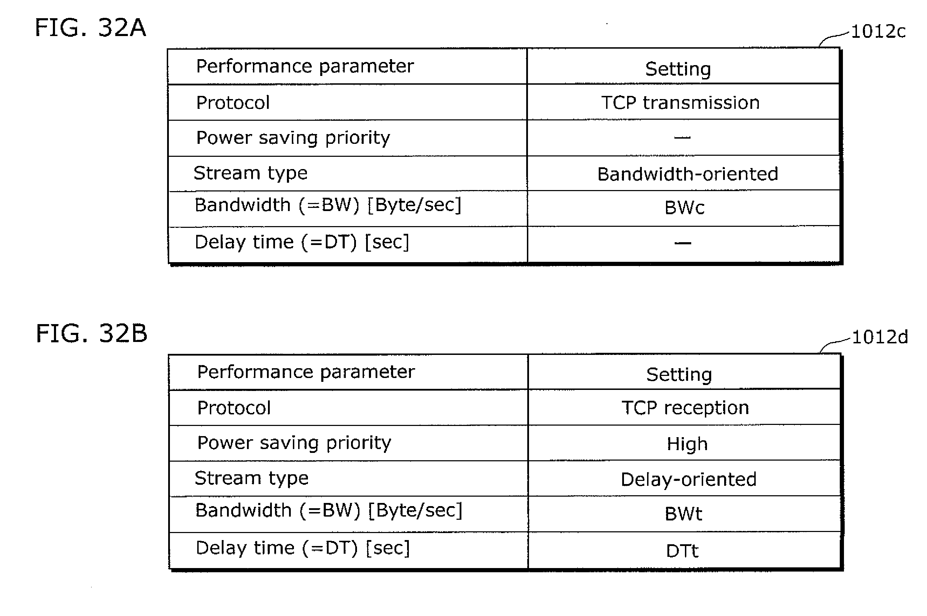

FIGS. 32A and 32B each show a TCP-related performance parameter management table managed by the application requirement obtainment unit 1012.

Each of performance parameter management tables 1012c and 1012d has performance parameters for a started communication application program that performs communication by TCP. The performance parameters include a protocol, a power saving priority, a stream type, a bandwidth, and a delay time. The parameters for the stream type, the bandwidth, and the delay time are the same as the parameters shown in FIGS. 6A, 6B, and 6C.

The protocol is a parameter showing, for example, "TCP transmission" or "TCP reception". The power saving priority is a parameter for determining a communication application program that serves as a reference of intermittent transmission/reception cycles.

On the basis of the protocol, the power saving priority, and the like shown in a performance parameter management table of each of the two started communication application programs, the parameter determination unit 1013 in the portable terminal 1001 determines one of the two communication application programs as a cycle reference application. That is, the parameter determination unit 1013 uses an intermittent transmission/reception cycle of the cycle reference application as the reference (reference cycle), and determines intermittent transmission/reception parameters of the other communication application program so that an intermittent transmission/reception cycle of the other communication application program is synchronous with the reference cycle.

For instance, in the case where two communication application programs for performing communication by TCP are started, the parameter determination unit 1013 compares power saving priorities shown in performance parameter management tables of the two started communication application programs, and determines a communication application program having a higher power saving priority as the cycle reference application.

Moreover, the parameter determination unit 1013 compares protocols shown in the performance parameter management tables of the two started communication application programs. When one protocol shows TCP whereas the other protocol shows UDP, the parameter determination unit 1013 determines a communication application program of UDP as the cycle reference application. The communication application program whose protocol is UDP does not implement retransmission control, and therefore a packet loss needs to be avoided as much as possible in a power off state of intermittent transmission/reception. Accordingly, the parameter determination unit 1013 preferentially determines the communication application program of UDP as the cycle reference application.

Note that, in the case where no power saving priorities are set in the performance parameter management tables or the power saving priorities shown in the performance parameter management tables are at a same level, the parameter determination unit 1013 may determine the cycle reference application in accordance with the RTT notified from the RTT estimation unit 1019 or designation by a communication application program or a user.

The communication application program that is not set as the cycle reference application operates in conjunction with the cycle reference application. Therefore, when determining the intermittent transmission/reception parameters of the communication application program that is not the cycle reference application, the parameter determination unit 1013 adjusts the intermittent transmission/reception parameters by, for example, increasing cycle data size Dct, so as to determine such intermittent transmission/reception parameters that satisfy a requirement from the communication application program.

When determining intermittent reception parameters of a cycle reference application for performing communication by TCP, the parameter determination unit 1013 determines cycle interval Tct and cycle data size Dct which are the intermittent reception parameters, in the same way as in the first embodiment. Moreover, the parameter determination unit 1013 uses transmission interval DT shown in a performance parameter management table of a cycle reference application for performing communication by UDP, as a reception interval of receiving a packet transmitted by UDP or a transmission interval of transmitting a packet by UDP.

An intermittent transmission/reception parameter determination method is described in detail below.

The case where the communication application unit 1011 starts two communication application programs one of which performs UDP transmission/reception and the other of which performs TCP transmission/reception is described first.

In UDP communication, the protocol does not implement retransmission control, so that packet reception and packet loss during power off need be avoided. Moreover, in transmission of VoIP and the like, a phenomenon such as sound distortion occurs due to a packet transmission delay, and so there is a strict constraint on a packet transmission delay. In view of this, in the case of performing both UDP communication and TCP communication, the portable terminal 1001 determines a communication application program for executing UDP transmission/reception as a cycle reference application, and ensures a transmission interval of UDP packets to thereby satisfy a constraint regarding a packet transmission/reception delay.

The parameter determination unit 1013 determines the communication application program for performing communication by UDP as a cycle reference application, and specifies transmission interval DT = DTu shown in a performance parameter management table of the cycle reference application. The parameter determination unit 1013 determines cycle interval Tct of the communication application program for performing communication by TCP, on the basis of the specified transmission interval.

Next, the parameter determination unit 1013 determines a cycle data size of the communication application program for performing communication by TCP, on the basis of bandwidth BW shown in a performance parameter management table of the communication application program. Here, the parameter determination unit 1013 determines a required cycle data size in a state where cycle interval Tct (integral multiple of cycle interval Tct) of TCP communication is in agreement with transmission interval DTu of UDP communication by the cycle reference application so that the TCP communication and the UDP communication are synchronous with each other.

In detail, in the case where a stream type shown in the performance parameter management table of TCP is bandwidth-oriented, to synchronize both communications, the parameter determination unit 1013 determines cycle interval Tct of TCP communication as Tct = DTu. Following this, the parameter determination unit 1013 determines cycle data size Dct which is a size of data transmitted/received in one cycle according to Dct = Tct × BW in order to ensure required bandwidth BW, as in the first embodiment.

In the case where the stream type shown in the performance parameter management table of TCP is delay-oriented, the parameter determination unit 1013 first compares UDP transmission interval DTu and TCP delay time DTt. When TCP delay time DTt is longer than UDP transmission interval DTu, the parameter determination unit 1013 determines cycle interval Tct as Tct = DTu, and determines cycle data size Dct as Dct = Tct × BW. When TCP delay time DTt is shorter than UDP transmission interval DTu, on the other hand, the parameter determination unit 1013 determines integer C3 such that DTu > C3 × DTt. In this case, the parameter determination unit 1013 determines cycle interval Tct as Tct = DTu/C3, so that TCP transmission/reception is executed C3 times within the UDP transmission interval to thereby ensure required delay time DTt. The parameter determination unit 1013 then determines cycle data size Dct as Dct = Tct × BW, in the same manner as the bandwidth-oriented type.

In the case where the stream type shown in the performance parameter management table of TCP is best-effort, the parameter determination unit 1013 does not determine intermittent transmission/reception parameters, and the portable terminal 1001 does not perform intermittent transmission/reception, as in the first embodiment.

The case where the communication application unit 1011 starts two communication application programs both of which perform TCP transmission/reception is described next. When executing two TCP communications, the parameter determination unit 1013 needs to determine cycle interval Tct and cycle data size Dct of each communication.

Here, cycle interval Tct of communication by a cycle reference application is denoted by Tc1, and cycle data size Dct of that communication is denoted by Dc1. Further, cycle interval Tct of communication by the other communication application program is denoted by Tc2, and cycle data size Dct of that communication is denoted by Dc2.

When both communications are TCP transmission/reception, the parameter determination unit 1013 first checks a power saving priority shown in a performance parameter management table of each communication application program, and determines a communication application program having a higher priority as the cycle reference application. The parameter determination unit 1013 then determines cycle interval Tc1 and cycle data size Dc1 of the cycle reference application by the same method as the first or fifth embodiment.

Next, the parameter determination unit 1013 determines cycle data size Dc2 and cycle interval Tc2 of the other communication application program. Here, the parameter determination unit 1013 determines cycle interval Tc2 and cycle data size Dc2 by performing the calculation used in the determination method of the above case where UDP communication and TCP communication are simultaneously performed, with UDP transmission interval DTu being substituted by cycle interval Tc1 of the cycle reference application.

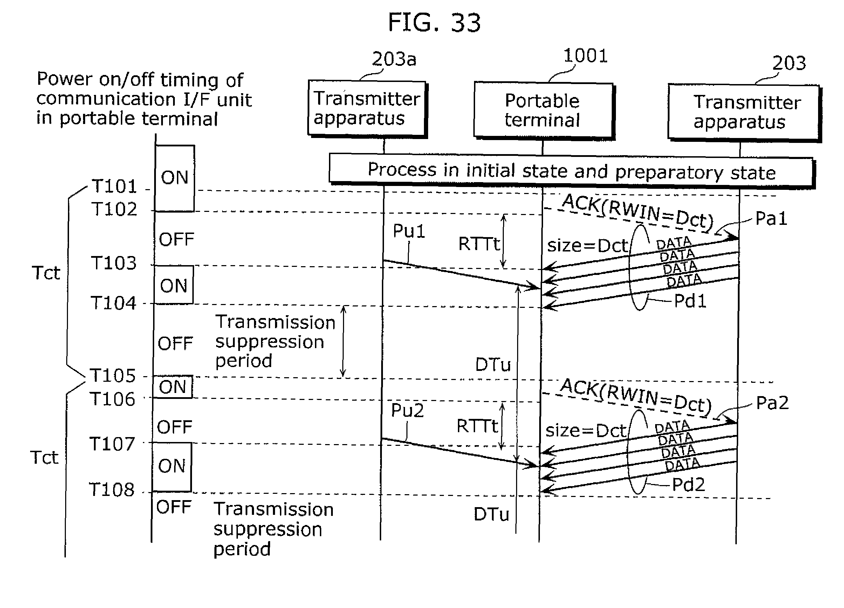

FIG. 33 is a sequence diagram showing a power saving method of the portable terminal 1001, the transmitter apparatus 203a, and the transmitter apparatus 203 in this embodiment.

As an example, the portable terminal 1001 receives data from the transmitter apparatus 203a according to UDP by the communication application program corresponding to the performance parameter management table 1012a shown in FIG. 31A, and at the same time receives data from the transmitter apparatus 203 according to TCP by the communication application program corresponding to the performance parameter management table 1012d shown in FIG. 32B. Note here that DTu is a transmission interval at which the transmitter apparatus 203a transmits a UDP packet, whereas Tct, Dct, and RTTt are respectively a cycle interval, a cycle data size, and an RTT in communication with the transmitter apparatus 203b. Because the portable terminal 1001 communicates with the transmitter apparatus 203a using UDP, the communication application program using UDP is set as a cycle reference application as mentioned above, where UDP transmission interval DTu = cycle interval Tct. The portable terminal 1001 predicts reception of a UDP packet at transmission interval DTu, that is, predicts a UDP packet reception time (predicted reception time).

In this sequence, the portable terminal 1001 first determines, in an initial state of intermittent reception, intermittent reception parameters by means of the parameter determination unit 1013 according to the aforementioned method, in order to communicate with the transmitter apparatus 203a and the transmitter apparatus 203.

Next, the portable terminal 1001 performs a process in an intermittent reception preparatory state. At this time, to communicate with the transmitter apparatus 203 using TCP, the portable terminal 1001 executes the process in the preparatory state according to the same method as in the first embodiment. In addition, the RTT estimation unit 1019 in the portable terminal 1001 estimates RTTt which is an RTT of TCP communication. Note that, when communicating with the transmitter apparatus 203a using UDP, the portable terminal 1001 does not perform the process in the preparatory state for the UDP communication because packet transmission/reception is carried out at a fixed rate.

Once the process in the preparatory state has completed, the suppression/resumption control unit 1014 in the portable terminal 1001 stops ACK packet transmission by the communication control unit 1027 to suppress communication with the transmitter apparatus 203a, so that the communication by the communication application program of TCP can be started synchronously with the UDP packet reception timing by the cycle reference application.

In a subsequent steady state, the suppression/resumption control unit 1014 starts counting cycle interval Tct using a timer at time T101, and issues an ACK single transmission request to the communication control unit 1027 to resume data transmission from the transmitter apparatus 203. Accordingly, the portable terminal 1001 starts intermittent reception by transmitting ACK packet Pa1 to the transmitter apparatus 203. Here, a timing of starting intermittent reception, namely, a timing of transmitting ACK packet Pa1 (time T101), is adjusted so that a predicted reception time of UDP packet Pu1 from the transmitter apparatus 203a matches a predicted reception time of TCP packet Pd1 from the transmitter apparatus 203. Note that TCP packet Pd1 contains all packets of cycle data size Dct transmitted from the transmitter apparatus 203.

That is, the suppression/resumption control unit 1014 predicts the reception time of UDP packet Pu1 from the transmitter apparatus 203a, and issues the ACK single transmission request at the timing (time T101) which is RTTt earlier than the predicted reception time, to cause ACK packet Pa1 to be transmitted. At time T102 when the transmission of ACK packet Pa1 is completed, the suppression/resumption control unit 1014 issues a power off request to the power control unit 106. Upon receiving the power off request, the power control unit 106 powers off the communication I/F unit 108. Since no packet is received from any of the transmitter apparatus 203a and the transmitter apparatus 203 from time T102 at which the transmission of ACK packet Pa1 is completed to time T103 at which RTTt elapses, the suppression/resumption control unit 104 keeps the communication I/F unit 108 powered off.

Following this, the suppression/resumption control unit 1014 issues a power on request to the power control unit 106 at time T103 when RTTt elapses from time T102, because packets arrive from the transmitter apparatus 203a and the transmitter apparatus 203. In accordance with the power on request, the power control unit 106 powers on the communication I/F unit 108 at time T103. Subsequently, no packet is transmitted/received between time T104 at which all packets to be received are received and time T105 at which cycle interval Tct elapses from cycle start time T101, and so the suppression/resumption control unit 1014 controls the power control unit 106 to power off the communication I/F unit 108 from time T104 to time T105. The portable terminal 1001 then starts a new cycle at time T105 when cycle interval Tct elapses from timer counting start time T101. Thus, since transmission interval DTu of a UPD packet by the transmitter apparatus 203a is equal to cycle interval Tct of communication by the transmitter apparatus 203, subsequently intermittent reception can equally be carried out in a synchronized manner.

As described above, in the portable terminal 1001 in this embodiment, even when a plurality of communications are executed in parallel, a period during which no data is transmitted/received is created by synchronizing timings of these communications, and the communication I/F unit 108 is powered off during this period to improve the power saving effect.

Note that, in the case where TCP packets of cycle data size Dct are not received in cycle interval Tct, the portable terminal 1001 may transmit an ACK packet immediately upon TCP packet reception to receive next data (TCP packet), without performing intermittent reception. In this case, in the next cycle of the cycle in which the TCP packets of cycle data size Dct cannot be received, the portable terminal 1001 sets a sum of cycle data size Dct and a size of data which cannot be received in the cycle, as cycle data size Dct required in the next cycle.

In FIG. 33, UDP reception and TCP reception are used to describe the power saving effect of the portable terminal 1001 in this embodiment. However, the portable terminal 1001 in this embodiment can also improve the power saving effect by the intermittent transmission/reception process in the case where the portable terminal 1001 executes UDP reception and TCP transmission. In detail, in the same manner as the example given in this embodiment, the portable terminal 1001 transmits a data packet (TCP packet) or receives an ACK packet corresponding to a data packet (TCP packet), in synchronization with UDP reception. For example, when synchronizing UDP packet reception and reception of an ACK packet corresponding to a data packet, the portable terminal 1001 transmits data packets of cycle data size Dc at time T101 in FIG. 33, instead of transmitting the ACK packet.

In FIG. 33, the portable terminal 1001 makes cycle interval Tct in communication with the transmitter apparatus 203 equal to transmission interval DTu, to synchronize both communications. However, synchronization is possible even when cycle interval Tct is not equal to transmission interval DTu. In such a case, the portable terminal 1001 determines cycle interval Tct irrespective of UDP packet transmission interval DTu, estimates a predicted reception time of a UDP packet, and transmits an ACK packet based on an ACK single transmission request at an appropriate timing in each cycle. In other words, the ACK packet transmission time does not depend on the cycle start, and data transmission/reception can be synchronized by using the predicted UDP packet reception time, RTTt, and cycle interval Tct.

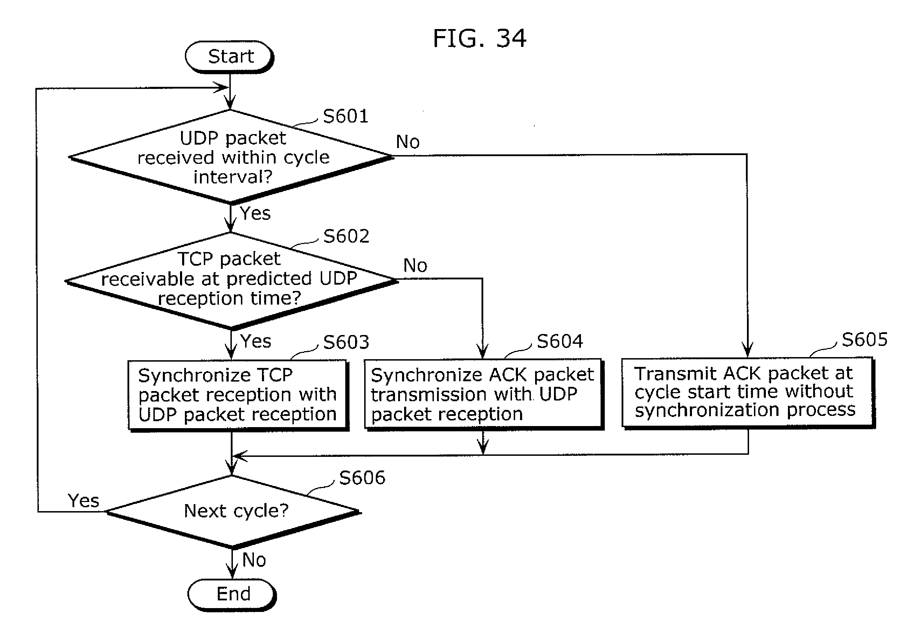

FIG. 34 is a flowchart showing an operation of synchronizing data transmission/reception by the suppression/resumption control unit 1014 when cycle interval Tct is different from transmission interval DTu.

First, at a start time of a cycle, the suppression/resumption control unit 1014 judges whether or not a UDP packet is received in cycle interval Tct of the cycle, i.e., whether or not a predicted UDP packet reception time (hereafter referred to as a "predicted UDP reception time") is included in cycle interval Tct of the cycle (Step S601). In detail, the suppression/resumption control unit 1014 judges whether or not ((predicted UDP reception time) - (cycle start time)) is smaller than cycle interval Tct.

When judging that the predicted UDP reception time is not included in cycle interval Tct (((predicted UDP reception time) - (cycle start time)) > (cycle interval Tct)) (Step S601: No), the suppression/resumption control unit 1014 causes an ACK packet to be transmitted at the cycle start time, without performing synchronization (Step S605). That is, the suppression/resumption control unit 1014 performs intermittent reception control by the same method as in the first embodiment, as soon as the cycle starts.

When judging that the predicted UDP reception time is included in cycle interval Tct (((predicted UDP reception time) - (cycle start time)) < (cycle interval Tct)) (Step S601: Yes), the suppression/resumption control unit 1014 further judges whether or not a TCP packet (data packet) can be received at the predicted UDP reception time (Step S602). Which is to say, to synchronize ACK packet transmission or TCP packet reception with UDP packet reception, the suppression/resumption control unit 1014 compares ((predicted UDP reception time) - (cycle start time)) and RTTt. When ((predicted UDP reception time) - (cycle start time)) > RTTt, the suppression/resumption control unit 1014 judges that a TCP packet can be received at the predicted UDP reception time. When ((predicted UDP reception time) - (cycle start time)) < RTTt, the suppression/resumption control unit 1014 judges that a TCP packet cannot be received at the predicted UDP reception time.

When judging that a TCP packet can be received at the predicted UDP reception time (((predicted UDP reception time) - (cycle start time)) > RTTt) (Step S602: Yes), the suppression/resumption control unit 1014 synchronizes TCP packet reception with UDP packet reception (Step S603). In detail, the suppression/resumption control unit 1014 causes an ACK packet to be transmitted at a timing when {((predicted UDP reception time) - (cycle start time)) - RTTt} elapses from the cycle start time.

When judging that a TCP packet cannot be received at the predicted UDP reception time (((predicted UDP reception time) - (cycle start time)) < RTTt) (Step S602: No), the suppression/resumption control unit 1014 synchronizes ACK packet transmission with UDP packet reception (Step S604). That is, the suppression/resumption control unit 1014 causes an ACK packet to be transmitted at the predicted UDP reception time.

The suppression/resumption control unit 1014 then judges whether or not there is a next cycle (Step S606). When judging that there is no next cycle (Step S606: Yes), the suppression/resumption control unit 1014 ends the whole process. When judging that there is the next cycle (Step S606: No), the suppression/resumption control unit 1014 repeats the process from Step S601.

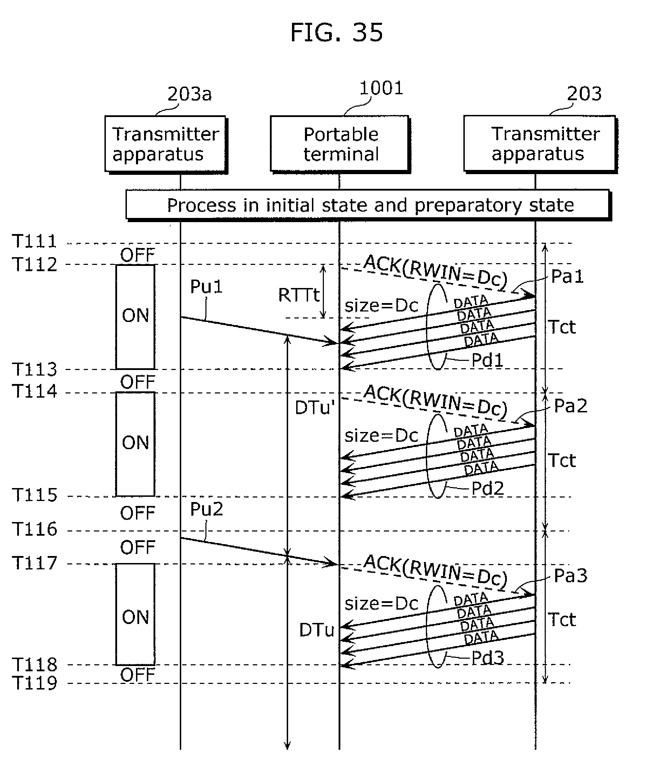

A power saving method when cycle interval Tct and transmission interval DTu are different as in the above case is described in more detail below, using FIG. 35.

FIG. 35 is a sequence diagram showing another power saving method of the portable terminal 1001, the transmitter apparatus 203a, and the transmitter apparatus 203 in this embodiment.

When determining cycle interval Tct in communication with the transmitter apparatus 203 using TCP, the portable terminal 1001 determines cycle interval Tct that is different from transmission interval DTu in communication with the transmitter apparatus 203a using UDP. Note that FIG. 35 is based on the premise that the portable terminal 1001 does not turn the power off until RTTt elapses from ACK packet transmission, for ease of explanation.

Having reached the steady state at time T111, the portable terminal 1001 first determines an ACK packet transmission timing on the basis of the above intermittent reception control corresponding to the case where cycle interval Tct and transmission interval DTu are different. The portable terminal 1001 judges that, in a cycle starting at time T111, a TCP packet can be received at a predicted UDP reception time, that is, ((predicted UDP reception time) - (cycle start time)) > RTTt. As a result, the portable terminal 1001 starts the cycle at time T111, and powers off the communication I/F unit 108 from this time until the elapse of ((predicted reception time of UDP packet Pu1) - (cycle start time T111) - RTTt). Next, at time T112 when ((predicted reception time of UDP packet Pu1) - (cycle start time T111) - RTTt) elapses, the portable terminal 1001 transmits ACK packet Pa1 based on an ACK single transmission request to the transmitter apparatus 203. After RTTt elapses, the portable terminal 1001 receives the UDP packet from the transmitter apparatus 203a, and receives a TCP packet from the transmitter apparatus 203. Having received all data that need be received at time T113, the portable terminal 1001 powers off the communication I/F unit 108, and keeps the power off state until time T114 at which cycle interval Tct elapses from cycle start time T111.

After this, at start time T114 of a next cycle, the portable terminal 1001 judges whether or not a predicted reception time of next UDP packet Pu2 is included in the cycle. When judging that the predicted reception time is not included in the cycle, the portable terminal 1001 transmits ACK packet Pa2 at start time T114 of the cycle. Having received all TCP packets Pd2 in response to ACK packet Pa2 at time T115, the portable terminal 1001 powers off the communication I/F unit 108 until end time T116 of the cycle.

Further, at start time T116 of a next cycle, the portable terminal 1001 judges that a TCP packet cannot be received at the predicted UDP reception time in this cycle, that is, ((predicted UDP reception time) - (cycle start time T116) < RTTt. Therefore, the portable terminal 1001 transmits ACK packet Pa3 at time T117 when UDP packet Pu2 is received. The portable terminal 1001 powers off the communication I/F unit 108 from time T116 to time T117.

Thus, even when cycle interval Tct and transmission interval DTu are different, two communications can be synchronized by using a predicted UDP reception time, cycle interval Tct, and RTTt, with it being possible to improve the power saving effect.

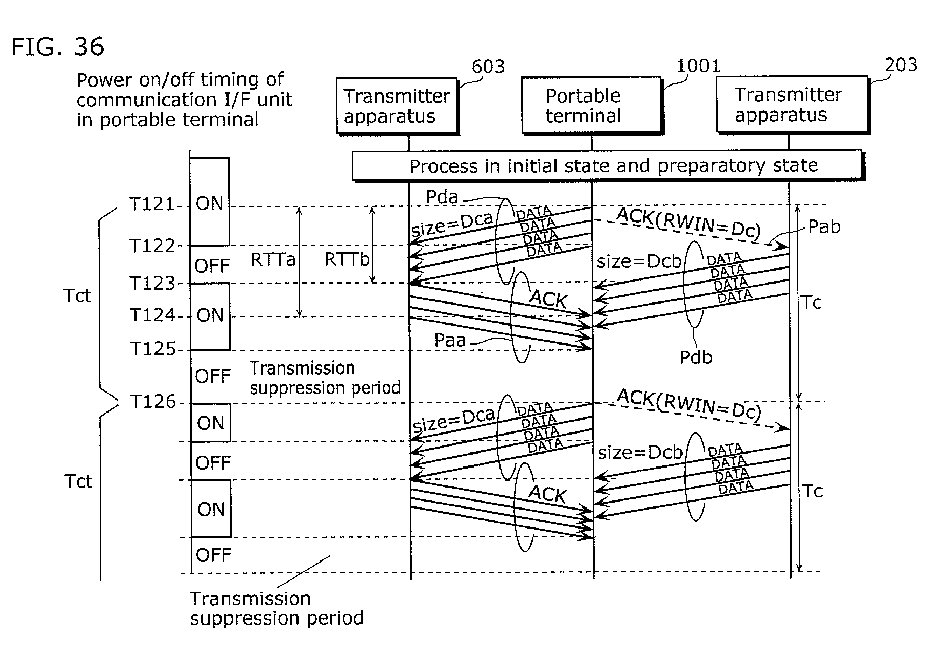

FIG. 36 is a sequence diagram showing a power saving method of the portable terminal 1001, the receiver apparatus 603, and the transmitter apparatus 203 in this embodiment.

The portable terminal 1001 transmits data to the receiver apparatus 603 using TCP, and at the same time receives data from the transmitter apparatus 203 using TCP. Here, Tc, Dca, and RTTa respectively denote a cycle interval, a cycle data size, and a RTT in communication with the receiver apparatus 603. Moreover, Tc, Dcb, and RTTb respectively denote a cycle interval, a cycle data size, and a RTT in communication with the transmitter apparatus 203. As explained earlier, the communication with the receiver apparatus 603 and the communication with the transmitter apparatus 203 use the same cycle interval Tc.

Furthermore, the portable terminal 1001 determines cycle interval Tc and cycle data size Dc of the other communication in accordance with the cycle of the cycle reference application so as to synchronize cycle interval Tc, and powers off the communication I/F unit 108 in the transmission suppression period, as in the case of FIG. 33.

First, the portable terminal 1001 determines intermittent transmission/reception parameters for the receiver apparatus 603 and the transmitter apparatus 203 in the initial state as in FIG. 33, and performs the same process in the preparatory state as the second and fifth embodiments, thereby suppressing communication with each apparatus in a state where intermittent transmission/reception is possible. In this embodiment, it is assumed that a power saving priority of the communication with the receiver apparatus 603 is "high". This being so, the cycle reference application is a communication application program for performing transmission to the receiver apparatus 603 using TCP. Accordingly, once the preparatory state with regard to the transmitter apparatus 203 has completed, the portable terminal 1001 suppresses the communication with the transmitter apparatus 203, in order to synchronize it with the communication with the receiver apparatus 603 by the cycle reference application.

After completing the process in the preparatory state for the receiver apparatus 603 and the transmitter apparatus 203, the portable terminal 1001 launches the process in the steady state. Which is to say, when transmission/reception of data of the corresponding cycle data size is completed during cycle interval Tc in both communications, the portable terminal 1001 suppresses the communication with each apparatus, and powers off the communication I/F unit 108 during a period when the communication is suppressed.

In detail, in the steady state, first the portable terminal 1001 transmits data packet Pda to the receiver apparatus 603 and at the same time transmits ACK packet Pab based on an ACK single transmission request to the transmitter apparatus 203, at start time T121 of cycle interval Tc. The portable terminal 1001 then powers off the communication I/F unit 108, since it takes the corresponding RTT to receive a packet from each of the receiver apparatus 603 and the transmitter apparatus 203. In more detail, the portable terminal 1001 powers off the communication I/F unit 108 from time T122 at which data packet Pda to be transmitted within the cycle is all transmitted to the receiver apparatus 603 to time T123 at which a data packet first arrives at the portable terminal 1001. Note that, because RTTb of the transmitter apparatus 203 is shorter than RTTa of the receiver apparatus 603, the data packet that first arrives at the portable terminal 1001 is data packet Pdb transmitted from the transmitter apparatus 203. In other words, the portable terminal 1001 powers off the communication I/F unit 108 in a period (time T122 to time T123) when RTTa of the receiver apparatus 603 and RTTb of the transmitter apparatus 203 overlap with each other.

After this, the portable terminal 1001 powers on the communication I/F unit 108 again at time T123, receives ACK packet Paa in response to the transmitted data from the receiver apparatus 603, and also receives data packet Pdb of cycle data size Dcb from the transmitter apparatus 203. As a result, all communications to be performed with the receiver apparatus 603 and the transmitter apparatus 203 within cycle interval Tc are completed at time T125. Hence the portable terminal 1001 sets a period from time T125 to time T126 which is an end point of cycle interval Tc as a transmission suppression period, and powers off the communication I/F unit 108 during this period.

This completes one cycle in the case of simultaneously performing TCP transmission and TCP reception. The portable terminal 1001 executes the same process as above in a next cycle from time T126 onward. In this way, the power saving effect can be improved.

In FIG. 36, the power saving method of the portable terminal 1001 is shown on the basis of the example where the portable terminal 1001 executes transmission using TCP and reception using TCP. However, the portable terminal 1001 in this embodiment can also improve the power saving effect by the intermittent transmission/reception process in the case a) where two transmission processes using TCP are executed in parallel and the case b) where two reception processes using TCP are executed in parallel, irrespective of which communication application program serves as a cycle reference application. The following describes these cases a) and b) in detail.

a) When the portable terminal 1001 executes two transmission processes using TCP in parallel, the portable terminal 1001 transmits data packets to two receiver apparatuses at a start point of cycle interval Tc, and receives corresponding ACK packets.

b) When the portable terminal 1001 executes two reception processes using TCP in parallel, the portable terminal 1001 transmits ACK packets based on ACK single transmission requests to two transmitter apparatuses at a start point of cycle interval Tc, and receives data packets of cycle data size Dc.

Thus, according to this embodiment, even when a plurality of communication application programs run on the portable terminal, the power saving effect can be improved by performing intermittent transmission/reception while synchronizing the plurality of communication application programs, and regularly creating a period during which the communication I/F unit 108 is powered off.

### (Seventh Embodiment)

The following describes a communication apparatus in a seventh embodiment of the present invention. In this embodiment, the power saving effect is further enhanced by not only switching the power supply to the communication I/F unit 108 but also switching an operation of another component in accordance with the intermittent transmission/reception process.

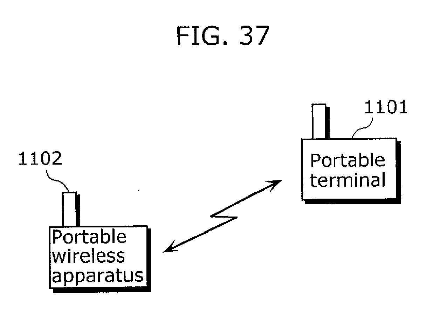

FIG. 37 is a block diagram showing an example of a communication system including the communication apparatus in this embodiment.

The communication system to which this embodiment relates includes a portable wireless apparatus 1102 that is a communication apparatus, and a portable terminal 1101. The portable terminal 1101 and the portable wireless apparatus 1102 directly communicate with each other wirelessly, without via a base station.

The portable wireless apparatus 1102 is a communication apparatus for achieving further improvements in both communication quality and power saving effect, and is configured as a wireless terminal including a wireless communication device. This portable wireless apparatus 1102 communicates with the portable terminal 1101 by means of communication with flow control, in the same manner as the portable terminal 1001 in the sixth embodiment. In this embodiment, the portable wireless apparatus 1102 transmits data stored in the portable wireless apparatus 1102, in response to a data obtainment request from the portable terminal 1101 which is an other-party communication apparatus. Note that the communication between the portable terminal 1101 and the portable wireless apparatus 1102 is not limited to a particular communication method as wireless connection methods such as Bluetooth (registered trademark) and an infrastructure mode or ad hoc mode of wireless LANs are applicable, so long as a higher-level protocol executes communication with flow control.

FIG. 36 is a block diagram showing a specific structure of the portable wireless apparatus 1102 in this embodiment.

The portable wireless apparatus 1102 in this embodiment includes the communication application unit 1011, the application requirement obtainment unit 1012, the parameter determination unit 1013, a suppression/resumption control unit 1114, the power control unit 106, a communication control unit 1117, the communication I/F unit 108, the RTT estimation unit 1019, and a storage unit 1017. In this embodiment, components which are the same as those in the first to sixth embodiments have been given the same reference numerals and their explanation has been omitted. In other words, the portable wireless apparatus 1102 in this embodiment includes the suppression/resumption control unit 1114 instead of the suppression/resumption control unit 1014 in the sixth embodiment, includes the communication control unit 1117 instead of the communication control unit 1027 in the sixth embodiment, and newly includes the storage unit 1017.

The storage unit 1017 stores data used in the communication application unit 1011. The storage unit 1017 has a hard disk, a cache, and a motor, and stores data read from the hard disk into the cache. Data stored in the hard disk is retained on a disk called a platter which is divided into units called sectors. At the time of data reading, the platter is rotated by the motor and data is read in units of integral multiples of sectors. Meanwhile, the cache is composed of a semiconductor memory and the like and stores data without using a motor, unlike the disk. In response to a data obtainment request from the suppression/resumption control unit 1014, the storage unit 1017 starts the motor to read data from the hard disk and stores the read data into the cache, and at the same time passes only necessary data stored in the cache to the communication application unit 1011.

The suppression/resumption control unit 1114 further has a function of notifying, when starting the intermittent transmission/reception process, that the portable wireless apparatus 1102 performs the intermittent transmission/reception process. The intermittent transmission/reception process makes it possible to enhance the power saving effect in the case where the other-party communication apparatus performs no intermittent transmission/reception process. Accordingly, prior to the intermittent transmission/reception process, the portable wireless apparatus 1102 notifies the portable terminal 1101 which is the other-party communication apparatus that the portable wireless apparatus 1102 performs the intermittent transmission/reception process, to stop the intermittent transmission/reception process by the portable terminal 1101.

In detail, the suppression/resumption control unit 1114 notifies the communication control unit 1117 that the portable wireless apparatus 1102 performs the intermittent transmission/reception process. The suppression/resumption control unit 1114 also issues a data obtainment request to the storage unit 1017, and synchronizes the starting of the motor with the intermittent transmission/reception process.

The communication control unit 1117 sets a TCP packet to indicate that the intermittent transmission/reception process is performed, when notified from the suppression/resumption control unit 1114 that the portable wireless apparatus 1102 performs the intermittent transmission/reception process. In more detail, at the time of three-way handshaking of TCP when starting communication with the portable terminal 1101, the communication control unit 1117 newly adds an intermittent transmission/reception valid flag to an option field of a TCP header. Upon receiving the TCP packet whose intermittent transmission/reception valid flag is valid, the portable terminal 1101 which is the other-party communication apparatus does not perform the intermittent transmission/reception process.

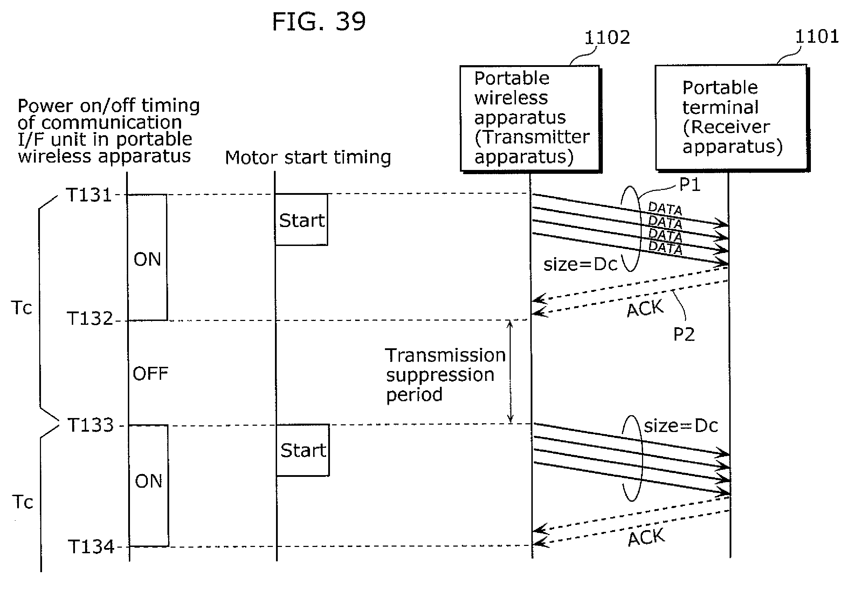

FIG. 39 is a sequence diagram showing an operation of the portable wireless apparatus 1102 and the portable terminal 1101 in a steady state in this embodiment. Note that processes in an initial state and a preparatory state in this embodiment are the same as those in the fifth embodiment, and so their explanation has been omitted here.

In the steady state, the suppression/resumption control unit 1114 transmits first data packet P1 at time T131 when a cycle starts, and issues a data obtainment request to the storage unit 1017 at the same timing. Accordingly, when data of a cycle data size is held in the cache, the storage unit 1017 passes the data to the communication application unit 1011. When data of the cycle data size is not held in the cache, the storage unit 1017 starts the motor of the hard disk and copies a size of data equivalent to an integral multiple of the cycle data size to the cache, and at the same time passes data of the cycle data size to the communication application unit 1011. In this way, the number of times of starting the motor of the hard disk can be reduced to save power when starting the motor.

By repeating the above process, the portable wireless apparatus 1102 sends all data necessary for a communication application program.

Thus, according to this embodiment, by starting the motor in the storage unit 1017 only at the predetermined timing of data transmission, the power saving effect of the portable wireless apparatus 1102 can be enhanced. Moreover, by notifying, prior to the intermittent transmission/reception process, that the portable wireless apparatus 1102 performs the intermittent transmission/reception process, the power saving effect can be enhanced more reliably.

Note that the portable wireless apparatus 1102 may be an apparatus that transmits stored data by wireless communication, such as a portable hard disk, a portable music recording/reproduction apparatus, and a portable video recording/reproduction apparatus.

In this embodiment, the motor may be started at every data transmission timing, or the motor may be started once to store data corresponding to a plurality of times into the cache, thereby reducing the number of times the motor is started and stopped.

This embodiment describes the case where the intermittent transmission/reception process is performed in synchronization with the motor in the storage unit 1017, but in the case of a portable terminal having a cellular communication unit, the intermittent transmission/reception process may be performed in synchronization with a transmission/reception timing of the cellular communication unit.

This embodiment describes the case where the operation of the motor in the storage unit 1017 is synchronized with the intermittent transmission/reception timing, but other processes may be synchronized with the intermittent transmission/reception timing. For example, control may be exercised to reduce a CPU operating time.

Although the communication apparatus according to the present invention has been described by way of the first to seventh embodiments, the present invention is not limited to such.

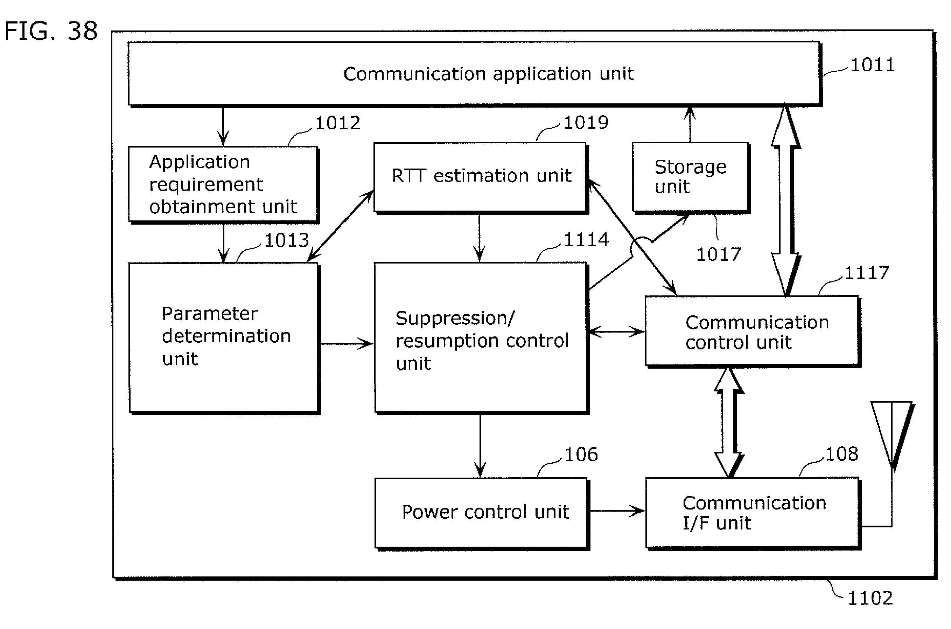

For instance, the communication apparatuses shown in FIGS. 5, 12, 14, 22, 25, 30, and 38 may each be configured by a semiconductor integrated circuit of large scale integration (LSI) and the like.

Moreover, the features of the first to seventh embodiments may be combined to realize the present invention.

### Industrial Applicability

The communication apparatus according to the present invention has the effect of achieving further improvements in both communication quality and power saving effect, and is applicable, for example, to stationary household appliances such as televisions and digital versatile disk (DVD) players, portable apparatuses such as mobile phones and personal digital assistants (PDAs), and personal computers.

## Claims

1. A communication apparatus that communicates with an other-party communication apparatus, said communication apparatus comprising:
a communication unit configured to perform transmission/reception of data with the other-party communication apparatus;
a power switching unit configured to switch a state of power supplied to said communication unit, between a supply state where power necessary for the transmission/reception is supplied and a non-supply state where power necessary for the transmission/reception is not supplied;
a suppression unit configured to suppress data transmission from the other-party communication apparatus; and
a switching control unit configured to cause said power switching unit to switch the state of power to the supply state when the data transmission is not suppressed by said suppression unit, and cause said power switching unit to switch the state of power to the non-supply state when the data transmission is suppressed by said suppression unit.

2. The communication apparatus according to Claim 1, further comprising
a communication control unit configured to repeatedly cause said communication unit to transmit transmission data so that an acknowledgment packet is transmitted from the other-party communication apparatus, and said communication unit to receive the acknowledgment packet,
wherein said suppression unit is configured to suppress the transmission of the acknowledgment packet from the other-party communication apparatus, by stopping the transmission of the transmission data from said communication unit.

3. The communication apparatus according to Claim 2,
wherein said suppression unit is further configured to resume the transmission of the acknowledgment packet from the other-party communication apparatus, by removing the stopping of the transmission of the transmission data.

4. The communication apparatus according to Claim 3, further comprising
a determination unit configured to determine a cycle time and a cycle data size,
wherein said communication control unit is configured to cause said communication unit to transmit the transmission data of the cycle data size determined by said determination unit, and set a timing of transmitting the transmission data as a cycle start point, and
said suppression unit is configured to:
set a point at which the cycle time determined by said determination unit elapses from the transmission of the transmission data from said communication unit, as a cycle end point;
stop, during a period from when the acknowledgment packet is received by said communication unit in response to the transmission data to the cycle end point, the transmission of the transmission data from said communication unit; and
set the cycle end point as the cycle start point of a next cycle, and repeat a process from the cycle start point to the cycle end point for each cycle of the cycle time.

5. The communication apparatus according to Claim 1, further comprising
a communication control unit configured to repeatedly cause said communication unit to transmit transmission request data including a receive window so that data equal to or smaller than the receive window is transmitted from the other-party communication apparatus, and said communication unit to receive the data, the receive window representing a data size,
wherein said suppression unit is configured to suppress the data transmission from the other-party communication apparatus, by stopping the transmission of normal transmission request data from said communication unit, the normal transmission request data being the transmission request data that includes the receive window indicating a value larger than 0.

6. The communication apparatus according to Claim 5,
wherein said suppression unit is further configured to resume the data transmission from the other-party communication apparatus, by removing the stopping of the transmission of the normal transmission request data.

7. The communication apparatus according to Claim 6,
wherein said communication control unit is configured to, when the data is received by said communication unit, cause said communication unit to transmit an acknowledgment packet for notifying the receipt of the data, as the transmission request data, and
said suppression unit is configured to: suppress the data transmission from the other-party communication apparatus by stopping said communication unit from transmitting the acknowledgment packet that includes the receive window indicating a value larger than 0, the acknowledgment packet that includes the receive window indicating a value larger than 0 being to be transmitted as the normal transmission request data when the data is received by said communication unit; and resume the data transmission from the other-party communication apparatus by causing said communication control unit to generate and transmit the acknowledgment packet that includes the receive window indicating a value larger than 0.

8. The communication apparatus according to Claim 6,
wherein said suppression unit is configured to suppress the data transmission from the other-party communication apparatus, by setting the receive window of each of a plurality of sets of transmission request data so that a size of data transmitted from the other-party communication apparatus to said communication unit in response to the plurality of sets of transmission request data is a predetermined size.

9. The communication apparatus according to Claim 6,
wherein said suppression unit is further configured to cause said communication unit to transmit transmission request data that indicates 0 as the receive window, in a period during which the data transmission from the other-party communication apparatus is suppressed.

10. The communication apparatus according to Claim 6, further comprising
a determination unit configured to determine a cycle time and a cycle data size,
wherein said communication control unit is configured to cause said communication unit to transmit the transmission request data that indicates the cycle data size determined by said determination unit as the receive window, and set a timing of transmitting the transmission request data as a cycle start point, and
said suppression unit is configured to:
set a point at which the cycle time determined by said determination unit elapses from the transmission of the transmission request data from said communication unit, as a cycle end point;
stop, during a period from when the data of the cycle data size is received by said communication unit to the cycle end point, the transmission of the normal transmission request data from said communication unit; and
set the cycle end point as the cycle start point of a next cycle, and repeat a process from the cycle start point to the cycle end point for each cycle of the cycle time.

11. The communication apparatus according to Claim 10,
wherein said communication unit is configured to perform transmission/reception of data with each of the other-party communication apparatus and an other other-party communication apparatus in parallel, and
said determination unit is configured to, when said communication unit repeatedly performs transmission/reception with the other other-party communication apparatus at a regular time interval, determine the cycle time according to the regular time interval so that the reception of the data from the other-party communication apparatus is synchronous with the transmission/reception with the other other-party communication apparatus.

12. The communication apparatus according to Claim 11,
wherein said determination apparatus is configured to, when said communication unit repeatedly receives data at a fixed rate from the other other-party communication apparatus at the regular time interval, determine the cycle time according to the regular time interval by using the regular time interval as a reference.

13. The communication apparatus according to Claim 10,
wherein said switching control unit is configured to:
cause said power switching unit to switch the state of power from the supply state to the non-supply state, after the data of the cycle data size is transmitted from the other-party communication apparatus and received by said communication unit; and
cause said power switching unit to switch the state of power from the non-supply state to the supply state, by the cycle end point.

14. The communication apparatus according to Claim 13,
wherein the other-party communication apparatus, when detecting that the data transmitted from the other-party communication apparatus is lost and is not received by said communication unit, decreases a transmit window that represents a size of data transmissible in response to the transmission request data, and
said suppression unit is configured to:
judge whether or not a size of data transmitted from the other-party communication apparatus and received by said communication unit in response to the transmission request data transmitted from said communication unit is smaller than the cycle data size indicated by the transmission request data; and
perform window control of making the receive window equal to or smaller than the transmit window, when judging that the size of data received by said communication unit is smaller than the cycle data size.

15. The communication apparatus according to Claim 14,
wherein said suppression unit is configured to, when judging that the size of data received by said communication unit is smaller than the cycle data size, perform the window control of making the receive window indicated by the transmission request data subsequently transmitted from said communication unit, smaller than the cycle data size.

16. The communication apparatus according to Claim 14,
wherein the other-party communication apparatus increases the decreased transmit window, by repeatedly receiving the transmission request data from said communication unit and transmitting data to said communication unit in response to the transmission request data, and
said suppression unit is configured to perform the window control of removing the stopping of the transmission of the normal transmission request data, during a window recovery period from when the transmit window becomes smaller than the cycle data size to when the transmit window becomes equal to or larger than the cycle data size.

17. The communication apparatus according to Claim 13,
wherein said suppression unit is configured to:
calculate an expected size of data transmitted from the other-party communication apparatus and received by said communication unit in response to the transmission request data transmitted from said communication unit;
judge whether or not a size of data transmitted from the other-party communication apparatus and received by said communication unit in response to the transmission request data transmitted from said communication unit is smaller than the expected size; and
change, when judging that the size of data received by said communication unit is smaller than the expected size, a transmission form of the transmission request data subsequently transmitted from said communication unit so that the size of data received by said communication unit approaches the expected size.

18. The communication apparatus according to Claim 13,
wherein said switching control unit is configured to:
cause said power switching unit to switch the state of power from the supply state to the non-supply state, after the transmission request data is transmitted from said communication unit; and
cause said power switching unit to switch the state of power from the non-supply state to the supply state, before the data is received by said communication unit in response to the transmission request data.

19. The communication apparatus according to Claim 10,
wherein said determination unit is configured to determine the cycle time and the cycle data size, according to required performance of communication between said communication apparatus and the other-party communication apparatus.

20. The communication apparatus according to Claim 6,
wherein said communication unit is configured to perform transmission/reception of data with each of the other-party communication apparatus and an other other-party communication apparatus in parallel, and
said suppression unit is configured to, when said communication unit repeatedly receives data at a fixed rate from the other other-party communication apparatus at a regular time interval, stop and remove the stopping of the transmission of the normal transmission request data from said communication unit so that a timing at which the data from the other-party communication apparatus is received by said communication unit matches a timing at which the data from the other other-party communication apparatus is received by said communication unit.

21. The communication apparatus according to Claim 1,
wherein said communication unit is configured to relay communication between the other-party communication apparatus and a communication terminal.

22. A communication system comprising an other-party communication apparatus and a communication apparatus that communicates with said other-party communication apparatus, said communication apparatus including:
a communication unit configured to perform transmission/reception of data with said other-party communication apparatus;
a power switching unit configured to switch a state of power supplied to said communication unit, between a supply state where power necessary for the transmission/reception is supplied and a non-supply state where power necessary for the transmission/reception is not supplied;
a suppression unit configured to suppress data transmission from said other-party communication apparatus; and
a switching control unit configured to cause said power switching unit to switch the state of power to the supply state when the data transmission is not suppressed by said suppression unit, and cause said power switching unit to switch the state of power to the non-supply state when the data transmission is suppressed by said suppression unit.

23. A communication method using a communication unit that communicates with an other-party communication apparatus, said communication method comprising:
performing transmission/reception of data with the other-party communication apparatus, by the communication unit;
suppressing data transmission from the other-party communication apparatus;
switching a state of power supplied to the communication unit to a supply state where power necessary for the transmission/reception is supplied, when the data transmission is not suppressed in said suppressing; and
switching the state of power supplied to the communication unit to a non-supply state where power necessary for the transmission/reception is not supplied, when the data transmission is suppressed in said suppressing.

24. A program for communicating with an other-party communication apparatus using a communication unit, said communication method causing a computer to execute:
performing transmission/reception of data with the other-party communication apparatus, by the communication unit;
suppressing data transmission from the other-party communication apparatus;
switching a state of power supplied to the communication unit to a supply state where power necessary for the transmission/reception is supplied, when the data transmission is not suppressed in said suppressing; and
switching the state of power supplied to the communication unit to a non-supply state where power necessary for the transmission/reception is not supplied, when the data transmission is suppressed in said suppressing.

25. An integrated circuit that communicates with an other-party communication apparatus, said integrated circuit comprising:
a communication unit configured to perform transmission/reception of data with the other-party communication apparatus;
a power switching unit configured to switch a state of power supplied to said communication unit, between a supply state where power necessary for the transmission/reception is supplied and a non-supply state where power necessary for the transmission/reception is not supplied;
a suppression unit configured to suppress data transmission from the other-party communication apparatus; and
a switching control unit configured to cause said power switching unit to switch the state of power to the supply state when the data transmission is not suppressed by said suppression unit, and cause said power switching unit to switch the state of power to the non-supply state when the data transmission is suppressed by said suppression unit.
